(19) Europäisches Patentamt
European Patent Office
Office européen des brevets

(11) **EP 4 130 590 A1**

(12) **EUROPEAN PATENT APPLICATION**
published in accordance with Art. 153(4) EPC

(43) Date of publication:
**08.02.2023 Bulletin 2023/06**

(21) Application number: **20926696.4**

(22) Date of filing: **27.03.2020**

(51) International Patent Classification (IPC):
**F24F 7/007** (1980.01)    **F24F 7/08** (1980.01)
**F24F 11/70** (2018.01)    **F24F 11/79** (2018.01)

(52) Cooperative Patent Classification (CPC):
**F24F 7/007; F24F 7/08; F24F 11/70; F24F 11/79;**
Y02B 30/56

(86) International application number:
**PCT/JP2020/014201**

(87) International publication number:
**WO 2021/192262 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **SAITO, Fumio**
  **Tokyo 100-8310 (JP)**
• **SHIMOJO, Satoru**
  **Tokyo 100-8310 (JP)**
• **TAKATSU, Ryo**
  **Tokyo 100-8310 (JP)**

(74) Representative: **Mewburn Ellis LLP**
**Aurora Building**
**Counterslip**
**Bristol BS1 6BX (GB)**

(54) **VENTILATION/AIR CONDITIONING SYSTEM**

(57) A ventilation and air-conditioning system (1000) includes a heat-exchange ventilation apparatus (100) that includes a first inlet and a first outlet installed in a space to be ventilated (50), and discharges air in the space to be ventilated drawn in from the first inlet to the outdoors via a heat-exchange element, and blows air in the outdoors from the first outlet into the space to be ventilated (50) via the heat-exchange element, and an air-conditioning apparatus (200) that includes an indoor unit (202) including a second inlet and a second outlet installed in the space to be ventilated (50), and draws in air in the space to be ventilated (50) from the second inlet and blows the air from the second outlet into the space to be ventilated (50). The air-conditioning apparatus (200) performs a blowing temperature assist operation to blow air from the second outlet toward the first inlet, based on a blowing temperature assist request level indicating a level of necessity to raise the temperature of air blown into the space to be ventilated (50) by the heat-exchange ventilation apparatus (100).

FIG.1

**Description**

Field

The present invention relates to a ventilation and air-conditioning system that includes a heat-exchange ventilation apparatus and an air-conditioning apparatus.

Background

A heat-exchange ventilation apparatus that exchanges heat between outdoor air and indoor air and then blows the outdoor air into a space to be ventilated has been used, as described in Patent Literature 1. Even when outdoor air is 0°C or less in winter, such a heat-exchange ventilation apparatus can warm air to be blown into the space to be ventilated through heat exchange with warm air in the room. For example, when outdoor air is 0°C, indoor air is 22°C, and the temperature exchange efficiency of a heat-exchange element is 700, the temperature of air blown into the space to be ventilated is about 15°C.

Citation List

Patent Literature

Patent Literature 1: Japanese Patent No. 6322814

Summary

Technical Problem

The heat-exchange ventilation apparatus in Patent Literature 1 can supply relatively warm air to the space to be ventilated, as compared with the case where outdoor air is directly taken in. However, in the above example, air at about 15°C is blown to a user immediately below an indoor outlet of the heat-exchange ventilation apparatus, giving a sense of cold air and giving a sense of discomfort.

The Act on Maintenance of Sanitation in Buildings stipulates that indoor temperature should be in the range of 17°C or more and 28°C or less, and indoor temperature rarely exceeds 28°C in winter. That is, the temperature of air blown by the heat-exchange ventilation apparatus is restricted by the indoor temperature upper limit of 28°C. For example, when the temperature exchange efficiency of the heat-exchange element is 700, and outdoor air is -10°C, even if indoor air is at 28°C, the upper limit stipulated by the Act on Maintenance of Sanitation in Building, the temperature of air blown into the space to be ventilated is about 16°C, giving a sense of cold air to a user immediately below the indoor outlet of the heat-exchange ventilation apparatus.

The present invention has been made in view of the above, and an object thereof is to provide a ventilation and air-conditioning system capable of improving the comfort of air blown from a heat-exchange ventilation apparatus into a space to be ventilated.

Solution to Problem

In order to solve the above-described problems and achieve the object, a ventilation and air-conditioning system according to the present invention includes a heat-exchange ventilation apparatus that includes a first inlet and a first outlet each installed in a space to be ventilated, and a heat-exchange element exchanging heat between air in the outdoors and air drawn in from the space to be ventilated, and discharges air in the space to be ventilated drawn in from the first inlet to the outdoors via the heat-exchange element, and blows air in the outdoors from the first outlet into the space to be ventilated via the heat-exchange element. The ventilation and air-conditioning system includes an air-conditioning apparatus that includes an indoor unit including a second inlet and a second outlet each installed in the space to be ventilated, and an outdoor unit installed outside the space to be ventilated, and adjusts the temperature of the space to be ventilated by drawing in air in the space to be ventilated from the second inlet and blowing the air from the second outlet into the space to be ventilated. The air-conditioning apparatus performs a blowing temperature assist operation to blow air from the second outlet toward the first inlet, based on a blowing temperature assist request level indicating a level of necessity to raise the temperature of air blown into the space to be ventilated by the heat-exchange ventilation apparatus.

Advantageous Effects of Invention

The ventilation and air-conditioning system according to the present invention has the effect of being able to improve the comfort of air blown from the heat-exchange ventilation apparatus into the space to be ventilated.

Brief Description of Drawings

FIG. 1 is a plan view of a space to be ventilated in which a ventilation and air-conditioning system according to a first embodiment of the present invention is installed.
FIG. 2 is a functional block diagram of a heat-exchange ventilation unit of the ventilation and air-conditioning system according to the first embodiment.
FIG. 3 is a diagram illustrating an example of determination of air exhaust fan output, air supply fan output, and blowing temperature assist request level by a ventilation apparatus control unit of a heat-exchange ventilation apparatus in the ventilation and air-conditioning system according to the first embodiment.
FIG. 4 is a functional block diagram of an air-conditioning apparatus of the ventilation and air-conditioning system according to the first embodiment.
FIG. 5 is a diagram illustrating an example of determination of blowing fan output, deflector unit output, and temperature adjustment capability by an indoor unit control unit of the air-conditioning apparatus of the ventilation and air-conditioning system according to the first embodiment.
FIG. 6 is a diagram illustrating an example of a state in which the ventilation and air-conditioning system according to the first embodiment performs a blowing temperature assist operation with temperature adjustment set to "off".
FIG. 7 is a diagram illustrating an example of a state in which the ventilation and air-conditioning system according to the first embodiment is not performing the blowing temperature assist operation.
FIG. 8 is a diagram illustrating an example of a state in which the ventilation and air-conditioning system according to the first embodiment performs the blowing temperature assist operation with the temperature adjustment set to "on".
FIG. 9 is a diagram illustrating an example of determination of air exhaust fan output, air supply fan output, and blowing temperature assist request level by a ventilation apparatus control unit of a heat-exchange ventilation apparatus in a ventilation and air-conditioning system according to a second embodiment of the present invention.
FIG. 10 is a diagram illustrating an example of determination of air exhaust fan output, air supply fan output, and blowing temperature assist request level by a ventilation apparatus control unit of a heat-exchange ventilation apparatus in a ventilation and air-conditioning system according to a third embodiment of the present invention.
FIG. 11 is a diagram illustrating an example of determination of blowing fan output, deflector unit output, and temperature adjustment capability by an indoor unit control unit of an air-conditioning apparatus in a ventilation and air-conditioning system according to a fourth embodiment of the present invention.
FIG. 12 is a diagram illustrating an example of determination of blowing fan output, deflector unit output, and temperature adjustment capability by an indoor unit control unit of an air-conditioning apparatus in a ventilation and air-conditioning system according to a fifth embodiment of the present invention.
FIG. 13 is a diagram illustrating an example of determination of blowing fan output, deflector unit output, and temperature adjustment capability by an indoor unit control unit of an air-conditioning apparatus in a ventilation and air-conditioning system according to a sixth embodiment of the present invention.
FIG. 14 is a diagram illustrating a configuration in which controller functions are implemented by hardware.
FIG. 15 is a diagram illustrating a configuration in which controller functions are implemented by software.

Description of Embodiments

Hereinafter, a ventilation and air-conditioning system according to embodiments of the present invention will be described in detail with reference to the drawings. Note that the embodiments are not intended to limit the invention.

First Embodiment.

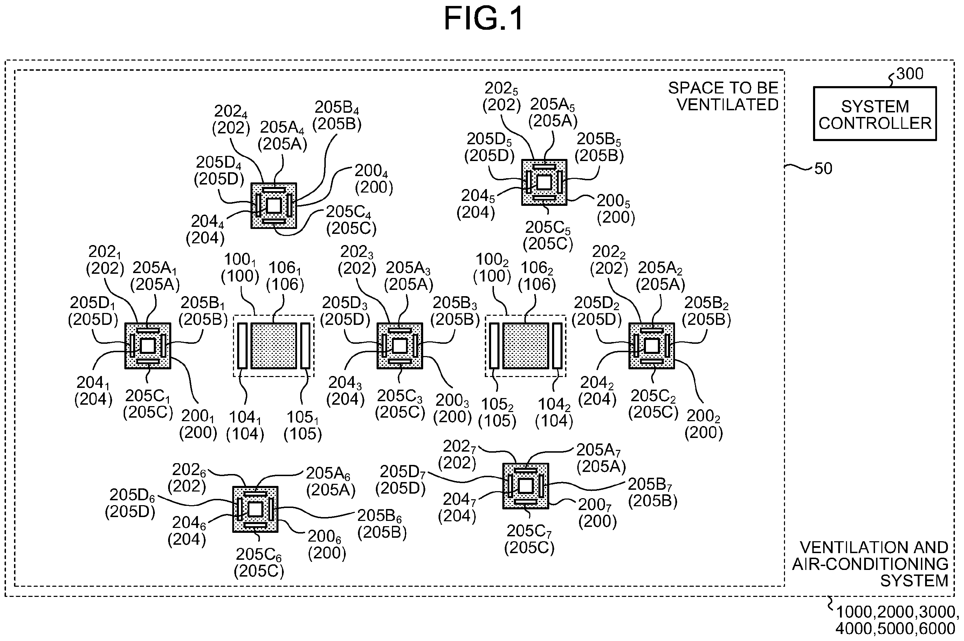

FIG. 1 is a plan view of a space to be ventilated in which a ventilation and air-conditioning system according to a first embodiment of the present invention is installed.

(Ventilation and air-conditioning system 1000)

A ventilation and air-conditioning system 1000 includes heat-exchange ventilation apparatuses $100_1$ and $100_2$,

air-conditioning apparatuses $200_1$, $200_2$, $200_3$, $200_4$, $200_5$, $200_6$, and $200_7$, and a system controller 300. Hereinafter, the heat-exchange ventilation apparatuses $100_1$ and $100_2$, when not distinguished from each other, are referred to as the heat-exchange ventilation apparatus 100. The air-conditioning apparatuses $200_1$, $200_2$, 200s, $200_4$, $200_5$, $200_6$, and $200_7$, when not distinguished from one another, are referred to as the air-conditioning apparatus 200. The same applies to components of the heat-exchange ventilation apparatus 100 and components of the air-conditioning apparatus 200 to be described later. When the components are distinguished from each other, a subscript is added to their reference numerals. When the components are not distinguished from each other, no subscript is added.

(Heat-exchange ventilation apparatus 100)

The heat-exchange ventilation apparatus 100 includes an indoor inlet 104 that is a first inlet disposed in a space to be ventilated 50, an indoor outlet 105 that is a first outlet disposed in the space to be ventilated 50, and a main body 106. The space to be ventilated 50 can be exemplified by, but not limited to, a room of a house, a warehouse, and a room of a building.

For the heat-exchange ventilation apparatus $100_1$, an indoor inlet $104_1$ is disposed on one end side of the outer surface facing the space to be ventilated 50, and an indoor outlet $105_1$ is disposed on the other end side of the outer surface. As illustrated in FIG. 1, the indoor inlet $104_1$ and the indoor outlet $105_1$ are spaced apart to prevent the occurrence of so-called short circuits.

For the heat-exchange ventilation apparatus $100_2$, an indoor inlet $104_2$ is disposed on one end side of the outer surface facing the space to be ventilated 50, and an indoor outlet $105_2$ is disposed on the other end side of the outer surface. As illustrated in FIG. 1, the indoor inlet $104_2$ and the indoor outlet $105_2$ are spaced apart to prevent the occurrence of so-called short circuits.

The main body 106 draws in air in the space to be ventilated 50 from the indoor inlet 104 and discharges the air to the outdoors from an outdoor outlet (not illustrated) via a heat-exchange element 140 (not illustrated in FIG. 1). The main body 106 draws in outdoor air from an outdoor inlet (not illustrated) and blows the air from the indoor outlet 105 into the space to be ventilated 50 via the heat-exchange element 140. A main body $106_1$ is connected to the indoor inlet $104_1$ and the indoor outlet $105_1$, and to the outdoor inlet and the outdoor outlet (not illustrated) via ducts (not illustrated). A main body $106_2$ is connected to the indoor inlet $104_2$ and the indoor outlet $105_2$, and to the outdoor inlet and the outdoor outlet (not illustrated) via ducts (not illustrated).

(Air-conditioning apparatus 200)

The air-conditioning apparatus 200 includes an indoor unit 202 and an outdoor unit 203 (not illustrated in FIG. 1).

(Indoor unit 202)

The indoor unit 202 includes an indoor inlet 204 that is a second inlet and indoor outlets 205A, 205B, 205C, and 205D that are second outlets, each installed in the space to be ventilated 50. The outdoor unit 203 is installed outside the space to be ventilated 50.

The air-conditioning apparatus 200 has a plurality of operation modes including heating. The air-conditioning apparatus 200 draws in air from the indoor inlet 204 of the indoor unit 202 and blows air from the indoor outlets 205A, 205B, 205C, and 205D of the indoor unit 202 to adjust the temperature of the space to be ventilated 50.

For an indoor unit $202_1$, an indoor inlet $204_1$ is disposed at a central portion of the outer surface facing the space to be ventilated 50, and indoor outlets $205A_1$, $205B_1$, $205C_1$, and $205D_1$ are disposed in a quadrilateral shape surrounding the indoor inlet $204_1$ at the outer surface.

For an indoor unit $202_2$, an indoor inlet $204_2$ is disposed at a central portion of the outer surface facing the space to be ventilated 50, and indoor outlets $205A_2$, $205B_2$, $205C_2$, and $205D_2$ are disposed in a quadrilateral shape surrounding the indoor inlet $204_2$ at the outer surface.

For an indoor unit $202_3$, an indoor inlet $204_3$ is disposed at a central portion of the outer surface facing the space to be ventilated 50, and indoor outlets $205A_3$, $205B_3$, $205C_3$, and $205D_3$ are disposed in a quadrilateral shape surrounding the indoor inlet 204s at the outer surface.

For an indoor unit $202_4$, an indoor inlet $204_4$ is disposed at a central portion of the outer surface facing the space to be ventilated 50, and indoor outlets $205A_4$, $205B_4$, $205C_4$, and $205D_4$ are disposed in a quadrilateral shape surrounding the indoor inlet $204_4$ at the outer surface.

For an indoor unit $202_5$, an indoor inlet $204_5$ is disposed at a central portion of the outer surface facing the space to be ventilated 50, and indoor outlets $205A_5$, $205B_5$, $205C_5$, and $205D_5$ are disposed in a quadrilateral shape surrounding the indoor inlet $204_5$ at the outer surface.

For an indoor unit $202_6$, an indoor inlet $204_6$ is disposed at a central portion of the outer surface facing the space to be ventilated 50, and indoor outlets $205A_6$, $205B_6$, $205C_6$, and $205D_6$ are disposed in a quadrilateral shape surrounding the indoor inlet $204_6$ at the outer surface.

For an indoor unit $202_7$, an indoor inlet $204_7$ is disposed at a central portion of the outer surface facing the space to be ventilated 50, and indoor outlets $205A_7$, $205B_7$, $205C_7$, and $205D_7$ are disposed in a quadrilateral shape surrounding the indoor inlet $204_7$ at the outer surface.

(System controller 300)

The system controller 300 performs centralized control of the heat-exchange ventilation apparatus 100 and the air-conditioning apparatus 200. The system controller 300 transmits operation information to the heat-exchange ventilation apparatus 100 and the air-conditioning apparatus 200. The system controller 300 can receive information such as operating conditions output from the heat-exchange ventilation apparatus 100 or the air-conditioning apparatus 200 to reflect the information on a display such as a control screen. The system controller 300 is installed outside the space to be ventilated 50 in FIG. 1, but may be installed in the space to be ventilated 50.

The ventilation and air-conditioning system 1000 according to the first embodiment controls the directions of currents of air blown by the air-conditioning apparatus 200. The air-conditioning apparatus 200 performs a blowing temperature assist operation to blow air from the indoor outlet 205A, 205B, 205C, or 205D toward the indoor inlet 104 of the heat-exchange ventilation apparatus 100. By performing the blowing temperature assist operation, warm air present in the vicinity of the ceiling or air warmed by heating can be drawn into the heat-exchange ventilation apparatus 100 to increase the temperature of air blown into the space to be ventilated 50 by the heat-exchange ventilation apparatus 100.

(Functional configuration of heat-exchange ventilation apparatus 100)

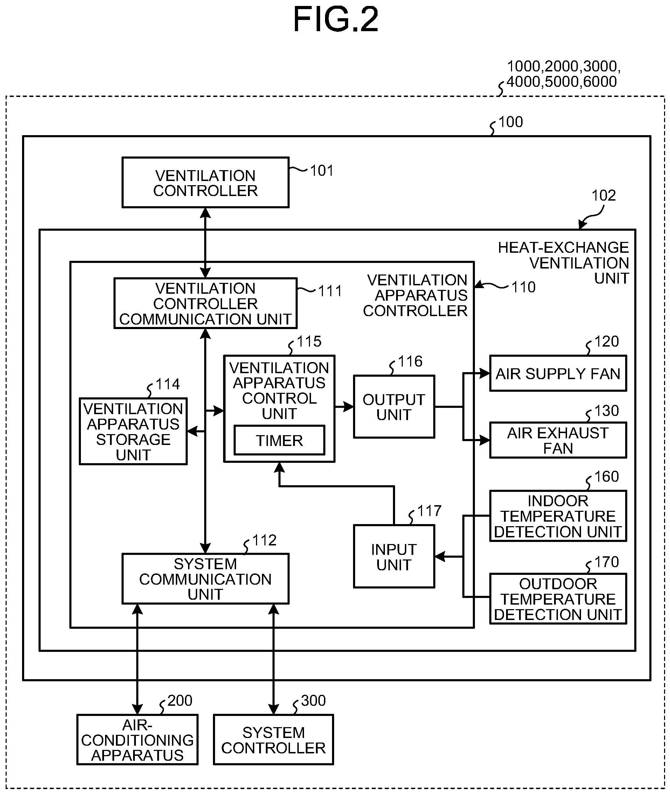

FIG. 2 is a functional block diagram of a heat-exchange ventilation unit of the ventilation and air-conditioning system according to the first embodiment. The heat-exchange ventilation apparatus 100 includes a ventilation controller 101 and a heat-exchange ventilation unit 102.

The heat-exchange ventilation unit 102 draws in air in the space to be ventilated 50 from the indoor inlet 104, and discharges the drawn-in air to the outdoors from the outdoor outlet (not illustrated) via the heat-exchange element 140. The heat-exchange ventilation unit 102 draws in outdoor air from the outdoor inlet (not illustrated) and blows the drawn-in outdoor air from the indoor outlet 105 into the space to be ventilated 50 via the heat-exchange element 140.

The heat-exchange ventilation unit 102 includes an air supply fan 120, an air exhaust fan 130, an indoor temperature detection unit 160, an outdoor temperature detection unit 170, and a ventilation apparatus controller 110.

The air supply fan 120 forms a supply air current to be supplied from the outdoors into the space to be ventilated 50. That is, the air supply fan 120 draws in outdoor air from the outdoor inlet (not illustrated), forming a current of the air to be blown from the indoor outlet 105 into the space to be ventilated 50 via the heat-exchange element 140.

The air exhaust fan 130 forms an exhaust air current to be discharged from the space to be ventilated 50 to the outdoors. That is, the air exhaust fan 130 draws in air in the space to be ventilated 50 from the indoor inlet 104, forming a current of the drawn-in air to be discharged from the outdoor outlet (not illustrated) to the outdoors via the heat-exchange element 140.

The indoor temperature detection unit 160 is a first temperature detection unit that detects the temperature of the indoor air drawn from the space to be ventilated 50 via the indoor inlet 104 into the heat-exchange ventilation apparatus 100.

The outdoor temperature detection unit 170 is an outdoor temperature detection unit that detects the temperature of the outdoor air drawn from the outdoors via the outdoor inlet into the heat-exchange ventilation apparatus 100. The heat-exchange ventilation unit 102 is installed in a ceiling space of the space to be ventilated 50 in an embedded state or a hung state. The operation of the ventilation apparatus controller 110 will be described later.

The air supply fan 120 and the air exhaust fan 130 of the heat-exchange ventilation unit 102 are drive units of the heat-exchange ventilation apparatus 100. The heat-exchange ventilation unit 102 may include an air passage switching damper for switching between heat-exchange ventilation and non-heat-exchange ventilation. When the heat-exchange ventilation unit 102 includes the air passage switching damper, the air passage switching damper also corresponds to a drive unit.

The ventilation controller 101 includes an application including a remote control program used to operate the heat-exchange ventilation apparatus 100 by remote control. The application controls the ventilation air volume etc. For example, when a user performs an operation to perform ventilation air volume change or the like from the ventilation controller 101, information input by the operation is output to a ventilation controller communication unit 111 of the ventilation apparatus controller 110. When the output of the ventilation air volume change is received, for example, the ventilation apparatus controller 110 increases or decreases the rotational speed of the air supply fan 120 and the air exhaust fan 130.

Although the ventilation controller 101 is described as being wire-connected to the heat-exchange ventilation unit 102, the ventilation controller 101 may be a remote controller that is wirelessly connected to the heat-exchange ventilation unit 102 and can remotely control the heat-exchange ventilation apparatus 100. It is also possible to adopt a system configuration in which the heat-exchange ventilation apparatus 100 is controlled only by the system controller 300. In this case, the ventilation controller 101 is unnecessary.

The ventilation air volume of the heat-exchange ventilation apparatus 100 may be switched, based on a signal input to the system controller 300 or a signal input to the heat-exchange ventilation unit 102.

The ventilation apparatus controller 110 includes the ventilation controller communication unit 111, a system communication unit 112, a ventilation apparatus storage unit 114, a ventilation apparatus control unit 115, an output unit 116, and an input unit 117. The internal components of the ventilation apparatus controller 110 can give and receive information to and from each other.

The ventilation controller communication unit 111 receives and processes operation information output from the ventilation controller 101, and transmits the processed operation information to the internal components of the ventilation apparatus controller 110. The ventilation controller communication unit 111 processes information on the heat-exchange ventilation unit 102 and transmits the processed information to the ventilation controller 101.

The system communication unit 112 receives and processes information such as operation information output from the system controller 300 and the air-conditioning apparatus 200. The system communication unit 112 processes information on the heat-exchange ventilation unit 102 and transmits the processed information to the system controller 300 or the air-conditioning apparatus 200.

Here, the information transmitted from the heat-exchange ventilation unit 102 to the system controller 300 or the air-conditioning apparatus 200 is, for example, information indicating various operating conditions of the heat-exchange ventilation unit 102. The operating conditions of the heat-exchange ventilation unit 102 are exemplified by start/stop, air volume, detected temperature, and "blowing temperature assist request level" to be described later.

The ventilation apparatus storage unit 114 is a storage unit that stores information such as various control setting values and programs for controlling the operation of the heat-exchange ventilation apparatus 100. The ventilation apparatus storage unit 114 is a non-volatile storage unit and is constituted by a semiconductor storage medium such as flash memory.

At a given timing such as when operation information is received via the ventilation controller communication unit 111 or the system communication unit 112, the ventilation apparatus control unit 115 reads control setting values or a program based on the operation information from the ventilation apparatus storage unit 114. Then, the ventilation apparatus control unit 115 performs various calculations based on the control setting values and the programs based on the operation information stored in the ventilation apparatus storage unit 114, and information such as the operation information transmitted from the ventilation controller 101, and transmits calculation result information to at least one of the ventilation controller 101, the output unit 116, the ventilation apparatus storage unit 114, the system controller 300, and the air-conditioning apparatus 200. The ventilation apparatus control unit 115 transmits the calculation result information to the ventilation controller 101 via the ventilation controller communication unit 111. The ventilation apparatus control unit 115 transmits the calculation result information to at least one of the system controller 300 and the air-conditioning apparatus 200 via the system communication unit 112.

The given timing is exemplified by the timing at which the ventilation apparatus control unit 115 receives the operation information, such as when the ventilation apparatus control unit 115 receives the operation information transmitted from the ventilation controller 101 via the ventilation controller communication unit 111 or when the ventilation apparatus control unit 115 receives the operation information transmitted from the system controller 300 via the system communication unit 112. The ventilation apparatus control unit 115 includes a timer to count the time required in the control etc. of the heat-exchange ventilation apparatus 100.

The output unit 116 receives the calculation results from the ventilation apparatus control unit 115 and outputs operation instructions to the air supply fan 120 and the air exhaust fan 130.

The input unit 117 processes an input signal from the indoor temperature detection unit 160 that detects the temperature of drawn-in air drawn in from the space to be ventilated 50, and an input signal from the outdoor temperature detection unit 170 that detects the temperature of drawn-in air drawn in from the outdoors, to calculate the indoor temperature and the outdoor temperature. The input unit 117 calculates blowing temperature that is the temperature of air blown from the indoor outlet 105 into the space to be ventilated 50 from the indoor temperature, the outdoor temperature, and the temperature exchange efficiency of the heat-exchange element 140, according to the following formula, and inputs the calculated blowing temperature to the ventilation apparatus control unit 115. That is, the input unit 117 has a function as a blowing temperature detection unit that calculates blowing temperature that is the temperature of air blown from the indoor outlet 105 into the space to be ventilated 50.

<Formula>

Blowing temperature = outdoor temperature - (indoor temperature - outdoor temperature) × temperature exchange efficiency of heat-exchange element

The indoor temperature detection unit 160 may be provided outside the heat-exchange ventilation unit 102, such as in the duct connecting the indoor inlet 104 and the main body 106. An external device other than the heat-exchange ventilation unit 102 that can detect the temperature of air drawn in from the space to be ventilated 50 may serve as the indoor temperature detection unit 160. For example, the heat-exchange ventilation unit 102 may acquire information from a temperature detection unit included in the ventilation controller 101 via the ventilation controller communication unit 111.

The heat-exchange ventilation unit 102 may acquire temperature information acquired from a temperature detection unit (not illustrated) installed separately in the heat-exchange ventilation apparatus 100, the air-conditioning apparatus 200, or the space to be ventilated 50 managed by the system controller 300 via the system communication unit 112. If information from the temperature detection unit included in the ventilation controller 101 is acquired, temperature correction may be performed with the difference between the installation height of the ventilation controller 101 and the height of the indoor inlet 104 of the heat-exchange ventilation apparatus 100 installed at the ceiling surface taken into consideration.

The outdoor temperature detection unit 170 may be provided outside the heat-exchange ventilation unit 102, such as in the duct connecting the outdoor inlet (not illustrated) and the main body 106. An external device other than the heat-exchange ventilation unit 102 that can detect the temperature of air drawn in from the outdoors may serve as the outdoor temperature detection unit 170. For example, the heat-exchange ventilation unit 102 may acquire information on the outdoor temperature detected by the outdoor unit 203 included in the air-conditioning apparatus 200 via the system communication unit 112. The heat-exchange ventilation unit 102 may acquire outdoor temperature information acquired by the system controller 300 through an external network such as the Internet via the system communication unit 112.

The blowing temperature is calculated from the indoor temperature detected by the indoor temperature detection unit 160, the outdoor temperature detected by the outdoor temperature detection unit 170, and the temperature exchange efficiency of the heat-exchange element 140, but a blowing temperature detection unit for directly detecting or calculating the blowing temperature may be provided in the heat-exchange ventilation apparatus 100.

(Example of output determination by heat-exchange ventilation apparatus 100)

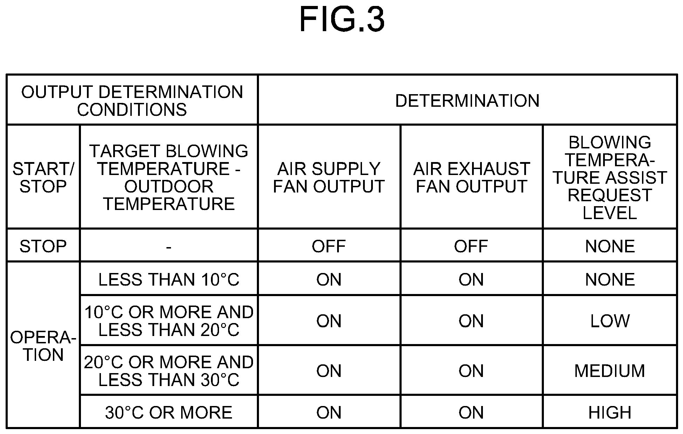

FIG. 3 is a diagram illustrating an example of determination of air exhaust fan output, air supply fan output, and blowing temperature assist request level by the control unit of the heat-exchange ventilation apparatus in the ventilation and air-conditioning system according to the first embodiment. Here, the "air exhaust fan output" is the output of the air exhaust fan 130. The "air supply fan output" is the output of the air supply fan 120. The "blowing temperature assist request level" is information transmitted to the air-conditioning apparatus 200 by the heat-exchange ventilation apparatus 100, and indicates the level of discomfort of air blown into the space to be ventilated 50 by the heat-exchange ventilation apparatus 100. That is, the "blowing temperature assist request level" indicates at what intensity level the blowing temperature assist operation is requested to be performed, and indicates the level of necessity to raise the temperature of blown air, including whether or not there is a need to raise the temperature of blown air blown from the heat-exchange ventilation apparatus 100 into the space to be ventilated 50.

In the air-conditioning apparatus 200, an indoor unit control unit 215 determines and decides, based on the "blowing temperature assist request level", whether to prioritize temperature adjustment control of a target area to be air-conditioned that is an area where the air-conditioning apparatus 200 is responsible for air conditioning in the space to be ventilated 50, or perform the above-described "blowing temperature assist operation" by horizontally orienting a deflector unit 230 to be described later nearest to the indoor inlet 104 of the heat-exchange ventilation apparatus 100.

(Pairing heat-exchange ventilation apparatus 100 with air-conditioning apparatus 200)

For a combination of the heat-exchange ventilation apparatus 100 and the air-conditioning apparatus 200 that performs the blowing temperature assist operation for the heat-exchange ventilation apparatus 100, a one-to-one combination is set in the first embodiment. Thus, it is assumed that the heat-exchange ventilation apparatus 100 and the air-conditioning apparatus 200 are subjected to connection setting to be paired in advance from one of the ventilation controller 101, an air-conditioning controller 201 to be described later, and the system controller 300. In the following description, when information is exchanged between the heat-exchange ventilation apparatus 100 and the air-conditioning apparatus 200, communication is performed with a partner paired by the connection setting in advance.

In the ventilation and air-conditioning system 1000 according to the first embodiment, the blowing temperature assist operation for the heat-exchange ventilation apparatus $100_1$ is performed by the air-conditioning apparatus $200_1$, and the blowing temperature assist operation for the heat-exchange ventilation apparatus $100_2$ is performed by the air-conditioning apparatus $200_2$. For the air-conditioning apparatus 200 to perform the blowing temperature assist operation for the heat-exchange ventilation apparatus 100, it is basically preferable to select the air-conditioning apparatus 200 that can most efficiently supply air blown in a horizontal direction to the indoor inlet 104 of the heat-exchange ventilation apparatus 100. Specifically, the air-conditioning apparatus 200 to perform the blowing temperature assist operation for the heat-exchange ventilation apparatus 100 is determined with the distance between the apparatuses, whether or not the blowing direction of the indoor outlet 205 of the air-conditioning apparatus 200 faces the indoor inlet 104 of the heat-exchange ventilation apparatus 100, the shape of the indoor inlet 104 of the heat-exchange ventilation apparatus 100, whether air blown by the air-conditioning apparatus 200 disturbs a current of air blown by the heat-exchange ventilation apparatus 100, etc. taken into consideration.

In the example of FIG. 1, air blown from the indoor outlet $205A_6$ of the air-conditioning apparatus $200_6$ is also directed to the indoor inlet $104_1$. However, considering that the distance to the indoor inlet $104_1$ is longer than that of the air-conditioning apparatus $200_1$, it is preferable to select the air-conditioning apparatus $200_1$ as the air-conditioning apparatus 200 to perform the blowing temperature assist operation for the heat-exchange ventilation apparatus $100_1$.

Air blown from the indoor outlet $205C_4$ of the air-conditioning apparatus $200_4$ is also directed to the indoor inlet $104_1$. However, considering that its direction is out of alignment with a direction in which the indoor inlet $104_1$ is located, preventing efficient drawing in, it is preferable to select the air-conditioning apparatus $200_1$ as the air-conditioning apparatus 200 to perform the blowing temperature assist operation for the heat-exchange ventilation apparatus $100_1$.

If the air-conditioning apparatus $200_4$ can control the wind direction in the left and right direction, the air-conditioning apparatus $200_4$ can directly blow in the direction of the indoor inlet $104_1$. It is thus preferable to select the air-conditioning apparatus $200_4$, considering the distance to the indoor inlet $104_1$ and the fact that a current of air blown from the heat-exchange ventilation apparatus $100_1$ will not be disturbed.

For the air-conditioning apparatus 200s, air blown from the indoor outlet $205D_3$ is directed to the indoor inlet $104_1$ but passes through the indoor outlet $105_1$ before reaching the indoor inlet $104_1$. Consequently, a blowing temperature assist air current is disturbed by a current of air blown by the heat-exchange ventilation apparatus $100_1$. As a result, it is difficult to make the blowing temperature assist operation air current efficiently drawn into the indoor inlet $104_1$ of the heat-exchange ventilation apparatus $100_1$. Therefore, the air-conditioning apparatus $200_3$ is not suitable to perform the blowing temperature assist operation.

In the first embodiment, a current of air blown from the air-conditioning apparatus 200 to the heat-exchange ventilation apparatus 100 during the blowing temperature assist operation is along the ceiling surface, so that the current of air blown from the air-conditioning apparatus 200 does not directly hit people in the room and cause discomfort. However, if the heat-exchange ventilation apparatus 100 is installed on the floor in the space to be ventilated 50, a current of air blown from the air-conditioning apparatus 200 can directly hit people in the room, causing discomfort. In such a case, the wind direction of the air-conditioning apparatus 200 can be adjusted such that a current of air blown from the air-conditioning apparatus 200 to the heat-exchange ventilation apparatus 100 does not directly hit users.

(Output determination conditions)

The ventilation apparatus control unit 115 uses pieces of information of "start/stop" and a "target blowing temperature - the outdoor temperature" as output determination conditions to determine and decide the "air supply fan output", the "air exhaust fan output", and the "blowing temperature assist request level". The "start/stop" indicates whether a user's instruction is an instruction to operate or an instruction to stop the heat-exchange ventilation apparatus 100. The "target blowing temperature - the outdoor temperature" is the difference between the "target blowing temperature" of the heat-exchange ventilation apparatus 100 set from the ventilation controller 101 or the system controller 300 and the temperature detected by the outdoor temperature detection unit 170.

The "target blowing temperature" is a target temperature of the temperature of blown air blown by the heat-exchange ventilation apparatus 100. The "target blowing temperature" is set, from the ventilation controller 101 or the system controller 300, to a temperature at which air blown from the heat-exchange ventilation apparatus 100 does not give a sense of discomfort to a user immediately below the indoor outlet 105. The ventilation apparatus control unit 115 may acquire a set temperature of the air-conditioning apparatus 200 via the system communication unit 112 and set the acquired set temperature as the target blowing temperature.

The ventilation apparatus control unit 115 may further perform correction from the relationship between the set temperature of the air-conditioning apparatus 200 and the indoor temperature. Specifically, when the indoor temperature is lower than the set temperature of the air-conditioning apparatus 200 by a predetermined fixed value or more, the ventilation apparatus control unit 115 corrects the target blowing temperature to a temperature higher than the set temperature of the air-conditioning apparatus 200. Consequently, air blown from the heat-exchange ventilation apparatus 100 mixes with the low-temperature indoor air, allowing the temperature of air reaching a user immediately below the indoor outlet 105 to be kept comfortable.

When the indoor temperature is higher than the set temperature of the air-conditioning apparatus 200 by a predetermined fixed value or more, the ventilation apparatus control unit 115 corrects the target blowing temperature to a temperature lower than the set temperature of the air-conditioning apparatus 200. Consequently, air blown from the heat-exchange ventilation apparatus 100 mixes with the high-temperature indoor air, allowing the temperature of air reaching a user immediately below the indoor outlet 105 to be kept comfortable.

(When heat-exchange ventilation apparatus 100 is at "stop")

As illustrated in FIG. 3, when the start/stop is "stop", ventilation is not necessary. In this case, regardless of the other factors, the ventilation apparatus control unit 115 sets both the air supply fan output, which is the output of the air supply fan 120, and the air exhaust fan output, which is the output of the air exhaust fan 130, to "off" and sets the blowing temperature assist request level to "none".

(When heat-exchange ventilation apparatus 100 is in "operation")

As illustrated in FIG. 3, when the start/stop is "operation" and the "target blowing temperature - the outdoor temperature", which is a difference obtained by subtracting the outdoor temperature from the target blowing temperature, is "less than 10°C", the outdoors is warm, and there is no need to raise the blowing temperature of air blown from the heat-exchange ventilation apparatus 100. In this case, regardless of other factors, the ventilation apparatus control unit 115 sets both the air supply fan output and the air exhaust fan output to "on", and the blowing temperature assist request level to "none".

As illustrated in FIG. 3, when the start/stop is "operation" and the "target blowing temperature - the outdoor temperature" is "10°C or more", the outdoors is cold, and there is a need to raise the blowing temperature of air blown from the heat-exchange ventilation apparatus 100. In this case, both the air supply fan output and the air exhaust fan output are set to "on", and the blowing temperature assist request level is set such that the larger the value of the "target blowing temperature - the outdoor temperature", the higher the blowing temperature assist request level. This allows the temperature of air reaching a user immediately below the indoor outlet 105 to be kept comfortable.

For example, when the "target blowing temperature - the outdoor temperature" is "10°C or more and less than 20°C", the blowing temperature assist request level is set to "low". When the "target blowing temperature - the outdoor temperature" is "20°C or more and less than 30°C", the blowing temperature assist request level is set to "medium". When the "target blowing temperature - the outdoor temperature" is "30°C or more", the blowing temperature assist request level is set to "high".

(Functional configuration of air-conditioning apparatus 200)

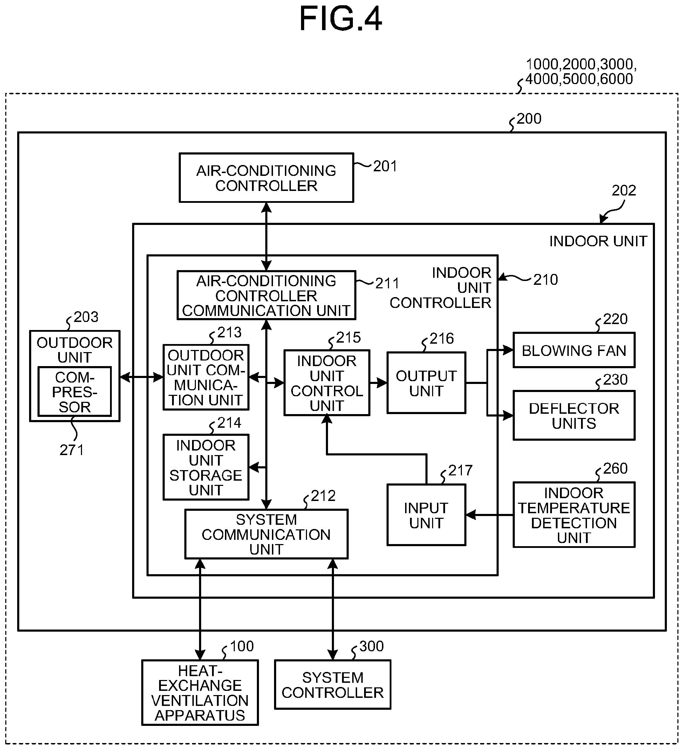

FIG. 4 is a functional block diagram of the air-conditioning apparatus of the ventilation and air-conditioning system according to the first embodiment. The air-conditioning apparatus 200 includes the air-conditioning controller 201, the indoor unit 202, and the outdoor unit 203. The indoor unit 202 and the outdoor unit 203 are connected by refrigerant piping (not illustrated).

The indoor unit 202 supplies conditioned air to the space to be ventilated 50. In the first embodiment, it is assumed that the indoor unit 202 is installed in the ceiling space. The indoor unit 202 includes an indoor unit controller 210, a blowing fan 220, deflector units 230, an indoor heat exchanger (not illustrated) to which a refrigerant is supplied, and an indoor temperature detection unit 260.

The indoor unit controller 210 is an air-conditioning apparatus controller that controls the operation of the air-conditioning apparatus 200. When controller information transmitted from the air-conditioning controller 201 is received, the indoor unit controller 210 controls the operation of the air-conditioning apparatus 200 according to the controller information. When remote control information that is information for remotely controlling the operation of the air-conditioning apparatus 200 is received, the indoor unit controller 210 controls the operation of the air-conditioning apparatus 200 according to the remote control information.

The indoor unit controller 210 includes an air-conditioning controller communication unit 211, a system communication unit 212, an outdoor unit communication unit 213, an indoor unit storage unit 214, an indoor unit control unit 215, an output unit 216, and an input unit 217.

The air-conditioning controller communication unit 211 is an interface between the air-conditioning controller 201 and the indoor unit controller 210, and receives and processes operation information output from the air-conditioning controller 201 and transmits the processed operation information to the indoor unit control unit 215. The air-conditioning controller communication unit 211 processes information on the indoor unit controller 210 and transmits the processed information to the air-conditioning controller 201.

The system communication unit 212 receives and processes information such as operation information transmitted from the system controller 300 and the heat-exchange ventilation apparatus 100. The system communication unit 212 processes information on the indoor unit 202 and transmits the processed information to the system controller 300 or the heat-exchange ventilation apparatus 100.

The outdoor unit communication unit 213 receives and processes operation information etc. output from the outdoor unit 203. The outdoor unit communication unit 213 processes information inside the indoor unit 202 and transmits the processed information to the outdoor unit 203.

Here, the information transmitted from the indoor unit 202 includes information indicating various operating conditions of the indoor unit 202. The operating conditions of the indoor unit 202 can be exemplified by start/stop, air volume, set temperature, wind direction, indoor temperature, an operation mode, the adjustment of the opening of a throttle device, and increase/decrease of the operating power of a compressor.

The indoor unit storage unit 214 is a storage unit that stores information such as various control settings and programs for controlling the operation of the air-conditioning apparatus 200. The indoor unit storage unit 214 is a non-volatile storage unit and is constituted by a semiconductor storage medium such as flash memory.

When, for example, operation information is received via the air-conditioning controller communication unit 211, the system communication unit 212, or the outdoor unit communication unit 213, the indoor unit control unit 215 reads control settings or a program based on the operation information from the indoor unit storage unit 214. The indoor unit control unit 215 performs various calculations based on the control settings and the programs based on operation information stored in the indoor unit storage unit 214, and information such as operation information transmitted from the air-conditioning controller 201, and transmits calculation result information to at least one of the air-conditioning controller 201, the output unit 216, the indoor unit storage unit 214, the outdoor unit 203, the system controller 300, and the heat-exchange ventilation apparatus 100. The indoor unit control unit 215 transmits the calculation result information to the air-conditioning controller 201 via the air-conditioning controller communication unit 211. The indoor unit control unit 215 transmits the calculation result information to at least one of the system controller 300 and the heat-exchange ventilation apparatus 100 via the system communication unit 212. The indoor unit control unit 215 transmits the calculation result information to the outdoor unit 203 via the outdoor unit communication unit 213.

The output unit 216 receives the calculation result information from the indoor unit control unit 215, and outputs operation instructions to the blowing fan 220 and the deflector units 230.

The input unit 217 processes an input signal from the indoor temperature detection unit 260 for detecting the air temperature of an area to be air-conditioned, calculates indoor temperature that is a detected temperature, and inputs the indoor temperature to the indoor unit control unit 215.

The blowing fan 220 forms a supply air current to supply conditioned air from the indoor unit 202 to the space to be ventilated 50.

The indoor temperature detection unit 260 is a second temperature detection unit that detects the temperature of indoor air drawn into the air-conditioning apparatus 200 from the indoor inlet 204. The deflector units 230 that are wind direction control units capable of independently controlling the wind direction in the up-and-down direction are installed at the indoor outlets 205A, 205B, 205C, and 205D. The deflector units 230 include a rotatable deflector, a motor that rotates the deflector, etc., and are set to direct blowing wind in four directions different by 90 degrees in a horizontal plane.

The outdoor unit 203 is installed outdoors such as on the rooftop of a building. The outdoor unit 203 includes a throttle device that decompresses the refrigerant, a compressor 271 that compresses the refrigerant, a four-way valve that switches the flow path of the refrigerant, an outdoor heat exchanger that functions as an evaporator during heating operation and functions as a condenser during refrigerant operation, and an outdoor blowing fan that is attached to the outdoor heat exchanger and supplies air to the outdoor heat exchanger. The outdoor unit 203 also includes an outdoor unit controller (not illustrated) that is electrically connected to the indoor unit controller 210 of the indoor unit 202 and exchanges information with the indoor unit controller 210. The outdoor unit controller is provided, for example, in an electric component box disposed in an upper portion of a compressor chamber in which the compressor 271 and others are installed. The outdoor unit controller controls the operating power of the compressor 271 and the opening of the throttle device, based on information received from the indoor unit controller 210 of the indoor unit 202. The description is given assuming that the throttle device is installed in the outdoor unit 203, which is not limiting. The throttle device may be provided outside the outdoor unit 203.

The blowing fan 220 and the deflector units 230 of the indoor unit 202, and the compressor 271, the throttle device, the four-way valve, and the outdoor blowing fan of the outdoor unit 203 are drive units of the air-conditioning apparatus 200. The indoor unit 202 may include a plasma dust collector attached to a dust collection filter provided in the indoor unit 202, or the like. The plasma dust collector includes a counter electrode and a power supply. When the indoor unit 202 includes the plasma dust collector, the plasma dust collector also corresponds to a drive unit.

The air-conditioning controller 201 includes an application including a remote control program that is used to operate the air-conditioning apparatus 200 by remote control. The application enables input of an air volume adjustment, a set temperature adjustment, an angle adjustment of the deflector units 230, etc. For example, when a user performs an operation to change the air volume, change the set temperature, or change the angles of the deflector units 230 from the air-conditioning controller 201, information input by the operation is output to the air-conditioning controller communication unit 211 of the indoor unit controller 210. When the output of an air volume change is received, for example, the indoor unit controller 210 increases or decreases the rotational speed of the blowing fan 220. When the output of a set temperature change is received, the indoor unit controller 210 performs the adjustment of the opening of the throttle device, the increase or decrease of the operating power of the compressor 271, etc. Further, when the output of an angle change of the deflector units 230 is received, the indoor unit controller 210 operates the motors (not illustrated) that drive the deflector units 230.

The air-conditioning controller 201 is described as being connected to the indoor unit 202 by wire, but is not limited to the wired connection, and may be a remote controller that is wirelessly connected to the indoor unit 202 and can remotely control the air-conditioning apparatus 200. A system configuration in which the air-conditioning apparatus 200 is operated only by the system controller 300 can be adopted. In this case, the air-conditioning controller 201 is unnecessary.

The indoor temperature detection unit 260 may be provided outside the indoor unit 202. Other than the indoor unit 202, any external device that detects the air temperature of the area to be air-conditioned may serve as the indoor temperature detection unit 260. For example, information from a temperature detection unit provided in the air-conditioning controller 201 may be acquired via the air-conditioning controller communication unit 211. Temperature information acquired from a temperature detection unit (not illustrated) separately installed in the heat-exchange ventilation apparatus 100, the air-conditioning apparatus 200, or the area to be air-conditioned managed by the system controller 300 may be acquired via the system communication unit 212. When information from the indoor temperature detection unit 160 included in the heat-exchange ventilation apparatus 100 is acquired, temperature correction may be performed with the difference between the installation height of the indoor temperature detection unit 160 and the height of the area to be air-conditioned taken into consideration.

(Example of output determination by air-conditioning apparatus 200)

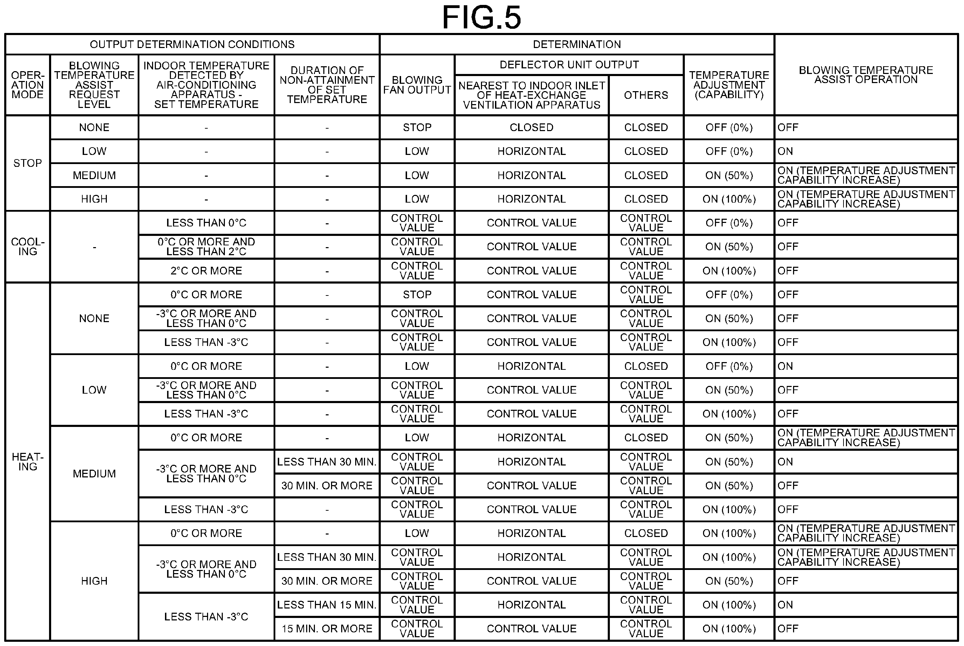

FIG. 5 is a diagram illustrating an example of determination of blowing fan output, deflector unit output, and temperature adjustment capability by the indoor unit control unit of the air-conditioning apparatus in the ventilation and air-conditioning system according to the first embodiment. For the deflector units 230, in order to independently control the wind directions of air blown from the indoor outlets 205A, 205B, 205C, and 205D, the deflector units 230 are classified into the deflector unit 230 "nearest to the indoor inlet of the heat-exchange ventilation apparatus" and the deflector units 230 "not nearest to the indoor inlet of the heat-exchange ventilation apparatus". More specifically, referring to the example in FIG. 1, in the air-conditioning apparatus $200_1$, the deflector unit 230 installed at the indoor outlet $205B_1$ is the deflector unit 230 "nearest to the indoor inlet of the heat-exchange ventilation apparatus". In the air-conditioning apparatus $200_2$, the deflector unit 230 installed at the indoor outlet $205D_2$ is the deflector unit 230 "nearest to the indoor inlet of the heat-exchange ventilation apparatus".

"Temperature adjustment" is the temperature adjustment of air blown from the indoor outlets 205 in the air-conditioning apparatus 200. The "temperature adjustment capability" is the capability to adjust the temperature of air blown from the indoor outlets 205 in the air-conditioning apparatus 200, and is indicated, for example, by 0% representing "off", "on" at 50%, and "on" at 100%. The percentage of the "temperature adjustment capability" is not limited to the above example. "On" at 50% means turning "on" with 50% capability to the maximum temperature adjustment capability in the air-conditioning apparatus 200. "On" at 100% means turning "on" with the maximum temperature adjustment capability in the air-conditioning apparatus 200.

(Output determination conditions)

The indoor unit control unit 215 uses the "operation mode" of the air-conditioning apparatus 200, the "blowing temperature assist request level", the "indoor temperature detected by the air-conditioning apparatus - the set temperature", and the "duration of non-attainment of the set temperature" as output determination conditions, to determine and decide the "blowing fan output", the "deflector unit output", the "temperature adjustment capability", and whether or not to perform the "blowing temperature assist operation".

The "operation mode" is information indicating which of heating, cooling, and stopping is a user's instruction on the operation of the air-conditioning apparatus 200.

The "blowing temperature assist request level" is input from the heat-exchange ventilation apparatus 100 to the indoor unit control unit 215 in the first embodiment.

The "indoor temperature detected by the air-conditioning apparatus - the set temperature" is the difference between the indoor temperature that is the detected temperature in the indoor temperature detection unit 260 and the set temperature of the air-conditioning apparatus 200 that is set in the air-conditioning apparatus 200 from the air-conditioning controller 201 or the system controller 300. The indoor temperature that is the detected temperature in the indoor temperature detection unit 260 is the detected temperature of air in the space to be ventilated 50 in the area to be air-conditioned by the air-conditioning apparatus 200 in the space to be ventilated 50.

The "duration of non-attainment of the set temperature" is the duration of a state in which the indoor temperature detected by the indoor temperature detection unit 260 of the air-conditioning apparatus 200 has not reached the set temperature since the operation mode of the air-conditioning apparatus 200 has been turned to "heating". The "duration of non-attainment of the set temperature" is cleared to zero when the temperature of the area to be air-conditioned reaches the set temperature. The indoor unit control unit 215 acquires the indoor temperature detection unit 260 and the set temperature of the air-conditioning apparatus 200 to calculate the "duration of non-attainment of the set temperature" by a timer function.

The "blowing fan output" is the output of the blowing fan 220.

The "deflector unit output" is the output of the deflector units 230, and includes the output of the "deflector unit 230 nearest to the indoor inlet 104 of the heat-exchange ventilation apparatus 100" and the output of the "deflector units 230 not nearest to the indoor inlet 104 of the heat-exchange ventilation apparatus 100".

(When air-conditioning apparatus 200 is at "stop")

As illustrated in FIG. 5, when the operation mode of the air-conditioning apparatus 200 is "stop", the air-conditioning apparatus 200 does not need to perform the temperature adjustment control on the area to be air-conditioned by the air-conditioning apparatus 200. Thus, when a blowing temperature assist is requested from the heat-exchange ventilation apparatus 100, the air-conditioning apparatus 200 performs the blowing temperature assist operation. That is, when a request for a blowing temperature assist is received from the heat-exchange ventilation apparatus 100, the indoor unit control unit 215 controls the blowing temperature assist operation.

Specifically, when the "blowing temperature assist request level" is "none", the indoor unit control unit 215 sets the blowing temperature assist operation to "off" by setting the blowing fan output to "stop", the deflector unit output nearest to the indoor inlet 104 of the heat-exchange ventilation apparatus 100 to "closed", the deflector unit output not nearest to the indoor inlet 104 of the heat-exchange ventilation apparatus 100 to "closed", and the temperature adjustment to "off".

The "blowing fan output" is the output of the blowing fan 220 of the indoor unit 202. The "deflector unit output" is the output of a control instruction to the deflector units 230.

When the received "blowing temperature assist request level" is "low", the indoor unit control unit 215 sets the blowing temperature assist operation to "on" by setting the blowing fan output to "low", the deflector unit output nearest to the indoor inlet 104 of the heat-exchange ventilation apparatus 100 to "horizontal", the deflector unit output not nearest to the indoor inlet 104 of the heat-exchange ventilation apparatus 100 to "closed", and the temperature adjustment to "off".

When the received "blowing temperature assist request level" is "medium", the indoor unit control unit 215 sets the blowing temperature assist operation to "on" by setting the blowing fan output to "low", the deflector unit output nearest to the indoor inlet 104 of the heat-exchange ventilation apparatus 100 to "horizontal", the deflector unit output not nearest to the indoor inlet 104 of the heat-exchange ventilation apparatus 100 to "closed", and the temperature adjustment to "on at 50%". The blowing temperature assist operation in this case, in which the temperature adjustment is set to "on at 50%", is thus an assist operation in which the temperature comfort of air blown from the heat-exchange ventilation apparatus 100 is further improved by the temperature adjustment than when the "blowing temperature assist request level" is "low".

In FIG. 5, the case where the level of the temperature adjustment capability is increased when the blowing temperature assist operation is performed, compared to the case where the blowing temperature assist operation is not performed, is described as "temperature adjustment capability increase". For example, in FIG. 5, consider the case where the "operation mode" is "heating" and the "indoor temperature detected by the air-conditioning apparatus - the set temperature" is "0°C or more". Under these conditions, when the "blowing temperature assist request level" is "none" or "low", the temperature adjustment capability is "off (0%)". On the other hand, when the "blowing temperature assist request level" is "medium", the temperature adjustment capability is set to "on (50%)", and the level of the temperature adjustment capability is increased as compared with the case where the "blowing temperature assist request level" is "none" and the case where the "blowing temperature assist request level" is "low".

When the received "blowing temperature assist request level" is "high", the indoor unit control unit 215 sets the blowing temperature assist operation to "on" by setting the blowing fan output to "low", the deflector unit output nearest to the indoor inlet 104 of the heat-exchange ventilation apparatus 100 to "horizontal", the deflector unit output not nearest to the indoor inlet 104 of the heat-exchange ventilation apparatus 100 to "closed", and the temperature adjustment to "on at 100%". The blowing temperature assist operation in this case, in which the temperature adjustment is set to "on at 100%", is thus an assist operation in which the temperature comfort of air blown from the heat-exchange ventilation apparatus 100 is further improved by the temperature adjustment than when the "blowing temperature assist request level" is "medium".

As described above, in the ventilation and air-conditioning system 1000, even when the operation mode of the air-conditioning apparatus 200 is "stop", the air-conditioning apparatus 200 performs the blowing temperature assist operation by controlling the blowing fan 220, the deflector units 230, and heating in accordance with the "blowing temperature assist request level" of the heat-exchange ventilation apparatus 100. Consequently, warm air present in the vicinity of the ceiling can be drawn into the heat-exchange ventilation apparatus 100, or warm air present in the vicinity of the ceiling further warmed by the heating of the air-conditioning apparatus 200 can be drawn into the heat-exchange ventilation apparatus 100. This allows the ventilation and air-conditioning system 1000 to bring air blown from the heat-exchange ventilation apparatus 100 into a comfortable state.

In the control of the blowing temperature assist operation, the indoor unit control unit 215 independently controls the deflector unit 230 "nearest to the indoor inlet of the heat-exchange ventilation apparatus" and the deflector units 230 "not nearest to the indoor inlet of the heat-exchange ventilation apparatus". When the operation mode of the air-conditioning apparatus 200 is "stop", the indoor unit control unit 215 sets the deflector units 230 "not nearest to the indoor inlet of the heat-exchange ventilation apparatus" to "closed". That is, when the air-conditioning apparatus 200 performs the blowing temperature assist operation while not performing the temperature adjustment of the space to be ventilated 50, of the plurality of deflector units 230, the deflector units 230 provided at the second outlets other than the second outlet nearest to the first inlet close the second outlets to prevent air from blowing from the second outlets.

By performing such control of the blowing temperature assist operation, the ventilation and air-conditioning system 1000 can obtain only the effect of improving the temperature comfort of air blown from the heat-exchange ventilation apparatus 100 without giving users in the area to be air-conditioned by the air-conditioning apparatus 200 a sense of discomfort of being hit by blown air. Furthermore, since blown air does not directly hit users from the indoor unit 202 of the air-conditioning apparatus 200, it is also possible to heat air to a temperature that the users will feel too hot when the air is blown from the indoor unit 202 into the area to be air-conditioned, to be drawn into the heat-exchange ventilation apparatus 100.

(When air-conditioning apparatus 200 is "cooling")

When the operation mode is "cooling", if the heat-exchange ventilation apparatus 100 draws in air cooled by the air-conditioning apparatus 200, the temperature of air blown from the heat-exchange ventilation apparatus 100 decreases. Thus, the air-conditioning apparatus 200 does not perform wind direction control to blow an air current toward the indoor inlet 104 of the heat-exchange ventilation apparatus 100. That is, when the operation mode is "cooling", the air-conditioning apparatus 200 can determine the operating conditions based only on the conditions of the area to be air-conditioned. That is, regardless of the "blowing temperature assist request level", the air-conditioning apparatus 200 sets the blowing temperature assist operation to "off" by setting the blowing fan output to a "control value", the deflector unit output nearest to the indoor inlet 104 to a "control value", and the deflector unit output not nearest to the indoor inlet 104 to a "control value", and increasing the capability of the temperature adjustment as the "indoor temperature detected by the air-conditioning apparatus - the set temperature" increases. The control value of the blowing fan output is set to "high", the control value of the deflector unit output nearest to the indoor inlet 104 to "swing", and the control value of the deflector unit output not nearest to the indoor inlet 104 to "swing". The "control values" are operation instruction values set on the air-conditioning apparatus 200 as the current operating conditions of the air-conditioning apparatus 200.

As described above, when the operation mode of the air-conditioning apparatus 200 is "cooling", even if the air-conditioning apparatus 200 blows an air current toward the indoor inlet 104 of the heat-exchange ventilation apparatus 100, the effect of improving the comfort of air blown from the heat-exchange ventilation apparatus 100 cannot be expected. Thus, when the operation mode is "cooling", the air-conditioning apparatus 200 always performs an operation that prioritizes the temperature comfort of the area to be air-conditioned.

(When air-conditioning apparatus 200 is "heating": "blowing temperature assist request level (none) ")

When the operation mode is "heating", and the "blowing temperature assist request level" received from the heat-exchange ventilation apparatus 100 is "none", the outdoor temperature is comfortable, and the difference between the target blowing temperature and the outdoor temperature is small, or the heat-exchange ventilation apparatus 100 is in a "stopped" state. Thus, the air-conditioning apparatus 200 determines the operating conditions based only on the conditions of the area to be air-conditioned. Specifically, when the "indoor temperature detected by the air-conditioning apparatus - the set temperature" is "0°C or more", the indoor unit control unit 215 sets the blowing fan output to "stop" to prevent a feeling of cold air caused by blowing. When the "indoor temperature detected by the air-conditioning apparatus - the set temperature" is "less than 0°C", the indoor unit control unit 215 sets the blowing fan output to a "control value". The indoor unit control unit 215 sets the deflector unit output nearest to the indoor inlet 104 to a "control value", and the deflector unit output not nearest to the indoor inlet 104 to a "control value", and increases the capability of the temperature adjustment as the "indoor temperature detected by the air-conditioning apparatus - the set temperature" decreases. Thus, the blowing temperature assist operation is "off".

As described above, when the operation mode of the air-conditioning apparatus 200 is "heating", and the "blowing temperature assist request level" received from the heat-exchange ventilation apparatus 100 is "none", the outdoor temperature is comfortable, and the difference between the target blowing temperature and the outdoor temperature is small, or the heat-exchange ventilation apparatus 100 is in the "stopped" state. Thus, the air-conditioning apparatus 200 always performs an operation that prioritizes the temperature comfort of the area to be air-conditioned.

(When air-conditioning apparatus 200 is "heating": "blowing temperature assist request level (low) ")

When the operation mode of the air-conditioning apparatus 200 is "heating", and the "blowing temperature assist request level" received from the heat-exchange ventilation apparatus 100 is "low", the outdoor temperature is slightly lower than the target blowing temperature, and there is a difference between the outdoor temperature and the target blowing temperature, which, however, is at a level that does not give a great sense of discomfort to a user immediately below the indoor outlet 105 of the heat-exchange ventilation apparatus 100, and is not a state that requires an assist even if the conditions of the area to be air-conditioned are "uncomfortable". Thus, the air-conditioning apparatus 200 performs the blowing temperature assist operation only when the conditions of the area to be air-conditioned are "comfortable", and the temperature adjustment is set to "off".

Specifically, when the "indoor temperature detected by the air-conditioning apparatus - the set temperature" is "0°C or more", the indoor unit control unit 215 sets the blowing temperature assist operation to "on" by setting the blowing fan output to "low", the deflector unit output nearest to the indoor inlet 104 to "horizontal", the deflector unit output not nearest to the indoor inlet 104 to "closed", and the temperature adjustment to "off".

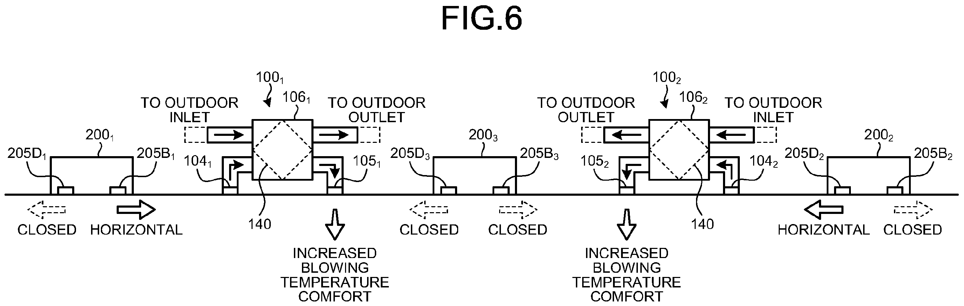

FIG. 6 is a diagram illustrating an example of a state in which the ventilation and air-conditioning system according to the first embodiment performs the blowing temperature assist operation with the temperature adjustment set to "off". In this case, since the temperature adjustment of the air-conditioning apparatus 200 is "off", warm air accumulated in the vicinity of the ceiling is sent from the air-conditioning apparatus 200 toward the indoor inlet 104. As a result of the temperature rise of air drawn in by the heat-exchange ventilation apparatus 100, the temperature of blown air blown by the heat-exchange ventilation apparatus 100 also rises, improving comfort.

Returning to FIG. 5, when the "indoor temperature detected by the air-conditioning apparatus - the set temperature" is "-3°C or more and less than 0°C", the indoor unit control unit 215 sets the blowing temperature assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%". That is, the air-conditioning apparatus 200 performs an operation that prioritizes the temperature comfort of the area to be air-conditioned.

When the "indoor temperature detected by the air-conditioning apparatus - the set temperature" is "less than -3°C", the indoor unit control unit 215 sets the blowing temperature assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 100%". That is, the air-conditioning apparatus 200 performs an operation that prioritizes the temperature comfort of the area to be air-conditioned.

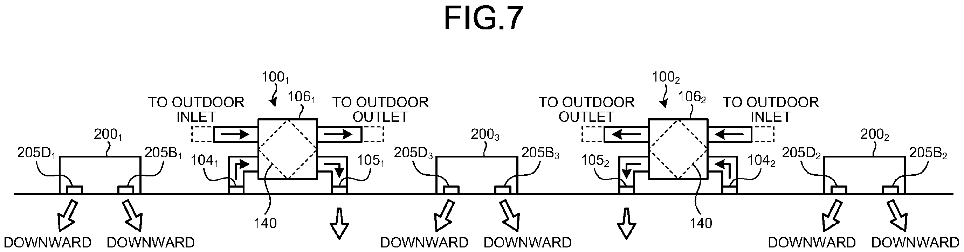

FIG. 7 is a diagram illustrating an example of a state in which the ventilation and air-conditioning system according to the first embodiment does not perform the blowing temperature assist operation. In the example illustrated in FIG. 7, air is blown downward from the air-conditioning apparatus 200. No air is blown from the air-conditioning apparatus 200 toward the indoor inlet 104. Thus, the temperature of air drawn in by the heat-exchange ventilation apparatus 100 is not increased by the influence of the air blown by the air-conditioning apparatus 200. Then, the temperature comfort of blown air blown by the heat-exchange ventilation apparatus 100 is not improved by the effect of air blown by the air-conditioning apparatus 200.

As described above, in the ventilation and air-conditioning system 1000, when the operation mode of the air-conditioning apparatus 200 is "heating", and the "blowing temperature assist request level" is "low", the air-conditioning apparatus 200 performs the blowing temperature assist operation only when the "indoor temperature detected by the air-conditioning apparatus - the set temperature" in the area to be air-conditioned by the air-conditioning apparatus 200 is in a state of "0°C or more". That is, when the "blowing temperature assist request level" is "low", the outdoor temperature is slightly lower than the target blowing temperature, and the temperature comfort of blown air blown by the heat-exchange ventilation apparatus 100 may be slightly impaired without the blowing temperature assist operation. Therefore, only when the temperature comfort of the area to be air-conditioned is satisfied, the air-conditioning apparatus 200 prioritizes the improvement of the temperature comfort of air blown from the heat-exchange ventilation apparatus 100 into the space to be ventilated 50 over the temperature comfort of the area to be air-conditioned.

However, when the temperature comfort of the area to be air-conditioned is no longer satisfied, the air-conditioning apparatus 200 prioritizes the improvement of the temperature comfort of the area to be air-conditioned over the temperature comfort of blown air blown by the heat-exchange ventilation apparatus 100. In other words, the air-conditioning apparatus 200 performs the blowing temperature assist operation after considering a balance between the temperature comfort of the area to be air-conditioned and the temperature comfort of blown air blown by the heat-exchange ventilation apparatus 100.

When the "indoor temperature detected by the air-conditioning apparatus - the set temperature" in the area to be air-conditioned by the air-conditioning apparatus 200 is in a state of "0°C or more", the temperature comfort of the area to be air-conditioned is satisfied, and warm air present in the vicinity of the ceiling can be drawn into the heat-exchange ventilation apparatus 100. Consequently, the temperature comfort of blown air blown by the heat-exchange ventilation apparatus 100 is also improved, and a sense of discomfort associated with cold air is not given to a user immediately below the indoor outlet 105 of the heat-exchange ventilation apparatus 100.

Performing the blowing temperature assist operation can prevent the occurrence of temperature variations in the space to be ventilated 50 and temperature nonuniformity in the space to be ventilated 50 due to the inflow of cold air blown from the heat-exchange ventilation apparatus 100 into the space to be ventilated 50, so that a sense of discomfort associated with temperature variations in the space to be ventilated 50 and a sense of discomfort associated with temperature nonuniformity in the space to be ventilated 50 are not given to users. Furthermore, the air-conditioning apparatus 200 can reduce the number of times the temperature adjustment is turned on and off, and thus can also reduce power consumption in the outdoor unit 203 of the air-conditioning apparatus 200.

Moreover, the deflector unit 230 "nearest to the indoor inlet of the heat-exchange ventilation apparatus" and the deflector units 230 "not nearest to the indoor inlet of the heat-exchange ventilation apparatus" are controlled independently of each other. Consequently, even when the blowing temperature assist operation is "on", the output of the deflector units 230 "not nearest to the indoor inlet of the heat-exchange ventilation apparatus" is kept downward at a control value, so that temperature comfort for users located in the area to be air-conditioned by the deflector units 230 "not nearest to the indoor inlet of the heat-exchange ventilation apparatus" can be maintained even when the blowing temperature assist operation is "on".

(When air-conditioning apparatus 200 is "heating": "blowing temperature assist request level (medium) ")

When the operation mode of the air-conditioning apparatus 200 is "heating", and the "blowing temperature assist request level" received from the heat-exchange ventilation apparatus 100 is "medium", the outdoor temperature is lower than the target blowing temperature, and the difference between the outdoor temperature and the target blowing temperature is larger than when the "blowing temperature assist request level" is "low", which is thus at a level that gives a sense of discomfort to a user immediately below the indoor outlet 105 of the heat-exchange ventilation apparatus 100 without a blowing temperature assist.

Therefore, the air-conditioning apparatus 200 needs to perform the blowing temperature assist operation by increasing its priority, and thus performs the blowing temperature assist operation in a state where the "indoor temperature detected by the air-conditioning apparatus - the set temperature" in the area to be air-conditioned is in a state of "0°C or more".

When the "indoor temperature detected by the air-conditioning apparatus - the set temperature" in the area to be air-conditioned is "-3°C or more and less than 0°C", the air-conditioning apparatus 200 performs the blowing temperature assist operation. However, when the "duration of non-attainment of the set temperature" becomes long, the air-conditioning apparatus 200 prioritizes the temperature adjustment control of the area to be air-conditioned. That is, the air-conditioning apparatus 200 prioritizes one of the blowing temperature assist operation and the temperature adjustment control of the area to be air-conditioned, based on the "duration of non-attainment of the set temperature".

When the "indoor temperature detected by the air-conditioning apparatus - the set temperature" in the area to be air-conditioned is "less than -3°C", the air-conditioning apparatus 200 prioritizes the temperature adjustment control of the area to be air-conditioned.

Specifically, when the "indoor temperature detected by the air-conditioning apparatus - the set temperature" is "0°C or more", the indoor unit control unit 215 sets the blowing temperature assist operation to "on" by setting the blowing fan output to "low", the deflector unit output nearest to the indoor inlet 104 to "horizontal", the deflector unit output not nearest to the indoor inlet 104 to "closed", and the temperature adjustment to "on at 50%". The blowing temperature assist operation in this case is an assist operation in which the temperature comfort of air blown from the heat-exchange ventilation apparatus 100 is further improved by the temperature adjustment of the air-conditioning apparatus 200 than when the temperature adjustment of the air-conditioning apparatus 200 is "off".

When the "indoor temperature detected by the air-conditioning apparatus - the set temperature" is "-3°C or more and less than 0°C", and the "duration of non-attainment of the set temperature" is "less than 30 minutes", the indoor unit control unit 215 sets the blowing temperature assist operation to "on" by setting the blowing fan output to a "control value", the deflector unit output nearest to the indoor inlet 104 to "horizontal", the deflector unit output not nearest to the indoor inlet 104 to a "control value", and the temperature adjustment to "on at 50%". Here, "30 minutes" are a predetermined threshold time for the indoor unit control unit 215 to determine whether or not to set the blowing temperature assist operation to "on". The threshold time is determined in advance and stored in the indoor unit control unit 215. The threshold time may be stored in the indoor unit storage unit 214. The threshold time can be changed to any time by a user.

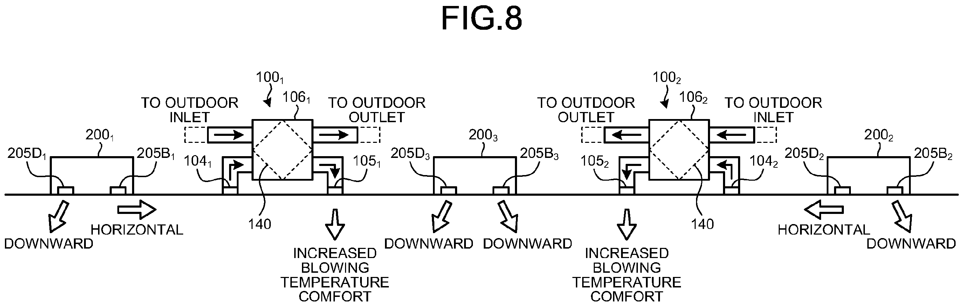

FIG. 8 is a diagram illustrating an example of a state in which the ventilation and air-conditioning system according to the first embodiment performs the blowing temperature assist operation with the temperature adjustment "on". In this case, since the temperature adjustment of the air-conditioning apparatus 200 is "on", air warmed by the heating of the air-conditioning apparatus 200 is sent from the air-conditioning apparatus 200 toward the indoor inlet 104. Consequently, the temperature comfort of blown air blown by the heat-exchange ventilation apparatus 100 is further improved than when the blowing temperature assist operation with the temperature adjustment of the air-conditioning apparatus 200 being "off" is performed as illustrated in FIG. 6.

Returning to FIG. 5, when the "indoor temperature detected by the air-conditioning apparatus - the set temperature" is "-3°C or more and less than 0°C", and the "duration of non-attainment of the set temperature" is "30 minutes or more", the indoor unit control unit 215 sets the blowing temperature assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%". That is, since the "duration of non-attainment of the set temperature" is equal to or more than the threshold time, the air-conditioning apparatus 200 prioritizes the temperature adjustment control of the area to be air-conditioned over the blowing temperature assist operation.

When the "indoor temperature detected by the air-conditioning apparatus - the set temperature" is "less than -3°C", the indoor unit control unit 215 sets the blowing temperature assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 100%". That is, the air-conditioning apparatus 200 prioritizes the temperature adjustment control of the area to be air-conditioned over the blowing temperature assist operation.

In FIG. 5, when the "duration of non-attainment of the set temperature" is "30 minutes or more", the indoor unit control unit 215 may perform the operation when the blowing temperature assist request level is "none", regardless of the "indoor temperature detected by the air-conditioning apparatus - the set temperature". That is, the indoor unit control unit 215 may set the blowing temperature assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%" or "on at 100%", appropriately, based on the "indoor temperature detected by the air-conditioning apparatus - the set temperature". That is, since the "duration of non-attainment of the set temperature" is equal to or more than the threshold time, the air-conditioning apparatus 200 prioritizes the temperature adjustment control of the area to be air-conditioned over the blowing temperature assist operation. That is, the air-conditioning apparatus 200 may determine whether or not the air-conditioning apparatus 200 performs the blowing temperature assist operation, based only on the time during which the indoor temperature detected by the air-conditioning apparatus 200 has not reached the set temperature.

As described above, in the ventilation and air-conditioning system 1000, when the operation mode of the air-conditioning apparatus 200 is "heating", and the "blowing temperature assist request level" is "medium", the air-conditioning apparatus 200 performs the blowing temperature assist operation when the "indoor temperature detected by the air-conditioning apparatus - the set temperature" in the area to be air-conditioned by the air-conditioning apparatus 200 is in a state of "-3°C or more and less than 0°C", in addition to when the "indoor temperature detected by the air-conditioning apparatus - the set temperature" in the area to be air-conditioned is in a state of "0°C or more". When the "blowing temperature assist request level" is "medium", the outdoor temperature is lower than the target blowing temperature, and the temperature comfort of blown air blown by the heat-exchange ventilation apparatus 100 may be impaired without the blowing temperature assist operation. Therefore, when the "duration of non-attainment of the set temperature" is longer than the threshold time and the temperature comfort of the area to be air-conditioned is at a slightly uncomfortable level, the air-conditioning apparatus 200 prioritizes the improvement of the temperature comfort of blown air blown by the heat-exchange ventilation apparatus 100 over the temperature comfort of the area to be air-conditioned.

However, when the temperature comfort of the area to be air-conditioned is at an uncomfortable level, and when the "duration of non-attainment of the set temperature" has become equal to or more than the threshold time, the improvement of the temperature comfort of the area to be air-conditioned is prioritized over the improvement of the temperature comfort of blown air blown by the heat-exchange ventilation apparatus 100. In other words, the air-conditioning apparatus 200 performs the blowing temperature assist operation after considering a balance between the temperature comfort of the area to be air-conditioned and the temperature comfort of blown air blown by the heat-exchange ventilation apparatus 100.

When the "indoor temperature detected by the air-conditioning apparatus - the set temperature" in the area to be air-conditioned by the air-conditioning apparatus 200 is in a state of "0°C or more", the air-conditioning apparatus 200 can adjust the temperature of warm air present in the vicinity of the ceiling to further increase the temperature of the warm air present in the vicinity of the ceiling and make the warm air drawn into the heat-exchange ventilation apparatus 100. Therefore, compared to the case where the air-conditioning apparatus 200 performs the blowing temperature assist operation without performing the temperature adjustment, the temperature comfort of blown air blown by the heat-exchange ventilation apparatus 100 is significantly improved, and a sense of discomfort is not given to a user immediately below the indoor outlet 105 of the heat-exchange ventilation apparatus 100.

Further, performing the blowing temperature assist operation can prevent temperature variations in the space to be ventilated 50 and temperature nonuniformity in the space to be ventilated 50 due to the inflow of cold air blown from the heat-exchange ventilation apparatus 100 into the space to be ventilated 50, so that a sense of discomfort associated with temperature variations in the space to be ventilated 50 and a sense of discomfort associated with temperature nonuniformity in the space to be ventilated 50 are not given to users. Furthermore, the air-conditioning apparatus 200 can reduce the number of times the temperature adjustment is turned on and off, and thus can also reduce power consumption in the outdoor unit 203 of the air-conditioning apparatus 200.

Moreover, the deflector unit 230 "nearest to the indoor inlet of the heat-exchange ventilation apparatus" and the deflector units 230 "not nearest to the indoor inlet of the heat-exchange ventilation apparatus" are controlled independently of each other. Consequently, even when the blowing temperature assist operation is "on", the output of the deflector units 230 "not nearest to the indoor inlet of the heat-exchange ventilation apparatus" is kept downward at a control value, so that temperature comfort for users located in the area to be air-conditioned by the deflector units 230 "not nearest to the indoor inlet of the heat-exchange ventilation apparatus" can be maintained even when the blowing temperature assist operation is "on".

(When air-conditioning apparatus 200 is "heating": "blowing temperature assist request level (high) ")

When the operation mode of the air-conditioning apparatus 200 is "heating", and the "blowing temperature assist request level" received from the heat-exchange ventilation apparatus 100 is "high", the outdoor temperature is lower than the target blowing temperature, and the difference between the outdoor temperature and the target blowing temperature is larger than when the "blowing temperature assist request level" is "medium", and thus the temperature comfort of blown air blown by the heat-exchange ventilation apparatus 100 may be significantly impaired. Therefore, the air-conditioning apparatus 200 needs to perform the blowing temperature assist operation by further increasing its priority, and thus performs the blowing temperature assist operation regardless of the conditions of the area to be air-conditioned.

However, when the "duration of non-attainment of the set temperature" becomes long, the air-conditioning apparatus 200 prioritizes the temperature adjustment control of the area to be air-conditioned. That is, the air-conditioning apparatus 200 prioritizes one of the blowing temperature assist operation and the temperature adjustment control of the area to be air-conditioned, based on the "duration of non-attainment of the set temperature".

Specifically, when the "indoor temperature detected by the air-conditioning apparatus - the set temperature" is "0°C or more", the indoor unit control unit 215 sets the blowing temperature assist operation to "on" by setting the blowing fan output to "low", the deflector unit output nearest to the indoor inlet 104 to "horizontal", the deflector unit output not nearest to the indoor inlet 104 to "closed", and the temperature adjustment to "on at 100%". The blowing temperature assist operation in this case is an assist operation in which the temperature comfort of air blown from the heat-exchange ventilation apparatus 100 is further improved by the temperature adjustment of the air-conditioning apparatus 200 than when the temperature adjustment of the air-conditioning apparatus 200 is "off".

When the "indoor temperature detected by the air-conditioning apparatus - the set temperature" is "-3°C or more and less than 0°C", and the "duration of non-attainment of the set temperature" is "less than 30 minutes", the indoor unit control unit 215 sets the blowing temperature assist operation to "on" by setting the blowing fan output to a "control value", the deflector unit output nearest to the indoor inlet 104 to "horizontal", the deflector unit output not nearest to the indoor inlet 104 to a "control value", and the temperature adjustment to "on at 100%". The blowing temperature assist operation in this case is an assist operation in which the temperature comfort of air blown from the heat-exchange ventilation apparatus 100 is further improved by the temperature adjustment of the air-conditioning apparatus 200 than when the temperature adjustment of the air-conditioning apparatus 200 is "off". Here, "30 minutes" are a threshold time.

When the "indoor temperature detected by the air-conditioning apparatus - the set temperature" is "-3°C or more and less than 0°C", and the "duration of non-attainment of the set temperature" is "30 minutes or more", the indoor unit control unit 215 sets the blowing temperature assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%". That is, since the "duration of non-attainment of the set temperature" is longer than the threshold time, the air-conditioning apparatus 200 prioritizes the temperature adjustment control of the area to be air-conditioned over the blowing temperature assist operation.

When the "indoor temperature detected by the air-conditioning apparatus - the set temperature" is "less than -3°C", and the "duration of non-attainment of the set temperature" is "less than 15 minutes", the indoor unit control unit 215 sets the blowing temperature assist operation to "on" by setting the blowing fan output to a "control value", the deflector unit output nearest to the indoor inlet 104 to "horizontal", the deflector unit output not nearest to the indoor inlet 104 to a "control value", and the temperature adjustment to "on at 100%". The blowing temperature assist operation in this case is an assist operation in which the temperature comfort of air blown from the heat-exchange ventilation apparatus 100 is further improved by the temperature adjustment of the air-conditioning apparatus 200 than when the temperature adjustment of the air-conditioning apparatus 200 is "off". Here, "15 minutes" are a threshold time.

When the "indoor temperature detected by the air-conditioning apparatus - the set temperature" is "less than -3°C", and the "duration of non-attainment of the set temperature" is "15 minutes or more", the blowing temperature assist operation is set to "off" by setting the blowing fan output to a "control value", the deflector unit output nearest to the indoor inlet 104 to a "control value", the deflector unit output not nearest to the indoor inlet 104 to a "control value", and the temperature adjustment to "on at 100%". That is, since the "duration of non-attainment of the set temperature" is more than the threshold time, the air-conditioning apparatus 200 prioritizes the temperature adjustment control of the area to be air-conditioned over the blowing temperature assist operation.

As in the above-described case (when air-conditioning apparatus 200 is "heating": "blowing temperature assist request level (medium)), in FIG. 5, if the "duration of non-attainment of the set temperature" is "30 minutes or more", the indoor unit control unit 215 may perform the operation when the blowing temperature assist request level is "none", regardless of the "indoor temperature detected by the air-conditioning apparatus - the set temperature". That is, the indoor unit control unit 215 may set the blowing temperature assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%" or "on at 100%", appropriately, based on the "indoor temperature detected by the air-conditioning apparatus - the set temperature". That is, since the "duration of non-attainment of the set temperature" is equal to or more than the threshold time, the air-conditioning apparatus 200 prioritizes the temperature adjustment control of the area to be air-conditioned over the blowing temperature assist operation. That is, the air-conditioning apparatus 200 may determine whether or not the air-conditioning apparatus 200 performs the blowing temperature assist operation, based only on the time during which the indoor temperature detected by the air-conditioning apparatus 200 has not reached the set temperature.

When the air-conditioning apparatus 200 determines whether or not to perform the blowing temperature assist operation, based only on the time during which the indoor temperature detected by the air-conditioning apparatus 200 has not reached the set temperature, the threshold time may be changed according to the assist request level. For example, when the assist request level is "medium", the threshold time is set to "30 minutes". When the assist request level is "high", the threshold time is set to "60 minutes". That is, since the "duration of non-attainment of the set temperature" is equal to or more than the threshold time, the air-conditioning apparatus 200 prioritizes the temperature adjustment control of the area to be air-conditioned over the blowing temperature assist operation. However, when the blowing temperature assist request level is high, the air-conditioning apparatus 200 prioritizes the assist operation if possible.

As described above, in the ventilation and air-conditioning system 1000, when the operation mode of the air-conditioning apparatus 200 is "heating", and the "blowing temperature assist request level" is "high", the blowing temperature assist operation is performed except when the "duration of non-attainment of the set temperature" is equal to or more than the threshold time. That is, when the "blowing temperature assist request level" is "high", the outdoor temperature is significantly lower than the target blowing temperature, and the temperature comfort of blown air blown by the heat-exchange ventilation apparatus 100 may be significantly impaired without the blowing temperature assist operation. Therefore, even if the temperature comfort of the area to be air-conditioned is not satisfied, the air-conditioning apparatus 200 prioritizes the temperature comfort improvement of blown air blown by the heat-exchange ventilation apparatus 100 over the temperature comfort of the area to be air-conditioned.

However, when the "duration of non-attainment of the set temperature" has become equal to or more than the predetermined threshold time, the improvement of the temperature comfort of the area to be air-conditioned is prioritized over the temperature comfort of blown air blown by the heat-exchange ventilation apparatus 100. In other words, the air-conditioning apparatus 200 performs the blowing temperature assist operation after considering a balance between the temperature comfort of the area to be air-conditioned and the temperature comfort of blown air blown by the heat-exchange ventilation apparatus 100.

When the "indoor temperature detected by the air-conditioning apparatus - the set temperature" in the area to be air-conditioned by the air-conditioning apparatus 200 is in a state of "less than 0°C", the air-conditioning apparatus 200 can adjust the temperature of warm air present in the vicinity of the ceiling to further increase the temperature of the warm air present in the vicinity of the ceiling and make the warm air drawn into the heat-exchange ventilation apparatus 100. Therefore, compared to the case where the air-conditioning apparatus 200 performs the blowing temperature assist operation without performing the temperature adjustment, the temperature comfort of blown air blown by the heat-exchange ventilation apparatus 100 is significantly improved, and a user immediately below the indoor outlet 105 of the heat-exchange ventilation apparatus 100 is not given a sense of discomfort.

Further, performing the blowing temperature assist operation can prevent temperature variations in the space to be ventilated 50 and temperature nonuniformity in the space to be ventilated 50 due to the inflow of cold air blown from the heat-exchange ventilation apparatus 100 into the space to be ventilated 50, so that a sense of discomfort associated with temperature variations in the space to be ventilated 50 and a sense of discomfort associated with temperature nonuniformity in the space to be ventilated 50 are not given to users. Furthermore, the air-conditioning apparatus 200 can reduce the number of times the temperature adjustment is turned on and off, and thus can also reduce power consumption in the outdoor unit 203 of the air-conditioning apparatus 200.

Moreover, the deflector unit 230 "nearest to the indoor inlet of the heat-exchange ventilation apparatus" and the deflector units 230 "not nearest to the indoor inlet of the heat-exchange ventilation apparatus" can be controlled independently of each other. Consequently, even when the blowing temperature assist operation is "on", the output of the deflector units 230 "not nearest to the indoor inlet of the heat-exchange ventilation apparatus" is kept downward at a control value, so that temperature comfort for users located in the area to be air-conditioned by the deflector units 230 "not nearest to the indoor inlet of the heat-exchange ventilation apparatus" can be maintained even when the blowing temperature assist operation is "on".

Further, during the blowing temperature assist operation of the air-conditioning apparatus 200, the deflector unit 230 nearest to the indoor inlet 104 of the heat-exchange ventilation apparatus 100 is brought into a state along the horizontal direction, generating an air current in the space to be ventilated 50, so that the effect of eliminating temperature nonuniformity and humidity nonuniformity in the space to be ventilated 50 can also be obtained.

Note that when the air-conditioning apparatus 200 determines whether or not to perform the blowing temperature assist operation, temperature nonuniformity or humidity nonuniformity does not need to occur in the space to be ventilated 50. In the ventilation and air-conditioning system 1000 according to the first embodiment, even if there is no temperature nonuniformity or humidity nonuniformity in the space to be ventilated 50, the air-conditioning apparatus 200 performs the blowing temperature assist operation after considering a balance between the temperature comfort of the area to be air-conditioned and the temperature comfort of blown air blown by the heat-exchange ventilation apparatus 100.

<Modifications>

The following describes modifications of the determination of the blowing fan output, the deflector unit output, and the temperature adjustment capability by the indoor unit control unit 215 of the air-conditioning apparatus 200. A user may be able to set in advance which one of the determination result patterns is followed to operate the air-conditioning apparatus 200 from a function setting switch (not illustrated) provided to the ventilation controller 101, the air-conditioning controller 201, the system controller 300, or the heat-exchange ventilation unit 102, a function setting switch (not illustrated) provided to the indoor unit 202, or the like.

In FIG. 5, for the portions where the blowing fan output is "low" when the blowing temperature assist operation is "on", a case is assumed where the distance from the deflector unit 230 of the air-conditioning apparatus 200 to the indoor inlet 104 of the heat-exchange ventilation apparatus 100 is short, and air blown from the air-conditioning apparatus 200 cannot be efficiently drawn in in high volume. Thus, in accordance with the distance from the deflector unit 230 of the air-conditioning apparatus 200 to the indoor inlet 104 of the heat-exchange ventilation apparatus 100, the blowing fan output may be set to "high" or "medium" in terms of an air volume at which air blown from the air-conditioning apparatus 200 is efficiently drawn into the heat-exchange ventilation apparatus 100. That is, the blowing fan output of the air-conditioning apparatus 200 when the blowing temperature assist operation is "on" can be appropriately changed from an air volume control value set from the air-conditioning controller 201 or the system controller 300.

Further, considering energy saving performance, the operation may be performed so as not to increase the air volume from the control value, or at a minimum air volume regardless of the control value. By setting the air volume of the air-conditioning apparatus 200 to the minimum air volume, the temperature exchange efficiency in the heat exchanger of the air-conditioning apparatus 200 is enhanced, so that the temperature of air blown from the air-conditioning apparatus 200 can be further increased, resulting in a further improvement in the temperature comfort of blown air blown by the heat-exchange ventilation apparatus 100.

When the blowing temperature assist operation is "on", the deflector unit output nearest to the indoor inlet 104 is set to "horizontal". However, if the deflector unit 230 can also adjust the wind direction to the right and left, air blown from the air-conditioning apparatus 200 may be adjusted to be able to be blown to the indoor inlet 104 of the heat-exchange ventilation apparatus 100. This allows air blown from the air-conditioning apparatus 200 to be more efficiently drawn into the heat-exchange ventilation apparatus 100, and thus can improve the temperature comfort of blown air blown by the heat-exchange ventilation apparatus 100.

For the heat-exchange ventilation apparatus 100 of a so-called one-way-blowing ceiling cassette type or the like, the indoor inlet 104 and the indoor outlet 105 may be very close to each other. In such a case, when the blowing temperature assist operation is "on", the deflector unit output nearest to the indoor inlet 104 is adjusted in the left and right wind direction so as not to linearly blow toward the indoor inlet 104 of the heat-exchange ventilation apparatus 100 but to be shifted at an angle in a direction away from the indoor outlet 105. This can improve the temperature comfort of blown air blown by the heat-exchange ventilation apparatus 100 without air blown from the air-conditioning apparatus 200 disturbing an air current blown from the heat-exchange ventilation apparatus 100, in other words, without impairing the comfort of users in the space to be ventilated 50.

The angle at which the left and right wind direction of air blown from the air-conditioning apparatus 200 is shifted in the left and right direction may be appropriately adjusted according to the distance between the air-conditioning apparatus 200 and the heat-exchange ventilation apparatus 100. Further, if an outlet of another apparatus is located between the indoor outlet 205A, 205B, 205C, or 205D of the air-conditioning apparatus 200 and the indoor inlet 104 of the heat-exchange ventilation apparatus 100, the right and left wind direction may be likewise adjusted as appropriate so as not to disturb a blown air current.

When the operation mode is "stop", and the blowing temperature assist operation is "on", the deflector unit output not nearest to the indoor inlet 104 is set to "closed" because there is no need to blow air. However, if air is blown in the "horizontal" direction or the like, the effect of improving the temperature comfort of blown air blown by the heat-exchange ventilation apparatus 100 can be obtained without giving a sense of discomfort of being hit by blown air to users in the area to be air-conditioned.

In FIG. 5, for the temperature adjustment control, when the operation mode is "stop", and the blowing temperature assist operation is "on", as the "blowing temperature assist request level" increases to "low", "medium", and "high", the temperature adjustment control is set to "off", "on at 50%", and "on at 100%", to enhance the effect of improving the temperature comfort of blown air blown by the heat-exchange ventilation apparatus 100. On the other hand, in the case where the temperature comfort improvement of blown air blown by the heat-exchange ventilation apparatus 100 is given the highest priority, when the "blowing temperature assist request level" is "low", "medium", or "high", the temperature adjustment control may be set to "on at 100%", "on at 100%", or "on at 100%". Further, considering energy saving performance, when the "blowing temperature assist request level" is "low", "medium", or "high", the temperature adjustment control may be set to "off", "off", or "on at 50%", or "off", "off", or "off". When the blowing fan 220 is operated and the deflector unit output nearest to the indoor inlet 104 is set to "horizontal", the effect of improving the temperature comfort of blown air blown by the heat-exchange ventilation apparatus 100 can be obtained, using warm air accumulated in the vicinity of the ceiling.

When the air-conditioning apparatus 200 that has been stopped operates to perform the blowing temperature assist operation while the operation mode is "stop", users may feel a sense of discomfort. Therefore, when the operation mode of the air-conditioning apparatus 200 is "stop", the air-conditioning apparatus 200 need not perform the blowing temperature assist operation in the first place or may perform the blowing temperature assist operation only when the blowing temperature assist request level is "high".

When the operation mode is "cooling", the blowing temperature assist operation is set to "off". However, when the area to be air-conditioned by the air-conditioning apparatus 200 is "comfortable", the temperature adjustment is turned "off", so that the heat-exchange ventilation apparatus 100 does not draw in air cooled by the air-conditioning apparatus 200. Thus, the blowing temperature assist operation may be performed using warm air accumulated in the vicinity of the ceiling. In this case, the indoor unit control unit 215 sets the blowing temperature assist operation to "on" by setting the blowing fan output to "low", the deflector unit output nearest to the indoor inlet 104 to "horizontal", the deflector unit output not nearest to the indoor inlet 104 to a "control value", and the temperature adjustment to "off".

Further, by performing the temperature adjustment control after automatically switching the operation mode of the air-conditioning apparatus 200 from "cooling" to "heating", air further warmed by the temperature adjustment by "heating" can be drawn into the heat-exchange ventilation apparatus 100. In this case, the indoor unit control unit 215 sets the blowing temperature assist operation to "on" by setting the blowing fan output to "low", the deflector unit output nearest to the indoor inlet 104 to "horizontal", the deflector unit output not nearest to the indoor inlet 104 to "closed", and the temperature adjustment to "on".

The blowing temperature assist operation in this case is an assist operation in which the temperature comfort of air blown from the heat-exchange ventilation apparatus 100 is further improved by the temperature adjustment. When the operation mode of the air-conditioning apparatus 200 is automatically switched from "cooling" to "heating", since the user operation is originally in the "cooling" mode, the deflector unit output not nearest to the indoor inlet 104 is set to "closed" so that "warm air", instead of "cool air" desired by users, does not hit the users.

Even in a case such as in an office during winter months in which cooling operation is performed due to an increase in indoor temperature caused by heat generation of office automation equipment, when the outdoor temperature is significantly low, and the temperature of blown air blown by the heat-exchange ventilation apparatus 100 also significantly decreases, the improvement of the temperature comfort of blown air blown by the heat-exchange ventilation apparatus 100 is prioritized over the temperature comfort of the area to be air-conditioned. However, if the temperature comfort of the area to be air-conditioned is impaired to an uncomfortable level, and if the "duration of non-attainment of the set temperature" has become equal to or more than the predetermined threshold time, the improvement of the temperature comfort of the area to be air-conditioned can be prioritized again over the temperature comfort improvement of blown air blown by the heat-exchange ventilation apparatus 100. In other words, the indoor unit control unit 215 causes the blowing temperature assist operation to be performed after considering a balance between the temperature comfort of the area to be air-conditioned and the temperature comfort of blown air blown by the heat-exchange ventilation apparatus 100.

At this time, since the deflector units 230 are set to "horizontal" or "closed" in all directions, warm air present in the vicinity of the ceiling can be further increased in temperature by the temperature adjustment through heating, to be drawn into the heat-exchange ventilation apparatus 100 without giving users in the area to be air-conditioned a sense of discomfort caused by the hitting of blown air. Consequently, compared to the case where the air-conditioning apparatus 200 performs the blowing temperature assist operation without performing the temperature adjustment, the temperature comfort of blown air blown by the heat-exchange ventilation apparatus 100 is significantly improved. Furthermore, since the blown air does not directly hit the users, it is also possible to make air heated to a temperature that the users will feel too hot when the air blows into the area to be air-conditioned, drawn into the heat-exchange ventilation apparatus 100.

In the ventilation and air-conditioning system 1000 according to the first embodiment, the air-conditioning apparatus 200 appropriately performs the blowing temperature assist operation, based on the operation mode of the air-conditioning apparatus 200, the blowing temperature assist request level, the difference between the indoor temperature detected by the air-conditioning apparatus 200 and the set temperature, and the time during which the indoor temperature detected by the air-conditioning apparatus 200 has not reached the set temperature. However, if there are at least two pieces of information of the operation mode of the air-conditioning apparatus 200 and the blowing temperature assist request level, the air-conditioning apparatus 200 can determine whether or not to perform the blowing temperature assist operation. This allows the air-conditioning apparatus 200 to avoid unnecessarily performing the blowing temperature assist operation.

In the ventilation and air-conditioning system 1000 according to the first embodiment, the heat-exchange ventilation apparatus 100 determines the blowing temperature assist request level, but the air-conditioning apparatus 200 or the system controller 300 may determine the blowing temperature assist request level. Specifically, if the air-conditioning apparatus 200 determines the blowing temperature assist request level, the air-conditioning apparatus 200 may acquire information on the start/stop status of the heat-exchange ventilation apparatus 100, the target blowing temperature of the heat-exchange ventilation apparatus 100, and the outdoor temperature detected by the heat-exchange ventilation apparatus 100 from the heat-exchange ventilation apparatus 100 via the system communication unit 212, to determine the blowing temperature assist request level.

If the system controller 300 determines the blowing temperature assist request level, the system controller 300 may acquire information on the start/stop status of the heat-exchange ventilation apparatus 100, the target blowing temperature of the heat-exchange ventilation apparatus 100, and the outdoor temperature detected by the heat-exchange ventilation apparatus 100 from the heat-exchange ventilation apparatus 100, to determine the blowing temperature assist request level. Then, the system controller 300 can transmit the determination result to the air-conditioning apparatus 200.

In the ventilation and air-conditioning system 1000 according to the first embodiment, the air-conditioning apparatus 200 determines whether or not to perform the blowing temperature assist operation, but the heat-exchange ventilation apparatus 100 or the system controller 300 may determine whether or not to perform the blowing temperature assist operation. Specifically, if the heat-exchange ventilation apparatus 100 determines whether or not to perform the blowing temperature assist operation, the heat-exchange ventilation apparatus 100 may acquire the operation mode of the air-conditioning apparatus 200, the indoor temperature detected by the air-conditioning apparatus 200, and the set temperature via the system communication unit 112, to determine the contents of the blowing temperature assist operation. Then, the heat-exchange ventilation apparatus 100 may transmit the determination results to the air-conditioning apparatus 200.

If the system controller 300 determines whether or not to perform the blowing temperature assist operation, the system controller 300 may acquire the blowing temperature assist request level from the heat-exchange ventilation apparatus 100, and acquire the operation mode of the air-conditioning apparatus 200, the indoor temperature detected by the air-conditioning apparatus 200, and the set temperature from the air-conditioning apparatus 200, to determine the contents of the blowing temperature assist operation. Then, the system controller 300 may transmit the determination results to the air-conditioning apparatus 200.

As described above, in the ventilation and air-conditioning system 1000 according to the first embodiment, the heat-exchange ventilation apparatus 100 determines the blowing temperature assist request level, based on the start/stop status of the heat-exchange ventilation apparatus 100 and the difference between the target blowing temperature of the heat-exchange ventilation apparatus 100 and the temperature of air that the heat-exchange ventilation apparatus 100 draws in from the outdoors. The air-conditioning apparatus 200 appropriately performs the blowing temperature assist operation, based on the operation mode of the air-conditioning apparatus 200, the blowing temperature assist request level, the difference between the indoor temperature detected by the air-conditioning apparatus 200 and the set temperature, and the time during which the indoor temperature detected by the air-conditioning apparatus 200 has not reached the set temperature. This improves the temperature comfort of blown air blown by the heat-exchange ventilation apparatus 100, eliminating a sense of discomfort being given to a user immediately below the indoor outlet 105 of the heat-exchange ventilation apparatus 100.

In the ventilation and air-conditioning system 1000, the air-conditioning apparatus 200 performs the blowing temperature assist operation after considering a balance between the temperature comfort of the area to be air-conditioned and the temperature comfort of blown air blown by the heat-exchange ventilation apparatus 100. This prevents temperature variations in the space to be ventilated 50 and temperature nonuniformity in the space to be ventilated 50, eliminating a sense of discomfort due to temperature variations and temperature nonuniformity being given to users.

In the ventilation and air-conditioning system 1000, the air-conditioning apparatus 200 independently controls the deflector unit 230 nearest to the indoor inlet 104 of the heat-exchange ventilation apparatus 100 and the deflector units 230 not nearest to the indoor inlet 104 of the heat-exchange ventilation apparatus 100. Consequently, in the ventilation and air-conditioning system 1000, on the area to be air-conditioned other than the indoor inlet 104 of the heat-exchange ventilation apparatus 100, operation that always gives priority to temperature comfort can be performed, regardless of the blowing temperature assist operation.

As described above, the ventilation and air-conditioning system 1000 according to the first embodiment has the effect of being able to improve the comfort of air blown from the heat-exchange ventilation apparatus 100 into the space to be ventilated 50.

Second Embodiment.

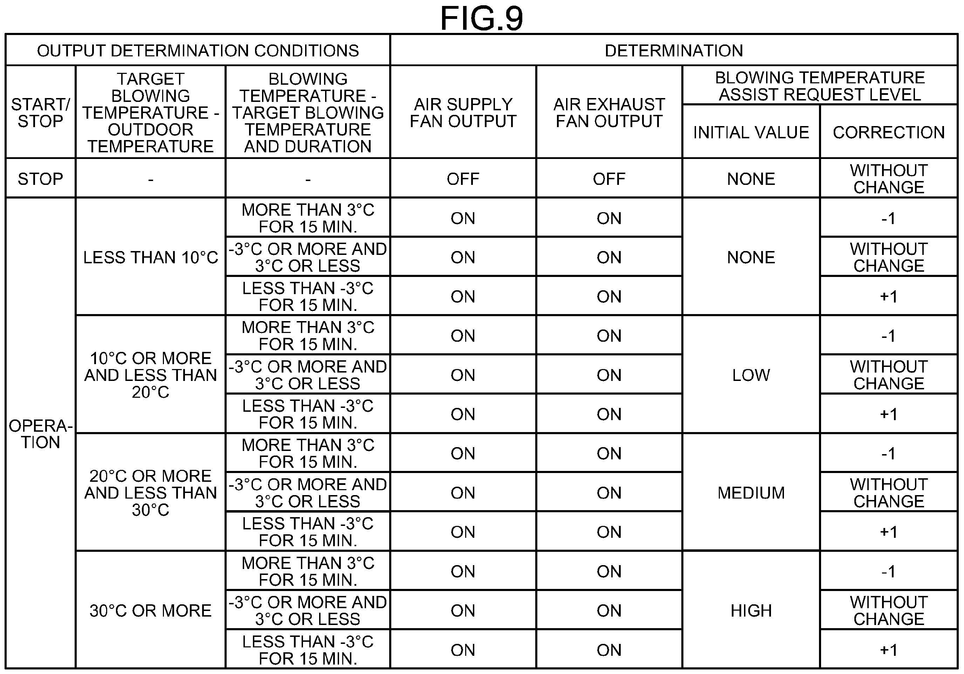

FIG. 9 is a diagram illustrating an example of determination of air exhaust fan output, air supply fan output, and blowing temperature assist request level by a control unit of a heat-exchange ventilation apparatus in a ventilation and air-conditioning system according to a second embodiment of the present invention. Note that items not specifically described are similar to those in the first embodiment, and the same functions and configurations will be described using the same reference numerals. The same functions and configurations as those of the first embodiment will not be explained.

A ventilation and air-conditioning system 2000 according to the second embodiment is different from the ventilation and air-conditioning system 1000 according to the first embodiment in that the ventilation apparatus control unit 115 of the heat-exchange ventilation apparatus 100 further has a function to correct the blowing temperature assist request level, based on the temperature of air blown from the heat-exchange ventilation apparatus 100. Thus, the functions and configurations other than those of the ventilation apparatus control unit 115 of the heat-exchange ventilation apparatus 100 in the ventilation and air-conditioning system 2000 according to the second embodiment are the same as those in the ventilation and air-conditioning system 1000 according to the first embodiment.

In the ventilation and air-conditioning system 1000 according to the first embodiment, the "blowing temperature assist request level" is determined based on the "start/stop" of the heat-exchange ventilation apparatus 100 and the "target blowing temperature - the outdoor temperature". For example, when the "start/stop" is "operation", and the "target blowing temperature - the outdoor temperature" is "10°C or more and less than 20°C", the "blowing temperature assist request level" is set to "low". However, if the temperature of air blown from the heat-exchange ventilation apparatus 100 does not rise even though the "blowing temperature assist request level" is set to "provided", a sense of discomfort due to cold air is given to a user immediately below the indoor outlet 105.

Against this, in the ventilation and air-conditioning system 2000 according to the second embodiment, when the temperature of air blown from the heat-exchange ventilation apparatus 100 does not rise even though the "blowing temperature assist request level" is set to "provided", the ventilation apparatus control unit 115 of the heat-exchange ventilation apparatus 100 corrects the blowing temperature assist request level, based on a predetermined condition, specifically, based on the temperature of air blown from the heat-exchange ventilation apparatus 100. The heat-exchange ventilation apparatus 100 transmits the corrected blowing temperature assist request level to the air-conditioning apparatus 200. The air-conditioning apparatus 200 performs the blowing temperature assist operation, based on the corrected blowing temperature assist request level newly received. The predetermined condition is exemplified by the case where the "temperature of air blown from the heat-exchange ventilation apparatus 100" is maintained in a predetermined range of temperatures for a predetermined "duration" or more.

Specifically, in the ventilation and air-conditioning system 2000, when a state in which the "blowing temperature - the target blowing temperature" is "less than -3°C" is continued for "15 minutes", the ventilation apparatus control unit 115 of the heat-exchange ventilation apparatus 100 determines a correction value of the "blowing temperature assist request level" that is one level higher than the value of the "blowing temperature assist request level" determined last time. The "blowing temperature" is the temperature of blown air blown from the heat-exchange ventilation apparatus 100. The initial value of the "blowing temperature assist request level" is the "blowing temperature assist request level" determined when the heat-exchange ventilation apparatus 100 starts operating. In FIG. 9, correction to raise the "blowing temperature assist request level" by one level is indicated as "+1".

The blowing temperature assist request level "being raised by one level" means the blowing temperature assist request level being changed to "low" when the blowing temperature assist request level determined last time is "none", to "medium" when the blowing temperature assist request level determined last time is "low", and to "high" when the blowing temperature assist request level determined last time is "medium", and means the blowing temperature assist request level being kept "high" when the blowing temperature assist request level determined last time is "high".

When the heat-exchange ventilation apparatus 100 performs the above correction, the blowing temperature assist operation of the air-conditioning apparatus 200 is more effectively performed for a rise in the temperature of air blown from the heat-exchange ventilation apparatus 100, raising the blowing temperature of air blown from the heat-exchange ventilation apparatus 100. This eliminates a sense of discomfort due to cold air blown from the heat-exchange ventilation apparatus 100 being given to a user immediately below the indoor outlet 105, improving the temperature comfort of air reaching the user immediately below the indoor outlet 105.

On the other hand, when setting the "blowing temperature assist request level" to "provided" causes the temperature of air blown from the heat-exchange ventilation apparatus 100 to become too high, a sense of discomfort due to hot air is given to a user immediately below the indoor outlet 105.

Against this, in the ventilation and air-conditioning system 2000 according to the second embodiment, when the temperature of air blown from the heat-exchange ventilation apparatus 100 becomes too high, the ventilation apparatus control unit 115 of the heat-exchange ventilation apparatus 100 corrects the blowing temperature assist request level, based on a predetermined condition, specifically, based on the temperature of air blown from the heat-exchange ventilation apparatus 100. The heat-exchange ventilation apparatus 100 transmits the corrected blowing temperature assist request level to the air-conditioning apparatus 200. The air-conditioning apparatus 200 performs the blowing temperature assist operation, based on the corrected blowing temperature assist request level newly received. The predetermined condition is exemplified by the case where the "temperature of air blown from the heat-exchange ventilation apparatus 100" is maintained in a predetermined range of temperatures for a predetermined "duration" or more.

Specifically, in the ventilation and air-conditioning system 2000, when a state in which the "blowing temperature - the target blowing temperature" is "more than 3°C" is continued for "15 minutes", the heat-exchange ventilation apparatus 100 determines a correction value of the "blowing temperature assist request level" that is one level lower than the initial value of the "blowing temperature assist request level" determined last time. In FIG. 9, correction to lower the "blowing temperature assist request level" by one level is indicated as "-1".

The blowing temperature assist request level "being lowered by one level" means the blowing temperature assist request level being changed to "medium" when the blowing temperature assist request level determined last time is "high", to "low" when the blowing temperature assist request level determined last time is "medium", and to "none" when the blowing temperature assist request level determined last time is "low", and means the blowing temperature assist request level being kept "none" when the blowing temperature assist request level determined last time is "none".

When the heat-exchange ventilation apparatus 100 performs the above correction, the effect of the blowing temperature assist operation of the air-conditioning apparatus 200 is mitigated, resulting in a decrease in the blowing temperature of air blown from the heat-exchange ventilation apparatus 100. This eliminates a sense of discomfort due to hot air being given to a user immediately below the indoor outlet 105, improving the temperature comfort of air reaching the user immediately below the indoor outlet 105.

(Timer)

The timer for counting 15 minutes is provided as a function of the ventilation apparatus control unit 115 of the heat-exchange ventilation apparatus 100. A timer independent of the ventilation apparatus control unit 115 may be provided. The timer starts counting when the blowing temperature of air blown from the heat-exchange ventilation apparatus 100 falls outside the range of the "target blowing temperature ± 3°C", that is, when the blowing temperature of air blown from the heat-exchange ventilation apparatus 100 falls outside the range of the "target blowing temperature - 3°C or more and the target blowing temperature + 3°C or less", and is cleared when the blowing temperature of air blown from the heat-exchange ventilation apparatus 100 falls within the range of the "target blowing temperature ± 3°C" or when the blowing temperature assist request level changes.

That is, in the above example, when the temperature of air blown from the heat-exchange ventilation apparatus 100 does not rise even though the "blowing temperature assist request level" is set to "low", and the state in which the "blowing temperature - the target blowing temperature" is "less than -3°C" is continued for "15 minutes", the heat-exchange ventilation apparatus 100 corrects the "blowing temperature assist request level" from "low" to "medium". At this point, the count time of the timer for counting 15 minutes is cleared. When the state in which the "blowing temperature - the target blowing temperature" is "less than -3°C" is further continued for "15 minutes" after the "blowing temperature assist request level" is corrected to "medium", the heat-exchange ventilation apparatus 100 further corrects the "blowing temperature assist request level" from "medium" to "high". At this point, the timer for counting 15 minutes is cleared.

On the other hand, when the state in which the "blowing temperature - the target blowing temperature" is "more than 3°C" is continued for "15 minutes" after the "blowing temperature assist request level" is corrected from "low" to "medium", the heat-exchange ventilation apparatus 100 further corrects the "blowing temperature assist request level" from "medium" to "low". At this point, the timer for counting 15 minutes is cleared. When the state in which the "blowing temperature - the target blowing temperature" is "more than 3°C" is continued for "15 minutes" after the "blowing temperature assist request level" is corrected from "medium" to "low", the heat-exchange ventilation apparatus 100 further corrects the "blowing temperature assist request level" from "low" to "none".

The conditions of "less than -3°C", the "target blowing temperature ± 3°C", "more than 3°C", and "15 minutes" are merely an example, and desired conditions may be set by a user in the ventilation apparatus control unit 115 of the heat-exchange ventilation apparatus 100.

<Modifications>

In the ventilation and air-conditioning system 2000 according to the second embodiment, the heat-exchange ventilation apparatus 100 determines the blowing temperature assist request level, but the air-conditioning apparatus 200 or the system controller 300 may determine the blowing temperature assist request level. Specifically, if the air-conditioning apparatus 200 determines the blowing temperature assist request level, the air-conditioning apparatus 200 may acquire information on the start/stop status of the heat-exchange ventilation apparatus 100, the target blowing temperature of the heat-exchange ventilation apparatus 100, and the outdoor temperature detected by the heat-exchange ventilation apparatus 100, and information on the blowing temperature calculated by the input unit 117 of the heat-exchange ventilation apparatus 100 from the heat-exchange ventilation apparatus 100 via the system communication unit 212, to determine the blowing temperature assist request level.

If the system controller 300 determines the blowing temperature assist request level, the system controller 300 may acquire information on the start/stop status of the heat-exchange ventilation apparatus 100, the target blowing temperature of the heat-exchange ventilation apparatus 100, and the outdoor temperature detected by the heat-exchange ventilation apparatus 100, and information on the blowing temperature calculated by the input unit 117 of the heat-exchange ventilation apparatus 100, to determine the blowing temperature assist request level. Then, the system controller 300 can transmit the determination result to the air-conditioning apparatus 200.

Like the ventilation and air-conditioning system 1000 according to the first embodiment, the ventilation and air-conditioning system 2000 according to the second embodiment described above has the effect of being able to improve the comfort of air blown from the heat-exchange ventilation apparatus 100 into the space to be ventilated 50.

In the ventilation and air-conditioning system 2000 according to the second embodiment, the ventilation apparatus control unit 115 of the heat-exchange ventilation apparatus 100 corrects the blowing temperature assist request level, based on the temperature of air blown from the heat-exchange ventilation apparatus 100. This allows the ventilation and air-conditioning system 2000 to more accurately improve the temperature comfort of blown air blown by the heat-exchange ventilation apparatus 100.

Third Embodiment.

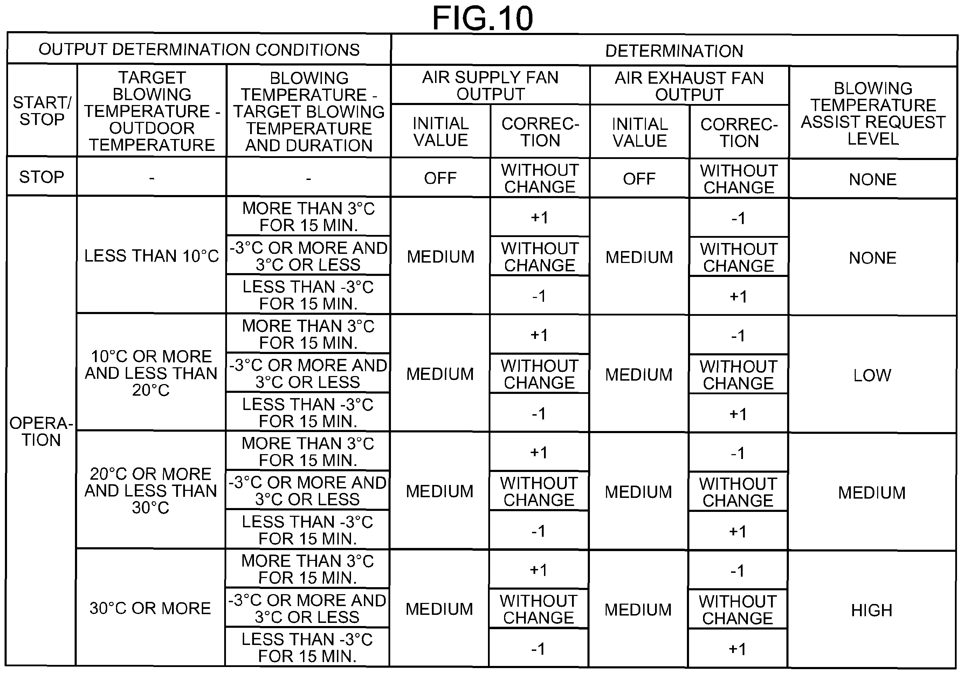

FIG. 10 is a diagram illustrating an example of determination of air exhaust fan output, air supply fan output, and blowing temperature assist request level by a control unit of a heat-exchange ventilation apparatus in a ventilation and air-conditioning system according to a third embodiment of the present invention. Note that items not specifically described are similar to those in the first embodiment, and the same functions and configurations will be described using the same reference numerals. The same functions and configurations as those of the first embodiment will not be explained.

A ventilation and air-conditioning system 3000 according to the third embodiment is different from the ventilation and air-conditioning system 1000 according to the first embodiment in that the ventilation apparatus control unit 115 of the heat-exchange ventilation apparatus 100 corrects the air supply fan output and the air exhaust fan output, based on the temperature of air blown from the heat-exchange ventilation apparatus 100. Thus, the functions and configurations other than those of the ventilation apparatus control unit 115 of the heat-exchange ventilation apparatus 100 in the ventilation and air-conditioning system 3000 according to the third embodiment are the same as those in the ventilation and air-conditioning system 1000 according to the first embodiment.

In the first embodiment, the air supply fan output and the air exhaust fan output of the heat-exchange ventilation apparatus 100 are indicated in two levels of on and off. In the third embodiment, both the air supply fan output and the

air exhaust fan output are indicated by stop, very low, low, medium, high, and very high in ascending order of air volume, and the heat-exchange ventilation apparatus 100 can be controlled in six air volume levels including stop.

In the ventilation and air-conditioning system 1000 according to the first embodiment, the heat-exchange ventilation apparatus 100 determines on and off of the air supply fan output and the air exhaust fan output, based on the "start/stop", which is an operating condition of the heat-exchange ventilation unit 102. For example, the ventilation apparatus control unit 115 of the heat-exchange ventilation apparatus 100 sets the air supply fan output and the air exhaust fan output to "on" when the "start/stop" is "operation", and sets the air supply fan output and the air exhaust fan output to "off" when the "start/stop" is "stop". However, if the temperature of air blown from the heat-exchange ventilation apparatus 100 does not rise to the target blowing temperature even though the "blowing temperature assist request level" is set to "provided", a sense of discomfort due to cold air is given to a user immediately below the indoor outlet 105.

Against this, in the ventilation and air-conditioning system 3000 according to the third embodiment, when the temperature of air blown from the heat-exchange ventilation apparatus 100 does not rise even though the "blowing temperature assist request level" is set to "provided", the ventilation apparatus control unit 115 of the heat-exchange ventilation apparatus 100 corrects the air supply fan output and the air exhaust fan output, based on a predetermined condition, specifically, based on the temperature of air blown from the heat-exchange ventilation apparatus 100. The ventilation apparatus control unit 115 of the heat-exchange ventilation apparatus 100 controls the operation of the heat-exchange ventilation apparatus 100 with the corrected air supply fan output and air exhaust fan output. The predetermined condition is exemplified by the case where the "temperature of air blown from the heat-exchange ventilation apparatus 100" is maintained in a predetermined range of temperatures for a predetermined "duration" or more.

Specifically, in the ventilation and air-conditioning system 3000, when a state in which the "blowing temperature - the target blowing temperature" is "less than -3°C" is continued for "15 minutes", the ventilation apparatus control unit 115 of the heat-exchange ventilation apparatus 100 determines a correction value of the "air supply fan output" that is one level lower than the value of the "air supply fan output" determined last time, and determines a correction value of the "air exhaust fan output" that is one level higher than the value of the "air exhaust fan output" determined last time. In FIG. 10, correction to raise the "blowing temperature assist request level" by one level is indicated as "+1".

The "air supply fan output" and the "air exhaust fan output" being "raised by one level" means the fan output being changed to "low" when the fan output determined last time is "very low", to "medium" when the fan output determined last time is "low", to "high" when the fan output determined last time is "medium", and to "very high" when the fan output determined last time is "high", and means the fan output being kept "very high" when the fan output determined last time is "very high".

The "air supply fan output" and the "air exhaust fan output" being "lowered by one level" means the fan output being changed to "high" when the fan output determined last time is "very high", to "medium" when the fan output determined last time is "high", to "low" when the fan output determined last time is "medium", and to "very low" when the fan output determined last time is "low", and means the fan output being kept "very low" when the fan output determined last time is "very low".

Here, the initial values of the "air supply fan output" and the "air exhaust fan output" when the heat-exchange ventilation apparatus 100 operates are set to "medium".

When the heat-exchange ventilation apparatus 100 performs the above correction, the temperature exchange efficiency of the heat-exchange element 140 of the heat-exchange ventilation apparatus 100 changes, so that the blowing temperature of blown air blown by the heat-exchange ventilation apparatus 100 also changes. Specifically, the more the air supply fan output is lowered, or the more the air exhaust fan output is raised, the higher the temperature exchange efficiency on the air supply side of the heat-exchange element 140, the larger the amount of heat recovered from the indoor air, and thus the higher the temperature of air blown from the heat-exchange ventilation apparatus 100 changes to. That is, even when the blowing temperature assist operation of the air-conditioning apparatus 200 is not sufficient, the blowing temperature of the heat-exchange ventilation apparatus 100 is raised by the heat-exchange ventilation apparatus 100 correcting the air supply fan output and the air exhaust fan output.

This eliminates a sense of discomfort due to cold air blown from the heat-exchange ventilation apparatus 100 being given to a user immediately below the indoor outlet 105, improving the temperature comfort of air reaching the user immediately below the indoor outlet 105.

On the other hand, when setting the "blowing temperature assist request level" to "provided" causes the temperature of air blown from the heat-exchange ventilation apparatus 100 to become too high, a sense of discomfort due to hot air is given to a user immediately below the indoor outlet 105.

Against this, in the ventilation and air-conditioning system 3000 according to the third embodiment, when the temperature of air blown from the heat-exchange ventilation apparatus 100 becomes too high, the ventilation apparatus control unit 115 of the heat-exchange ventilation apparatus 100 corrects the air supply fan output and the air exhaust fan output, based on a predetermined condition, specifically, based on the temperature of air blown from the heat-exchange ventilation apparatus 100. The ventilation apparatus control unit 115 of the heat-exchange ventilation apparatus 100 controls the operation of the heat-exchange ventilation apparatus 100 with the corrected air supply fan output and air exhaust fan output. The predetermined condition is exemplified by the case where the "temperature of air blown from the heat-exchange ventilation apparatus 100" is maintained in a predetermined range of temperatures for a predetermined "duration" or more.

Specifically, in the ventilation and air-conditioning system 3000, when a state in which the "blowing temperature - the target blowing temperature" is "more than 3°C" is continued for "15 minutes", the ventilation apparatus control unit 115 of the heat-exchange ventilation apparatus 100 determines a correction value of the "air supply fan output" that is one level higher than the value of the "air supply fan output" determined last time, and determines a correction value of the "air exhaust fan output" that is one level lower than the value of the "air exhaust fan output" determined last time.

When the heat-exchange ventilation apparatus 100 performs the above correction, the temperature exchange efficiency of the heat-exchange element 140 of the heat-exchange ventilation apparatus 100 changes, so that the blowing temperature of blown air blown by the heat-exchange ventilation apparatus 100 also changes. Specifically, the more the air supply fan output is raised, or the more the air exhaust fan output is lowered, the lower the temperature exchange efficiency on the air supply side of the heat-exchange element 140, the smaller the amount of heat recovered from the indoor air, and thus the lower the temperature of air blown from the heat-exchange ventilation apparatus 100 changes to. That is, even when the blowing temperature assist operation of the air-conditioning apparatus 200 is excessive, the blowing temperature of the heat-exchange ventilation apparatus 100 is lowered by the heat-exchange ventilation apparatus 100 correcting the air supply fan output and the air exhaust fan output.

This eliminates a sense of discomfort due to hot air blown from the heat-exchange ventilation apparatus 100 being given to a user immediately below the indoor outlet 105, improving the temperature comfort of air reaching the user immediately below the indoor outlet 105.

(Timer)

As in the second embodiment, the timer for counting 15 minutes described above starts counting when the blowing temperature falls outside the range of the "target blowing temperature ± 3°C", that is, when the blowing temperature of air blown from the heat-exchange ventilation apparatus 100 falls outside the range of the "target blowing temperature - 3°C or more and the target blowing temperature + 3°C or less", and is cleared when the blowing temperature of air blown from the heat-exchange ventilation apparatus 100 falls within the range of the "target blowing temperature ± 3°C", or when the blowing temperature assist request level changes.

That is, in the above example, when the temperature of air blown from the heat-exchange ventilation apparatus 100 does not rise even though the "blowing temperature assist request level" is set to "provided", and the state in which the "blowing temperature - the target blowing temperature" is "less than -3°C" is continued for "15 minutes", the heat-exchange ventilation apparatus 100 corrects the "air supply fan output" from "medium" to "low", and the "air exhaust fan output" from "medium" to "high" for operation. At this point, the count time of the timer for counting 15 minutes is cleared.

When the state in which the "blowing temperature - the target blowing temperature" is "less than -3°C" is further continued for "15 minutes" after the "air supply fan output" is corrected to "low" and the "air exhaust fan output" is corrected to "high", the heat-exchange ventilation apparatus 100 further corrects the "air supply fan output" from "low" to "very low" and the "air exhaust fan output" from "high" to "very high" for operation. At this point, the count time of the timer for counting 15 minutes is cleared.

When the state in which the "blowing temperature - the target blowing temperature" is "more than 3°C" is continued for "15 minutes" after the "air supply fan output" is corrected to "very low" and the "air exhaust fan output" is corrected to "very high", the heat-exchange ventilation apparatus 100 corrects the "air supply fan output" from "very low" to "low" and the "air exhaust fan output" from "very high" to "high" for operation. At this point, the count time of the timer for counting 15 minutes is cleared.

When the state in which the "blowing temperature - the target blowing temperature" is "more than 3°C" is continued for "15 minutes" after the "air supply fan output" is corrected to "low" and the "air exhaust fan output" is corrected to "high", the heat-exchange ventilation apparatus 100 corrects the "air supply fan output" from "low" to "medium" and the "air exhaust fan output" from "high" to "medium" for operation. At this point, the count time of the timer for counting 15 minutes is cleared.

When the state in which the "blowing temperature - the target blowing temperature" is "more than 3°C" is continued for "15 minutes" after the "air supply fan output" is corrected to "medium" and the "air exhaust fan output" is corrected to "medium", the heat-exchange ventilation apparatus 100 corrects the "air supply fan output" from "medium" to "high" and the "air exhaust fan output" from "medium" to "low" for operation. At this point, the count time of the timer for counting 15 minutes is cleared.

When the state in which the "blowing temperature - the target blowing temperature" is "more than 3°C" is continued for "15 minutes" after the "air supply fan output" is corrected to "high" and the "air exhaust fan output" is corrected to "low", the heat-exchange ventilation apparatus 100 corrects the "air supply fan output" from "high" to "very high" and the "air exhaust fan output" from "low" to "very low" for operation.

<Modifications>

In the ventilation and air-conditioning system 3000 according to the third embodiment, the heat-exchange ventilation apparatus 100 corrects the air supply fan output and the air exhaust fan output at the same time, but may correct and change only one of the air supply fan output and the air exhaust fan output. This eliminates a rapid change in the air volume balance between the air supply fan output and the air exhaust fan output, thus provides a moderate effect on the temperature of blown air blown by the heat-exchange ventilation apparatus 100, and allows the probability of blown air producing so-called hunting to be lowered.

When the difference between the blowing temperature of blown air blown by the heat-exchange ventilation apparatus 100 and the target blowing temperature is large, the air supply fan output and the air exhaust fan output may be corrected at the same time. When the difference between the blowing temperature of blown air blown by the heat-exchange ventilation apparatus 100 and the target blowing temperature is small, only one of the air supply fan output and the air exhaust fan output may be corrected.

When the difference between the blowing temperature of blown air blown by the heat-exchange ventilation apparatus 100 and the target blowing temperature is significantly large, the air supply fan output and the air exhaust fan output may be corrected at the same time by two levels instead of one level.

Like the ventilation and air-conditioning system 1000 according to the first embodiment, the ventilation and air-conditioning system 3000 according to the third embodiment described above has the effect of being able to improve the comfort of air blown from the heat-exchange ventilation apparatus 100 into the space to be ventilated 50.

In the ventilation and air-conditioning system 3000 according to the third embodiment, the ventilation apparatus control unit 115 of the heat-exchange ventilation apparatus 100 corrects the air supply fan output and the air exhaust fan output, based on the temperature of air blown from the heat-exchange ventilation apparatus 100. Consequently, in the ventilation and air-conditioning system 3000, even when the blowing temperature assist operation of the air-conditioning apparatus 200 has not optimized the temperature comfort of blown air blown by the heat-exchange ventilation apparatus 100, correction toward optimizing the temperature comfort of blown air blown by the heat-exchange ventilation apparatus 100 can be repeatedly performed.

Fourth Embodiment.

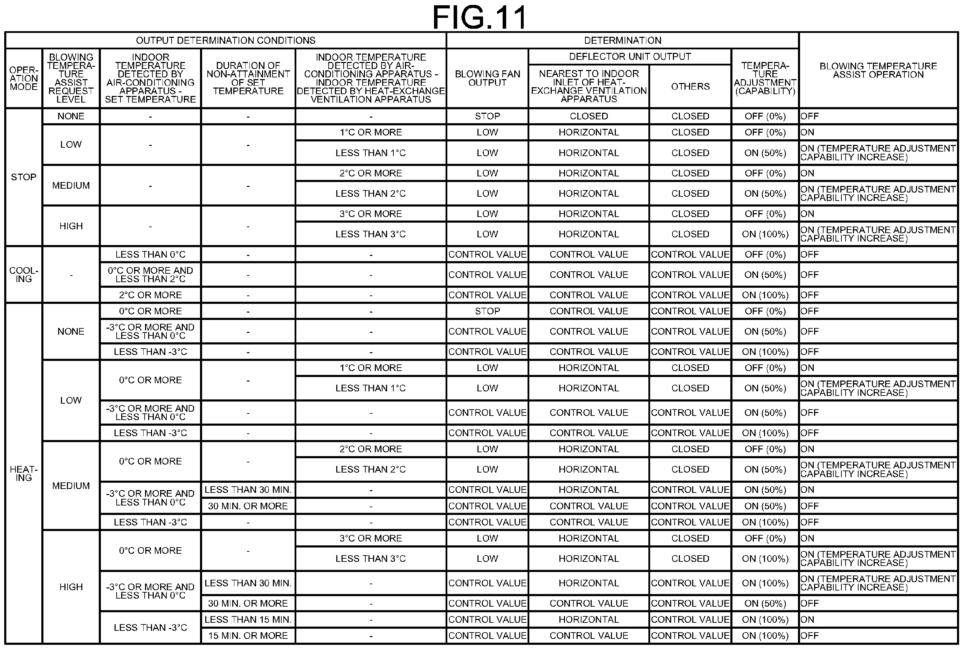

FIG. 11 is a diagram illustrating an example of determination of blowing fan output, deflector unit output, and temperature adjustment capability by an indoor unit control unit of an air-conditioning apparatus in a ventilation and air-conditioning system according to a fourth embodiment of the present invention. Note that items not specifically described are similar to those in the first embodiment, and the same functions and configurations will be described using the same reference numerals. The same functions and configurations as those of the first embodiment will not be explained.

A ventilation and air-conditioning system 4000 according to the fourth embodiment is different from the ventilation and air-conditioning system 1000 according to the first embodiment in that the indoor unit control unit 215 of the air-conditioning apparatus 200 determines the temperature adjustment capability in the blowing temperature assist operation, additionally using information on the difference between the indoor temperature detected by the air-conditioning apparatus 200 and the indoor temperature detected by the heat-exchange ventilation apparatus 100. Thus, the functions and configurations in the ventilation and air-conditioning system 4000 according to the fourth embodiment other than those of the indoor unit control unit 215 of the air-conditioning apparatus 200 are the same as those in the ventilation and air-conditioning system 1000 according to the first embodiment.

In the ventilation and air-conditioning system 1000 according to the first embodiment, when the blowing temperature assist request level is set to "provided" while the operation mode of the air-conditioning apparatus 200 is "stop" or while the indoor temperature detected by the air-conditioning apparatus 200 has reached the set temperature, the blowing temperature assist operation can be performed with the temperature adjustment switched to "on". A case where the indoor temperature detected by the air-conditioning apparatus 200 has reached the set temperature is a case where the "indoor temperature detected by the air-conditioning apparatus - the set temperature" is 0°C or more. However, when the difference between the indoor temperature detected by the air-conditioning apparatus 200 and the indoor temperature detected by the heat-exchange ventilation apparatus 100 is equal to or more than a predetermined threshold temperature, the improvement of the temperature comfort of blown air blown by the heat-exchange ventilation apparatus 100 can be expected even using warm air accumulated in the vicinity of the ceiling of the air-conditioning apparatus 200.

The threshold temperature here is the threshold of the difference between the indoor temperature detected by the air-conditioning apparatus 200 and the indoor temperature detected by the heat-exchange ventilation apparatus 100, for the indoor unit control unit 215 of the air-conditioning apparatus 200 to determine whether or not to turn on the temperature adjustment of the air-conditioning apparatus 200.

Thus, the ventilation and air-conditioning system 4000 according to the fourth embodiment performs the blowing temperature assist operation with the temperature adjustment remaining "off". On the other hand, when the difference between the indoor temperature detected by the air-conditioning apparatus 200 and the indoor temperature detected by the heat-exchange ventilation apparatus 100 is less than the predetermined threshold temperature, the temperature of air accumulated in the vicinity of the ceiling near the air-conditioning apparatus 200 is adjusted to positively raise the temperature of air to be drawn in by the heat-exchange ventilation apparatus 100 to enhance the blowing temperature assist effect. This allows the ventilation and air-conditioning system 4000 to perform the blowing temperature assist operation while limiting the execution of the blowing temperature assist operation in cases where the temperature adjustment of the air-conditioning apparatus 200 is turned "on", thus allowing an improvement in the temperature comfort of blown air blown by the heat-exchange ventilation apparatus 100 with more energy savings.

When the blowing temperature assist request level is increased, it is necessary to further improve the temperature comfort of blown air blown by the heat-exchange ventilation apparatus 100. Thus, the threshold to determine whether to turn on or off the temperature adjustment is changed so that the temperature adjustment of the air-conditioning apparatus 200 is more easily turned on.

The example illustrated in FIG. 11 will be specifically described. First, a case where the operation mode is "stop" and the blowing temperature assist request level is "low" will be described. When the "indoor temperature detected by the air-conditioning apparatus - the indoor temperature detected by the heat-exchange ventilation apparatus", which is the difference between the indoor temperature detected by the air-conditioning apparatus 200 and the indoor temperature detected by the heat-exchange ventilation apparatus 100, is "1°C or more", the indoor unit control unit 215 sets the temperature adjustment to "off" and sets the blowing temperature assist operation to "on". On the other hand, when the "indoor temperature detected by the air-conditioning apparatus - the indoor temperature detected by the heat-exchange ventilation apparatus" is "less than 1°C", the indoor unit control unit 215 sets the temperature adjustment to "on at 50%" and sets the blowing temperature assist operation to "on".

A case where the operation mode is "stop" and the blowing temperature assist request level is "medium" will be described. When the "indoor temperature detected by the air-conditioning apparatus - the indoor temperature detected by the heat-exchange ventilation apparatus" is "2°C or more", the indoor unit control unit 215 sets the temperature adjustment to "off" and sets the blowing temperature assist operation to "on". On the other hand, when the "indoor temperature detected by the air-conditioning apparatus - the indoor temperature detected by the heat-exchange ventilation apparatus" is "less than 2°C", the indoor unit control unit 215 sets the temperature adjustment to "on at 50%" and sets the blowing temperature assist operation to "on".

A case where the operation mode is "stop" and the blowing temperature assist request level is "high" will be described. When the "indoor temperature detected by the air-conditioning apparatus - the indoor temperature detected by the heat-exchange ventilation apparatus" is "3°C or more", the indoor unit control unit 215 sets the temperature adjustment to "off" and sets the blowing temperature assist operation to "on". On the other hand, when the "indoor temperature detected by the air-conditioning apparatus - the indoor temperature detected by the heat-exchange ventilation apparatus" is "less than 3°C", the indoor unit control unit 215 sets the temperature adjustment to "on at 100%" and sets the blowing temperature assist operation to "on".

Next, cases where the operation mode is "heating" will be described. A case where the operation mode is "heating", the blowing temperature assist request level is "low", and the "indoor temperature detected by the air-conditioning apparatus - the set temperature" is "0°C or more" will be described. When the "indoor temperature detected by the air-conditioning apparatus - the indoor temperature detected by the heat-exchange ventilation apparatus" is "1°C or more", the indoor unit control unit 215 sets the temperature adjustment to "off" and sets the blowing temperature assist operation to "on". On the other hand, when the "indoor temperature detected by the air-conditioning apparatus - the indoor temperature detected by the heat-exchange ventilation apparatus" is "less than 1°C", the indoor unit control unit 215 sets the temperature adjustment to "on at 50%" and sets the blowing temperature assist operation to "on".

A case where the operation mode is "heating", the blowing temperature assist request level is "medium", and the "indoor temperature detected by the air-conditioning apparatus - the set temperature" is "0°C or more" will be described. When the "indoor temperature detected by the air-conditioning apparatus - the indoor temperature detected by the heat-exchange ventilation apparatus" is "2°C or more", the indoor unit control unit 215 sets the temperature adjustment to "off" and sets the blowing temperature assist operation to "on". On the other hand, when the "indoor temperature detected by the air-conditioning apparatus - the indoor temperature detected by the heat-exchange ventilation apparatus" is "less than 2°C", the indoor unit control unit 215 sets the temperature adjustment to "on at 50%" and sets the blowing temperature assist operation to "on".

A case where the operation mode is "heating", the blowing temperature assist request level is "high", and the "indoor temperature detected by the air-conditioning apparatus - the set temperature" is "0°C or more" will be described. When the "indoor temperature detected by the air-conditioning apparatus - the indoor temperature detected by the heat-exchange ventilation apparatus" is "3°C or more", the indoor unit control unit 215 sets the temperature adjustment to "off" and sets the blowing temperature assist operation to "on". On the other hand, when the "indoor temperature detected by the air-conditioning apparatus - the indoor temperature detected by the heat-exchange ventilation apparatus" is "less than 3°C", the indoor unit control unit 215 sets the temperature adjustment to "on at 100%" and sets the blowing temperature assist operation to "on".

FIG. 11 is the same as FIG. 5 except for the above-described determination.

<Modifications>

When the blowing temperature assist request level is high, the outdoor temperature is low, and a great sense of discomfort will be given to a user immediately below the indoor outlet 105 of the heat-exchange ventilation apparatus 100 without a blowing temperature assist, and the air-conditioning apparatus 200 needs to further raise the priority of the blowing temperature assist operation. Therefore, in the ventilation and air-conditioning system 4000 according to the fourth embodiment, when the blowing temperature assist request level is high, the threshold temperature to determine whether or not to turn on the temperature adjustment of the air-conditioning apparatus 200 is changed such that the temperature adjustment of the air-conditioning apparatus 200 is more easily turned on. However, the threshold temperature to determine whether or not to turn on the temperature adjustment may be fixed regardless of the blowing temperature assist request level.

For example, when the threshold temperature to determine whether or not to turn on the temperature adjustment of the air-conditioning apparatus 200 is fixed to 1°C, the ventilation and air-conditioning system 4000 can continue the blowing temperature assist operation with the temperature adjustment of the air-conditioning apparatus 200 "off" until the difference between the indoor temperature detected by the air-conditioning apparatus 200 and the indoor temperature detected by the heat-exchange ventilation apparatus 100 becomes less than 1°C, and thus can reduce power consumption.

When the threshold temperature to determine whether or not to turn on the temperature adjustment of the air-conditioning apparatus 200 is fixed to 3°C, the ventilation and air-conditioning system 4000 performs the blowing temperature assist operation with the temperature adjustment of the air-conditioning apparatus 200 on when the difference between the indoor temperature detected by the air-conditioning apparatus 200 and the indoor temperature detected by the heat-exchange ventilation apparatus 100 becomes less than 3°C. Consequently, the ventilation and air-conditioning system 4000 can warm air accumulated in the vicinity of the ceiling to positively raise the temperature of air to be drawn in by the heat-exchange ventilation apparatus 100 to further enhance the temperature comfort of blown air blown by the heat-exchange ventilation apparatus 100.

Like the ventilation and air-conditioning system 1000 according to the first embodiment, the ventilation and air-conditioning system 4000 according to the fourth embodiment described above has the effect of being able to improve the comfort of air blown from the heat-exchange ventilation apparatus 100 into the space to be ventilated 50.

The ventilation and air-conditioning system 4000 according to the fourth embodiment adds the information on the difference between the indoor temperature detected by the air-conditioning apparatus 200 and the indoor temperature detected by the heat-exchange ventilation apparatus 100 to the determination criteria for the temperature adjustment in the ventilation and air-conditioning system 1000 according to the first embodiment described above, to determine whether or not to turn on the temperature adjustment at the time of the blowing temperature assist operation. That is, in the ventilation and air-conditioning system 4000, the air-conditioning apparatus 200 determines whether or not to turn on the temperature adjustment at the time of the blowing temperature assist operation, based also on the difference between the indoor temperature detected by the air-conditioning apparatus 200 and the indoor temperature detected by the heat-exchange ventilation apparatus 100. Consequently, the ventilation and air-conditioning system 4000 can reduce the switching of the temperature adjustment from "off" to "on" for the blowing temperature assist operation. That is, the ventilation and air-conditioning system 4000 can improve the temperature comfort of blown air blown by the heat-exchange ventilation apparatus 100 with more energy savings.

Third Embodiment.

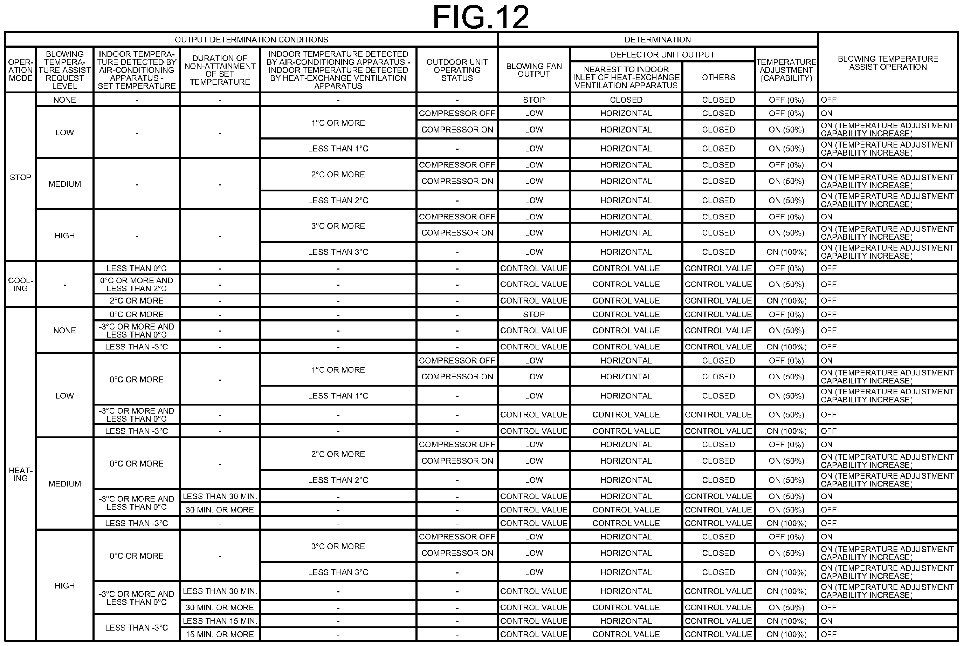

FIG. 12 is a diagram illustrating an example of determination of blowing fan output, deflector unit output, and temperature adjustment capability by an indoor unit control unit of an air-conditioning apparatus in a ventilation and air-conditioning system according to a fifth embodiment of the present invention. Note that items not specifically described are similar to those in the fourth embodiment, and the same functions and configurations will be described using the same reference numerals. The same functions and configurations as those of the fourth embodiment will not be explained.

A ventilation and air-conditioning system 5000 according to the fifth embodiment is different from the ventilation and air-conditioning system 4000 according to the fourth embodiment in that the indoor unit control unit 215 of the air-conditioning apparatus 200 determines the temperature adjustment capability in the blowing temperature assist operation, additionally using information on the operating status of the outdoor unit 203 of the air-conditioning apparatus 200. Thus, the functions and configurations in the ventilation and air-conditioning system 5000 according to the fifth embodiment other than those of the indoor unit control unit 215 of the air-conditioning apparatus 200 are the same as those in the ventilation and air-conditioning system 4000 according to the fourth embodiment.

In the ventilation and air-conditioning system 4000 according to the fourth embodiment described above, when the blowing temperature assist request level is set to "provided", if the difference between the indoor temperature detected by the air-conditioning apparatus 200 and the indoor temperature detected by the heat-exchange ventilation apparatus 100 is equal to or more than the predetermined threshold temperature, the improvement of the temperature comfort of blown air blown by the heat-exchange ventilation apparatus 100 can be expected using warm air accumulated in the vicinity of the ceiling. Thus, the ventilation and air-conditioning system 4000 performs the blowing temperature assist operation with the temperature adjustment of the air-conditioning apparatus 200 remaining "off". If the difference between the indoor temperature detected by the air-conditioning apparatus 200 and the indoor temperature detected by the heat-exchange ventilation apparatus 100 is less than the threshold temperature, the ventilation and air-conditioning system 4000 according to the fourth embodiment described above adjusts the temperature of air accumulated in the vicinity of the ceiling to positively raise the temperature of air to be drawn in by the heat-exchange ventilation apparatus 100 to improve the temperature comfort of blown air blown by the heat-exchange ventilation apparatus 100.

However, assuming a ventilation and air-conditioning system in which a plurality of air-conditioning apparatuses 200 are connected to a single outdoor unit 203, even when the temperature adjustment of one of the air-conditioning apparatuses 200 is "off", there can be a "compressor on" state in which the compressor 271 of the connected outdoor unit 203 is on, depending on the temperature adjustment status of another air-conditioning apparatus 200.

Therefore, even when the difference between the indoor temperature detected by the air-conditioning apparatus 200 and the indoor temperature detected by the heat-exchange ventilation apparatus 100 is equal to or more than the predetermined threshold temperature, if the operating status of the outdoor unit 203 is "compressor on", a ventilation and air-conditioning system 5000 according to a fifth embodiment further adjusts the temperature of air accumulated in the vicinity of the ceiling to positively raise the temperature of air to be drawn in by the heat-exchange ventilation apparatus 100 to improve the temperature comfort of blown air blown by the heat-exchange ventilation apparatus 100.

On the other hand, if the operating status of the outdoor unit 203 is "compressor off", the ventilation and air-conditioning system 5000 uses already warm air accumulated in the vicinity of the ceiling to improve the temperature comfort of blown air blown by the heat-exchange ventilation apparatus 100 without forcibly restarting the outdoor unit 203.

Thus, even when the difference between the indoor temperature detected by the air-conditioning apparatus 200 and the indoor temperature detected by the heat-exchange ventilation apparatus 100 is equal to or more than the threshold temperature, the ventilation and air-conditioning system 5000 can quickly improve the temperature comfort of blown air blown by the heat-exchange ventilation apparatus 100 by further warming air in the vicinity of the ceiling positively without causing a large increase in power consumption accompanying the restarting of the outdoor unit 203.

When the difference between the indoor temperature detected by the air-conditioning apparatus 200 and the indoor temperature detected by the heat-exchange ventilation apparatus 100 is equal to or more than the threshold temperature, the temperature of air accumulated in the vicinity of the ceiling is high in the first place. Thus, when the difference between the indoor temperature detected by the air-conditioning apparatus 200 and the indoor temperature detected by the heat-exchange ventilation apparatus 100 is equal to more than the threshold temperature, the ventilation and air-conditioning system 5000 sets the temperature adjustment capability to "on at 50%" even when the temperature adjustment is turned on at the time of the blowing temperature assist operation, thereby reducing an increase in the power consumption of the entire ventilation and air-conditioning system 5000 to the bare minimum.

The example illustrated in FIG. 12 will be specifically described. The indoor unit control unit 215 of the air-conditioning apparatus 200 acquires information on the operating status of the outdoor unit 203 via the outdoor unit communication unit 213.

First, a case will be described where the operation mode is "stop", the blowing temperature assist request level is "low", and the "indoor temperature detected by the air-conditioning apparatus - the indoor temperature detected by the heat-exchange ventilation apparatus", which is the difference between the indoor temperature detected by the air-conditioning apparatus 200 and the indoor temperature detected by the heat-exchange ventilation apparatus 100, is "1°C or more". When the operating status of the outdoor unit 203 is "compressor off", the indoor unit control unit 215 sets the temperature adjustment to "off" and sets the blowing temperature assist operation to "on". On the other hand, when the operating status of the outdoor unit 203 is "compressor on", the indoor unit control unit 215 sets the temperature adjustment to "on at 50%" and sets the blowing temperature assist operation to "on".

A case will be described where the operation mode is "stop", the blowing temperature assist request level is "medium", and the "indoor temperature detected by the air-conditioning apparatus - the indoor temperature detected by the heat-exchange ventilation apparatus" is "2°C or more". When the operating status of the outdoor unit 203 is "compressor off", the indoor unit control unit 215 sets the temperature adjustment to "off" and sets the blowing temperature assist operation to "on". On the other hand, when the operating status of the outdoor unit 203 is "compressor on", the indoor unit control unit 215 sets the temperature adjustment to "on at 50%" and sets the blowing temperature assist operation to "on".

A case will be described where the operation mode is "stop", the blowing temperature assist request level is "high", and the "indoor temperature detected by the air-conditioning apparatus - the indoor temperature detected by the heat-exchange ventilation apparatus" is "3°C or more". When the operating status of the outdoor unit 203 is "compressor off", the indoor unit control unit 215 sets the temperature adjustment to "off" and sets the blowing temperature assist operation to "on". On the other hand, when the operating status of the outdoor unit 203 is "compressor on", the indoor unit control unit 215 sets the temperature adjustment to "on at 50%" and sets the blowing temperature assist operation to "on".

Next, cases where the operation mode is "heating" will be described. A case will be described where the operation mode is "heating", the blowing temperature assist request level is "low", the "indoor temperature detected by the air-conditioning apparatus - the set temperature" is "0°C or more", and the "indoor temperature detected by the air-conditioning apparatus - the indoor temperature detected by the heat-exchange ventilation apparatus" is "1°C or more". When the operating status of the outdoor unit 203 is "compressor off", the indoor unit control unit 215 sets the temperature adjustment to "off" and sets the blowing temperature assist operation to "on". On the other hand, when the operating status of the outdoor unit 203 is "compressor on", the indoor unit control unit 215 sets the temperature adjustment to "on at 50%" and sets the blowing temperature assist operation to "on".

A case will be described where the operation mode is "heating", the blowing temperature assist request level is "medium", the "indoor temperature detected by the air-conditioning apparatus - the set temperature" is "0°C or more", and the "indoor temperature detected by the air-conditioning apparatus - the indoor temperature detected by the heat-exchange ventilation apparatus" is "2°C or more". When the operating status of the outdoor unit 203 is "compressor off", the indoor unit control unit 215 sets the temperature adjustment to "off" and sets the blowing temperature assist operation to "on". On the other hand, when the operating status of the outdoor unit 203 is "compressor on", the indoor unit control unit 215 sets the temperature adjustment to "on at 50%" and sets the blowing temperature assist operation to "on".

A case will be described where the operation mode is "heating", the blowing temperature assist request level is "high", the "indoor temperature detected by the air-conditioning apparatus - the set temperature" is "0°C or more", and the "indoor temperature detected by the air-conditioning apparatus - the indoor temperature detected by the heat-exchange ventilation apparatus" is "3°C or more". When the operating status of the outdoor unit 203 is "compressor off", the indoor unit control unit 215 sets the temperature adjustment to "off" and sets the blowing temperature assist operation to "on". On the other hand, when the operating status of the outdoor unit 203 is "compressor on", the indoor unit control unit 215 sets the temperature adjustment to "on at 50%" and sets the blowing temperature assist operation to "on".

FIG. 12 is the same as FIG. 11 except for the above determination.

<Modifications>

In the ventilation and air-conditioning system 5000 according to the fifth embodiment, the air-conditioning apparatus 200 determines on or off of the temperature adjustment, based on the operating status of the outdoor unit 203, that is, on or off of the compressor 271. However, the temperature adjustment capability of the air-conditioning apparatus 200 may be determined more finely from the relationship between the operating frequency of the compressor 271 and the energy efficiency of the compressor 271 in the outdoor unit 203.

Specifically, the indoor unit control unit 215 of the air-conditioning apparatus 200 acquires, from the outdoor unit 203, information on the current operating frequency of the compressor 271 and information on the operating frequency of the compressor 271 at which the energy efficiency of the compressor 271 is maximized. The indoor unit control unit 215 performs control to turn on the temperature adjustment when the energy efficiency of the compressor 271 is increased by turning on the temperature adjustment. On the other hand, when the energy efficiency of the compressor 271 is decreased by turning on the temperature adjustment, the indoor unit control unit 215 performs control to turn on the temperature adjustment if the energy efficiency of the compressor 271 becomes equal to or more than a predetermined threshold by turning on the temperature adjustment, and to turn off the temperature adjustment if the energy efficiency of the compressor 271 becomes less than the threshold by turning on the temperature adjustment.

Furthermore, in the fifth embodiment, the temperature adjustment capability when the temperature adjustment is on has two values of 50% and 100%. However, if the temperature adjustment capability can be set more finely, the temperature adjustment capability may be adjusted more finely for adjustment to make the energy efficiency fall within a specified range. This allows the blowing temperature assist operation to be performed based on the energy efficiency of the compressor 271 of the outdoor unit 203, allowing reduction of an increase in the power consumption of the entire ventilation and air-conditioning system 5000 to the bare minimum.

In the ventilation and air-conditioning system 5000 according to the fifth embodiment, the air-conditioning apparatus 200 determines whether or not to turn on the temperature adjustment, using the difference between the indoor temperature detected by the air-conditioning apparatus 200 and the indoor temperature detected by the heat-exchange ventilation apparatus 100. However, if the temperature adjustment capability is determined without using information on the difference between the indoor temperature detected by the air-conditioning apparatus 200 and the indoor temperature detected by the heat-exchange ventilation apparatus 100, the ventilation and air-conditioning system 5000 can obtain the effect when whether or not to turn on the temperature adjustment is determined based on the operating status of the outdoor unit 203 connected to the indoor unit 202 at the time of the blowing temperature assist operation, as described above.

Like the ventilation and air-conditioning system 1000 according to the first embodiment, the ventilation and air-conditioning system 5000 according to the fifth embodiment described above has the effect of being able to improve the comfort of air blown from the heat-exchange ventilation apparatus 100 into the space to be ventilated 50.

The ventilation and air-conditioning system 5000 according to the fifth embodiment adds the information on the operating status of the outdoor unit 203 of the air-conditioning apparatus 200 to the determination criteria for the temperature adjustment in the ventilation and air-conditioning system 4000 according to the fourth embodiment described above, to determine whether or not to turn on the temperature adjustment at the time of the blowing temperature assist operation. That is, in the ventilation and air-conditioning system 5000, the air-conditioning apparatus 200 determines whether or not to turn on the temperature adjustment at the time of the blowing temperature assist operation, based also on the operating status of the outdoor unit 203 connected to the indoor unit 202. Thus, even when the difference between the indoor temperature detected by the air-conditioning apparatus 200 and the indoor temperature detected by the heat-exchange ventilation apparatus 100 is equal to or more than the predetermined threshold temperature, the ventilation and air-conditioning system 5000 can more quickly improve the temperature comfort of blown air blown by the heat-exchange ventilation apparatus 100 by further warming air in the vicinity of the ceiling positively without causing a large increase in power consumption accompanying the restarting of the outdoor unit 203.

Sixth Embodiment.

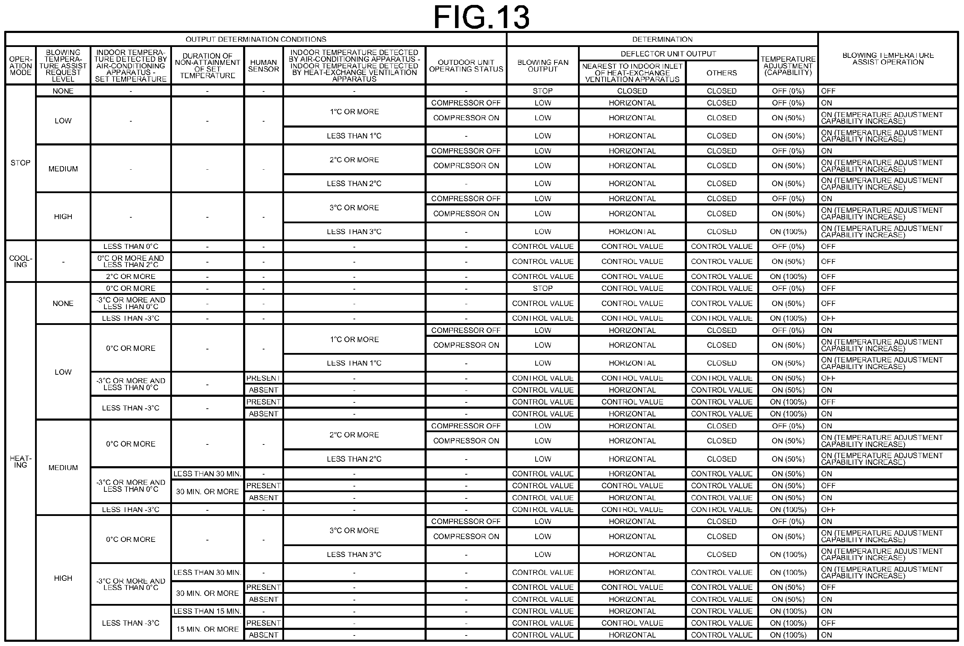

FIG. 13 is a diagram illustrating an example of determination of blowing fan output, deflector unit output, and temperature adjustment capability by an indoor unit control unit of an air-conditioning apparatus in a ventilation and air-conditioning system according to a sixth embodiment of the present invention. Note that items not specifically described are similar to those in the fifth embodiment, and the same functions and configurations will be described using the same reference numerals. The same functions and configurations as those of the fifth embodiment will not be explained. "Present" in a human sensor column in FIG. 13 indicates that a human sensor has detected the presence of a person in the area to be air-conditioned by the air-conditioning apparatus 200. "Absent" in the human sensor column in FIG. 13 indicates that the human sensor has not detected the presence of a person in the area to be air-conditioned by the air-conditioning apparatus 200.

A ventilation and air-conditioning system 6000 according to the sixth embodiment is different from the ventilation and air-conditioning system 5000 according to the fifth embodiment in that the indoor unit control unit 215 of the air-conditioning apparatus 200 determines the temperature adjustment capability in the blowing temperature assist operation, based also on the detected condition of the human sensor additionally connected to the air-conditioning apparatus 200. That is, the ventilation and air-conditioning system 6000 determines the temperature adjustment capability in the blowing temperature assist operation, based also on the result of detection by the human sensor, in addition to the conditions of the operation mode of the air-conditioning apparatus 200, the difference between the indoor temperature detected by the air-conditioning apparatus 200 and the set temperature, the time during which the indoor temperature detected by the air-conditioning apparatus 200 has not reached the set temperature, and the "indoor temperature detected by the air-conditioning apparatus - the indoor temperature detected by the heat-exchange ventilation apparatus".

The human sensor can detect a person present in the area to be air-conditioned by the connected air-conditioning apparatus 200. The ventilation and air-conditioning system 6000 according to the sixth embodiment can detect whether a person is present in an area to be air-conditioned by each of the four indoor outlets 205A, 205B, 205C, and 205D.

In the ventilation and air-conditioning system 5000 according to the fifth embodiment described above, there are output determination conditions for the determination that the improvement of the temperature comfort of the area to be air-conditioned is prioritized over the temperature comfort improvement of blown air blown by the heat-exchange ventilation apparatus 100, from the difference between the indoor temperature detected by the air-conditioning apparatus 200 and the set temperature, and the time during which the indoor temperature detected by the air-conditioning apparatus 200 has not reached the set temperature.

The conditions set for prioritizing the improvement of the temperature comfort of the area to be air-conditioned over the temperature comfort of blown air blown by the heat-exchange ventilation apparatus 100 are, for example, the case where the blowing temperature assist request level is "low", and the "indoor temperature detected by the air-conditioning apparatus - the set temperature" in the area to be air-conditioned is "-3°C or more and less than 0°C".

In the ventilation and air-conditioning system 6000 according to the sixth embodiment, even under these output determination conditions, the indoor unit control unit 215 of the air-conditioning apparatus 200 sets the blowing temperature assist operation to "on" when the human sensor does not detect the presence of a person in the area to be air-conditioned by the air-conditioning apparatus 200. In other words, in the ventilation and air-conditioning system 6000, when the human sensor does not detect the presence of a person in the area to be air-conditioned by the air-conditioning apparatus 200, the improvement of the temperature comfort of blown air blown by the heat-exchange ventilation apparatus 100 is prioritized over the temperature comfort of the area to be air-conditioned.

This allows the ventilation and air-conditioning system 6000 to positively perform the blowing temperature assist operation when there is no person in the area to be air-conditioned, and to more quickly improve the temperature comfort of blown air blown by the heat-exchange ventilation apparatus 100.

As described above, in the ventilation and air-conditioning system 6000 according to the sixth embodiment, the air-conditioning apparatus 200 adds information on a state detected by the human sensor connected to the air-conditioning apparatus 200 to the determination criteria for the temperature adjustment in the ventilation and air-conditioning system 5000 according to the fifth embodiment described above, to determine whether or not to perform the blowing temperature assist operation. That is, in the ventilation and air-conditioning system 6000, the air-conditioning apparatus 200 determines whether or not to perform the blowing temperature assist operation, based also on information on the presence or absence of a person in the area to be air-conditioned by the air-conditioning apparatus 200. This allows the ventilation and air-conditioning system 6000 to positively perform the blowing temperature assist operation when there is no person in the area to be air-conditioned, and to more quickly improve the temperature comfort of air blown from the heat-exchange ventilation apparatus 100.

<Modifications>

In the ventilation and air-conditioning system 6000 according to the sixth embodiment, when the blowing temperature assist request level is "provided" while the operation mode of the air-conditioning apparatus 200 is "heating", the air-conditioning apparatus 200 determines whether or not to perform the blowing temperature assist operation, using the time during which the indoor temperature detected by the air-conditioning apparatus 200 has not reached the set temperature, information on the difference between the indoor temperature detected by the air-conditioning apparatus 200 and the indoor temperature detected by the heat-exchange ventilation apparatus 100, and the operating status of the outdoor unit 203 connected to the indoor unit 202. However, in the ventilation and air-conditioning system 6000, if whether or not to perform the blowing temperature assist operation is determined based only on the difference between the indoor temperature detected by the air-conditioning apparatus 200 and the set temperature and the detection result of the human sensor without using the above information, the effect when whether or not to perform the blowing temperature assist operation is determined based also on the detected condition of the human sensor can be obtained as described above.

Like the ventilation and air-conditioning system 1000 according to the first embodiment, the ventilation and air-conditioning system 6000 according to the sixth embodiment described above has the effect of being able to improve the comfort of air blown from the heat-exchange ventilation apparatus 100 into the space to be ventilated 50.

In the ventilation and air-conditioning system 6000 according to the sixth embodiment, the air-conditioning apparatus 200 adds the information on the state detected by the human sensor connected to the air-conditioning apparatus 200 to the determination criteria for the temperature adjustment in the ventilation and air-conditioning system 5000 according to the fifth embodiment described above, to determine whether or not to perform the blowing temperature assist operation. That is, in the ventilation and air-conditioning system 6000, the air-conditioning apparatus 200 determines whether or not to perform the blowing temperature assist operation, based also on information on the presence or absence of a person in the area to be air-conditioned by the air-conditioning apparatus 200. This allows the ventilation and air-conditioning system 6000 to positively perform the blowing temperature assist operation when there is no person in the area to be air-conditioned, and to more quickly improve the temperature comfort of air blown from the heat-exchange ventilation apparatus 100.

The first to sixth embodiments have been described by taking a heating season in winter as an example. However, similar control can be performed also in a cooling season in summer to improve the temperature comfort of blown air blown by the heat-exchange ventilation apparatus 100.

In the first to sixth embodiments, an object of assist with which the air-conditioning apparatus 200 assists the heat-exchange ventilation apparatus 100 is "temperature". However, an object of assist can be "humidity" when the air-conditioning apparatus 200 uses a "humidification device" or a "dehumidification device", and the heat-exchange ventilation apparatus 100 uses a "total heat exchange"-type element capable of exchanging humidity as the heat-exchange element 140.

The functions of the ventilation apparatus controller 110 and the indoor unit controller 210 according to the first to sixth embodiments are implemented by processing circuitry. The processing circuitry may be dedicated hardware or a processing device that executes a program stored in a storage device. A microcontroller can be applied to the ventilation apparatus controller 110 and the indoor unit controller 210, but this is not limiting.

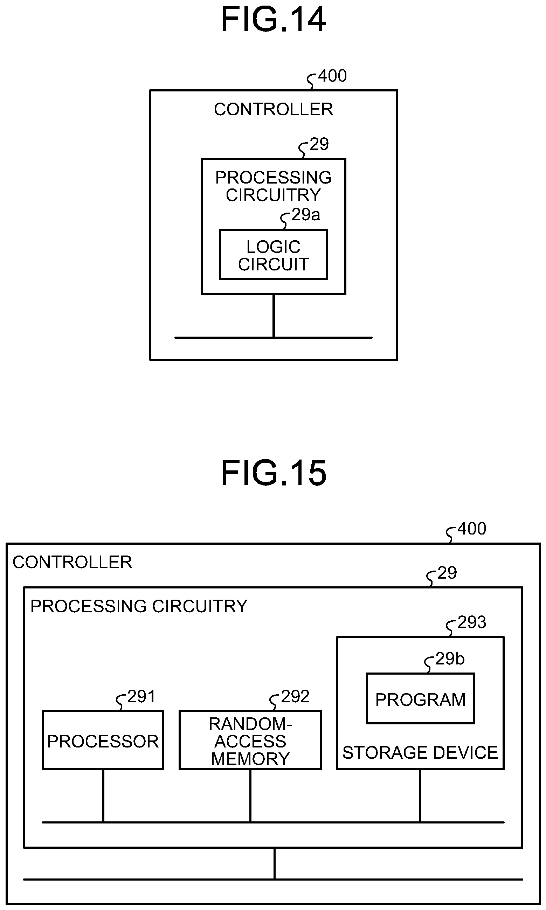

When the processing circuitry is dedicated hardware, the processing circuitry corresponds to a single circuit, a combined circuit, a programmed processor, a parallel-programmed processor, an application-specific integrated circuit, a field-programmable gate array, or a combination of them. FIG. 14 is a diagram illustrating a configuration in which the controller functions are implemented by hardware. A logic circuit 29a that implements the functions of a controller 400 is incorporated in processing circuitry 29. The controller 400 corresponds to the ventilation apparatus controller 110 and the indoor unit controller 210 according to the first to sixth embodiments.

If the processing circuitry 29 is a processing device, the functions of the controller 400 are implemented by software, firmware, or a combination of software and firmware.

FIG. 15 is a diagram illustrating a configuration in which the controller functions are implemented by software. The processing circuitry 29 includes a processor 291 that executes a program 29b, a random-access memory 292 used as a work area by the processor 291, and a storage device 293 that stores the program 29b. The processor 291 loads the program 29b stored in the storage device 293 on the random-access memory 292 and executes the program 29b, thereby implementing the functions of the controller 400. The software or firmware is described in a program language and stored in the storage device 293. The processor 291 can be exemplified by but is not limited to a central processing unit. To the storage device 293, a semiconductor memory such as a random-access memory (RAM), a read-only memory (ROM), a flash memory, an erasable programmable read-only memory (EPROM), or an electrically erasable programmable read-only memory (EEPROM) (registered trademark) can be applied. The semiconductor memory may be a nonvolatile memory or a volatile memory. To the storage device 293, other than the semiconductor memory, a magnetic disk, a flexible disk, an optical disk, a compact disk, a mini disk, or a digital versatile disc (DVD) can be applied. The processor 291 may output data such as calculation results to the storage device 293 for storage, or may store the data in an auxiliary storage device (not illustrated) via the random-access memory 292.

The processing circuitry 29 implements the functions of the controller 400 by reading and executing the program 29b stored in the storage device 293. The program 29b can be said to cause a computer to execute a procedure and a method to implement the functions of the controller 400.

For the processing circuitry 29, part of the functions of the controller 400 may be implemented by dedicated hardware, and part of the functions of the controller 400 may be implemented by software or firmware.

Thus, the processing circuitry 29 can implement the above-described functions by hardware, software, firmware, or a combination of them.

The configurations described in the above embodiments illustrate an example of the subject matter of the present invention. The techniques in the embodiments can be combined with each other, and can be combined with another known technique. The configurations can be partly omitted or changed without departing from the gist of the present invention.

Reference Signs List

29 processing circuitry; 29a logic circuit; 29b program; 50 space to be ventilated; 100, $100_1$, $100_2$ heat-exchange ventilation apparatus; 101 ventilation controller; 102 heat-exchange ventilation unit; 104, $104_1$, $104_2$, 204, $204_1$, $204_2$, $204_3$, $204_4$, $204_5$, $204_6$, $204_7$ indoor inlet; 105, $105_1$, $105_2$, 205A, $205A_1$, $205A_2$, $205A_3$, $205A_4$, $205A_5$, $205A_6$, $205A_7$, 205B, $205B_1$, $205B_2$, $205B_3$, $205B_4$, $205B_5$, $205B_6$, $205B_7$, 205C, $205C_1$, $205C_2$, $205C_3$, $205C_4$, $205C_5$, $205C_6$, $205C_7$, 205D, $205D_1$, $205D_2$, $205D_3$, $205D_4$, $205D_5$, $205D_6$, $205D_7$ indoor outlet; 106, $106_1$, $106_2$ main body; 110 ventilation apparatus controller; 111 ventilation controller communication unit; 112, 212 system communication unit; 114 ventilation apparatus storage unit; 115 ventilation apparatus control unit; 116, 216 output unit; 117, 217 input unit; 120 air supply fan; 130 air exhaust fan; 140 heat-exchange element; 160, 260 indoor temperature detection unit; 170 outdoor temperature detection unit; 200, $200_1$, $200_2$, $200_3$, $200_4$, $200_5$, $200_6$, $200_7$ air-conditioning apparatus; 201 air-conditioning controller; 202, $202_1$, $202_2$, $202_3$, $202_4$, $202_5$, $202_6$, $202_7$ indoor unit; 203 outdoor unit; 210 indoor unit controller; 211 air-conditioning controller communication unit; 213 outdoor unit communication unit; 214 indoor unit storage unit; 215 indoor unit control unit; 220 blowing fan; 230 deflector unit; 271 compressor; 291 processor; 292 random-access memory; 293 storage device; 300 system controller; 400 controller; 1000, 2000, 3000, 4000, 5000, 6000 ventilation and air-conditioning system.

**Claims**

1. A ventilation and air-conditioning system comprising:

    a heat-exchange ventilation apparatus including a first inlet and a first outlet each installed in a space to be ventilated, and a heat-exchange element exchanging heat between air in outdoors and air drawn in from the space to be ventilated, to discharge air in the space to be ventilated drawn in from the first inlet to the outdoors via the heat-exchange element, and to blow air in the outdoors from the first outlet into the space to be ventilated via the heat-exchange element; and
    an air-conditioning apparatus comprising an indoor unit including a second inlet and a second outlet each installed in the space to be ventilated, and an outdoor unit installed outside the space to be ventilated, to adjust a temperature of the space to be ventilated by drawing in air in the space to be ventilated from the second inlet and blowing the air from the second outlet into the space to be ventilated, wherein the air-conditioning apparatus performs a blowing temperature assist operation to blow air from the second outlet toward the first inlet, based on a blowing temperature assist request level indicating a level of necessity to raise a temperature of air blown into the space to be ventilated by the heat-exchange ventilation apparatus.

2. The ventilation and air-conditioning system according to claim 1, wherein

the air-conditioning apparatus comprises
a plurality of the second outlets, and
wind direction control units provided individually at the plurality of second outlets, and
when the blowing temperature assist operation is performed,
of the plurality of wind direction control units, the wind direction control unit provided at the second outlet nearest to the first inlet directs air blown from the second outlet toward the first inlet, and
of the plurality of wind direction control units, the wind direction control unit provided at the second outlet not nearest to the first inlet does not direct air blown from the second outlet toward the first inlet.

3. The ventilation and air-conditioning system according to claim 2, wherein
when the air-conditioning apparatus performs the blowing temperature assist operation while not adjusting the temperature of the space to be ventilated, of the plurality of wind direction control units, the wind direction control unit provided at the second outlet other than the second outlet nearest to the first inlet closes the second outlet.

4. The ventilation and air-conditioning system according to any one of claims 1 to 3, wherein
the air-conditioning apparatus has a plurality of levels of temperature adjustment capability to heat air drawn in from the second inlet, and when performing the blowing temperature assist operation, changes the temperature adjustment capability to a level higher than a level before performing the blowing temperature assist operation.

5. The ventilation and air-conditioning system according to claim 4, comprising:

a first temperature detection unit to detect a temperature of air in the space to be ventilated drawn from the first inlet into the heat-exchange ventilation apparatus; and
a second temperature detection unit to detect a temperature of air drawn from the second inlet into the air-conditioning apparatus, wherein
the air-conditioning apparatus determines whether or not to adjust the temperature of the space to be ventilated, based on a result of the detection of the first temperature detection unit and a result of the detection of the second temperature detection unit, when performing the blowing temperature assist operation while not adjusting the temperature of the space to be ventilated.

6. The ventilation and air-conditioning system according to claim 4 or 5, wherein
the air-conditioning apparatus determines whether or not to adjust the temperature of the space to be ventilated, based on an operating status of the outdoor unit, when performing the blowing temperature assist operation while not adjusting the temperature of the space to be ventilated.

7. The ventilation and air-conditioning system according to any one of claims 1 to 6, wherein
the air-conditioning apparatus has a plurality of operation modes including cooling or heating, and changes to an operation mode to provide the blowing temperature assist operation when performing the blowing temperature assist operation.

8. The ventilation and air-conditioning system according to claim 7, wherein
the air-conditioning apparatus determines whether or not to perform the blowing temperature assist operation, based on which of the plurality of operation modes the air-conditioning apparatus is in.

9. The ventilation and air-conditioning system according to any one of claims 1 to 8, wherein
whether or not to perform the blowing temperature assist operation is determined, based on at least one of a difference between a detected temperature of air in an area to be air-conditioned by the air-conditioning apparatus in the space to be ventilated and a set temperature of the air-conditioning apparatus, or a time during which the detected temperature does not reach the set temperature.

10. The ventilation and air-conditioning system according to any one of claims 1 to 9, wherein
whether or not to perform the blowing temperature assist operation is determined, based on detection information from a human sensor that detects a person present in an area to be air-conditioned by the air-conditioning apparatus.

11. The ventilation and air-conditioning system according to any one of claims 1 to 10, comprising an outdoor temperature detection unit to detect a temperature of air drawn in from the outdoors by the heat-exchange ventilation apparatus, wherein
the blowing temperature assist request level is determined, based on a difference between a target blowing temperature that is a target temperature of air blown by the heat-exchange ventilation apparatus and the outdoor temperature detected by the outdoor temperature detection unit.

12. The ventilation and air-conditioning system according to any one of claims 1 to 11, comprising

a blowing temperature detection unit to detect or calculate a blowing temperature that is the temperature of air blown into the space to be ventilated by the heat-exchange ventilation apparatus, wherein
the blowing temperature assist request level is determined, based on the blowing temperature detected or calculated by the blowing temperature detection unit.

13. The ventilation and air-conditioning system according to claim 12, wherein
the blowing temperature assist request level is corrected, based on the blowing temperature detected or calculated by the blowing temperature detection unit.

14. The ventilation and air-conditioning system according to any one of claims 1 to 13, comprising

a blowing temperature detection unit to detect or calculate a blowing temperature that is the temperature of air blown into the space to be ventilated by the heat-exchange ventilation apparatus, wherein
at least one of a volume of air blown into the space to be ventilated by the heat-exchange ventilation apparatus or a volume of air discharged to the outdoors by the heat-exchange ventilation apparatus is changed, based on the blowing temperature detected or calculated by the blowing temperature detection unit.

# FIG.1

# FIG.2

1000,2000,3000,
4000,5000,6000

100

VENTILATION CONTROLLER — 101

102

HEAT-EXCHANGE VENTILATION UNIT

VENTILATION APPARATUS CONTROLLER — 110

VENTILATION CONTROLLER COMMUNICATION UNIT — 111

115

VENTILATION APPARATUS CONTROL UNIT

TIMER

116

OUTPUT UNIT

120

AIR SUPPLY FAN

130

AIR EXHAUST FAN

114

VENTILATION APPARATUS STORAGE UNIT

160

INDOOR TEMPERATURE DETECTION UNIT

117

INPUT UNIT

170

OUTDOOR TEMPERATURE DETECTION UNIT

112

SYSTEM COMMUNICATION UNIT

200

AIR-CONDITIONING APPARATUS

300

SYSTEM CONTROLLER

# FIG.3

| OUTPUT DETERMINATION CONDITIONS | | DETERMINATION | | |
|---|---|---|---|---|
| START/STOP | TARGET BLOWING TEMPERATURE - OUTDOOR TEMPERATURE | AIR SUPPLY FAN OUTPUT | AIR EXHAUST FAN OUTPUT | BLOWING TEMPERATURE ASSIST REQUEST LEVEL |
| STOP | - | OFF | OFF | NONE |
| OPERATION | LESS THAN 10°C | ON | ON | NONE |
| | 10°C OR MORE AND LESS THAN 20°C | ON | ON | LOW |
| | 20°C OR MORE AND LESS THAN 30°C | ON | ON | MEDIUM |
| | 30°C OR MORE | ON | ON | HIGH |

# FIG.4

# FIG.5

| OUTPUT DETERMINATION CONDITIONS | | | | DETERMINATION | | | | BLOWING TEMPERATURE ASSIST OPERATION |
|---|---|---|---|---|---|---|---|---|
| OPER-ATION MODE | BLOWING TEMPERATURE ASSIST REQUEST LEVEL | INDOOR TEMPERATURE DETECTED BY AIR-CONDITIONING APPARATUS - SET TEMPERATURE | DURATION OF NON-ATTAINMENT OF SET TEMPERATURE | BLOWING FAN OUTPUT | DEFLECTOR UNIT OUTPUT NEAREST TO INDOOR INLET OF HEAT-EXCHANGE VENTILATION APPARATUS | OTHERS | TEMPERATURE ADJUSTMENT (CAPABILITY) | |
| STOP | NONE | - | - | STOP | CLOSED | CLOSED | OFF (0%) | OFF |
| | LOW | - | - | LOW | HORIZONTAL | CLOSED | OFF (0%) | ON |
| | MEDIUM | - | - | LOW | HORIZONTAL | CLOSED | ON (50%) | ON (TEMPERATURE ADJUSTMENT CAPABILITY INCREASE) |
| | HIGH | - | - | LOW | HORIZONTAL | CLOSED | ON (100%) | ON (TEMPERATURE ADJUSTMENT CAPABILITY INCREASE) |
| COOL-ING | - | LESS THAN 0°C | - | CONTROL VALUE | CONTROL VALUE | CONTROL VALUE | OFF (0%) | OFF |
| | | 0°C OR MORE AND LESS THAN 2°C | - | CONTROL VALUE | CONTROL VALUE | CONTROL VALUE | ON (50%) | OFF |
| | | 2°C OR MORE | - | CONTROL VALUE | CONTROL VALUE | CONTROL VALUE | ON (100%) | OFF |
| HEAT-ING | NONE | 0°C OR MORE | - | STOP | CONTROL VALUE | CONTROL VALUE | OFF (0%) | OFF |
| | | -3°C OR MORE AND LESS THAN 0°C | - | CONTROL VALUE | CONTROL VALUE | CONTROL VALUE | ON (50%) | OFF |
| | | LESS THAN -3°C | - | CONTROL VALUE | CONTROL VALUE | CONTROL VALUE | ON (100%) | OFF |
| | LOW | 0°C OR MORE | - | LOW | HORIZONTAL | CLOSED | OFF (0%) | ON |
| | | -3°C OR MORE AND LESS THAN 0°C | - | CONTROL VALUE | CONTROL VALUE | CONTROL VALUE | ON (50%) | OFF |
| | | LESS THAN -3°C | - | CONTROL VALUE | CONTROL VALUE | CONTROL VALUE | ON (100%) | OFF |
| | MEDIUM | 0°C OR MORE | - | LOW | HORIZONTAL | CLOSED | ON (50%) | ON (TEMPERATURE ADJUSTMENT CAPABILITY INCREASE) |
| | | -3°C OR MORE AND LESS THAN 0°C | LESS THAN 30 MIN. | CONTROL VALUE | HORIZONTAL | CONTROL VALUE | ON (50%) | ON |
| | | | 30 MIN. OR MORE | CONTROL VALUE | CONTROL VALUE | CONTROL VALUE | ON (50%) | OFF |
| | | LESS THAN -3°C | - | CONTROL VALUE | CONTROL VALUE | CONTROL VALUE | ON (100%) | OFF |
| | HIGH | 0°C OR MORE | - | LOW | HORIZONTAL | CLOSED | ON (100%) | ON (TEMPERATURE ADJUSTMENT CAPABILITY INCREASE) |
| | | -3°C OR MORE AND LESS THAN 0°C | LESS THAN 30 MIN. | CONTROL VALUE | HORIZONTAL | CONTROL VALUE | ON (100%) | ON (TEMPERATURE ADJUSTMENT CAPABILITY INCREASE) |
| | | | 30 MIN. OR MORE | CONTROL VALUE | CONTROL VALUE | CONTROL VALUE | ON (50%) | OFF |
| | | LESS THAN -3°C | LESS THAN 15 MIN. | CONTROL VALUE | HORIZONTAL | CONTROL VALUE | ON (100%) | ON |
| | | | 15 MIN. OR MORE | CONTROL VALUE | CONTROL VALUE | CONTROL VALUE | ON (100%) | OFF |

# FIG.6

EP 4 130 590 A1

# FIG.7

# FIG.8

EP 4 130 590 A1

# FIG.9

| OUTPUT DETERMINATION CONDITIONS | | | DETERMINATION | | | |
|---|---|---|---|---|---|---|
| START/ STOP | TARGET BLOWING TEMPERATURE - OUTDOOR TEMPERATURE | BLOWING TEMPERATURE - TARGET BLOWING TEMPERATURE AND DURATION | AIR SUPPLY FAN OUTPUT | AIR EXHAUST FAN OUTPUT | BLOWING TEMPERATURE ASSIST REQUEST LEVEL | |
| | | | | | INITIAL VALUE | CORRECTION |
| STOP | - | - | OFF | OFF | NONE | WITHOUT CHANGE |
| OPERA-TION | LESS THAN 10°C | MORE THAN 3°C FOR 15 MIN. | ON | ON | NONE | -1 |
| | | -3°C OR MORE AND 3°C OR LESS | ON | ON | | WITHOUT CHANGE |
| | | LESS THAN -3°C FOR 15 MIN. | ON | ON | | +1 |
| | 10°C OR MORE AND LESS THAN 20°C | MORE THAN 3°C FOR 15 MIN. | ON | ON | LOW | -1 |
| | | -3°C OR MORE AND 3°C OR LESS | ON | ON | | WITHOUT CHANGE |
| | | LESS THAN -3°C FOR 15 MIN. | ON | ON | | +1 |
| | 20°C OR MORE AND LESS THAN 30°C | MORE THAN 3°C FOR 15 MIN. | ON | ON | MEDIUM | -1 |
| | | -3°C OR MORE AND 3°C OR LESS | ON | ON | | WITHOUT CHANGE |
| | | LESS THAN -3°C FOR 15 MIN. | ON | ON | | +1 |
| | 30°C OR MORE | MORE THAN 3°C FOR 15 MIN. | ON | ON | HIGH | -1 |
| | | -3°C OR MORE AND 3°C OR LESS | ON | ON | | WITHOUT CHANGE |
| | | LESS THAN -3°C FOR 15 MIN. | ON | ON | | +1 |

EP 4 130 590 A1

# FIG.10

| OUTPUT DETERMINATION CONDITIONS | | | DETERMINATION | | | | |
|---|---|---|---|---|---|---|---|
| START/ STOP | TARGET BLOWING TEMPERATURE - OUTDOOR TEMPERATURE | BLOWING TEMPERATURE - TARGET BLOWING TEMPERATURE AND DURATION | AIR SUPPLY FAN OUTPUT | | AIR EXHAUST FAN OUTPUT | | BLOWING TEMPERATURE ASSIST REQUEST LEVEL |
| | | | INITIAL VALUE | CORREC-TION | INITIAL VALUE | CORREC-TION | |
| STOP | - | - | OFF | WITHOUT CHANGE | OFF | WITHOUT CHANGE | NONE |
| OPERA-TION | LESS THAN 10°C | MORE THAN 3°C FOR 15 MIN. | MEDIUM | +1 | MEDIUM | -1 | NONE |
| | | -3°C OR MORE AND 3°C OR LESS | | WITHOUT CHANGE | | WITHOUT CHANGE | |
| | | LESS THAN -3°C FOR 15 MIN. | | -1 | | +1 | |
| | 10°C OR MORE AND LESS THAN 20°C | MORE THAN 3°C FOR 15 MIN. | MEDIUM | +1 | MEDIUM | -1 | LOW |
| | | -3°C OR MORE AND 3°C OR LESS | | WITHOUT CHANGE | | WITHOUT CHANGE | |
| | | LESS THAN -3°C FOR 15 MIN. | | -1 | | +1 | |
| | 20°C OR MORE AND LESS THAN 30°C | MORE THAN 3°C FOR 15 MIN. | MEDIUM | +1 | MEDIUM | -1 | MEDIUM |
| | | -3°C OR MORE AND 3°C OR LESS | | WITHOUT CHANGE | | WITHOUT CHANGE | |
| | | LESS THAN -3°C FOR 15 MIN. | | -1 | | +1 | |
| | 30°C OR MORE | MORE THAN 3°C FOR 15 MIN. | MEDIUM | +1 | MEDIUM | -1 | HIGH |
| | | -3°C OR MORE AND 3°C OR LESS | | WITHOUT CHANGE | | WITHOUT CHANGE | |
| | | LESS THAN -3°C FOR 15 MIN. | | -1 | | +1 | |

EP 4 130 590 A1

# FIG.11

| OPERATION MODE | BLOWING TEMPERATURE ASSIST REQUEST LEVEL | INDOOR TEMPERATURE DETECTED BY AIR-CONDITIONING APPARATUS - SET TEMPERATURE | DURATION OF NON-ATTAINMENT OF SET TEMPERATURE | INDOOR TEMPERATURE DETECTED BY AIR-CONDITIONING APPARATUS - INDOOR TEMPERATURE DETECTED BY HEAT-EXCHANGE VENTILATION APPARATUS | BLOWING FAN OUTPUT | DEFLECTOR UNIT OUTPUT — NEAREST TO INDOOR INLET OF HEAT-EXCHANGE VENTILATION APPARATUS | DEFLECTOR UNIT OUTPUT — OTHERS | TEMPERATURE ADJUSTMENT (CAPABILITY) | BLOWING TEMPERATURE ASSIST OPERATION |
|---|---|---|---|---|---|---|---|---|---|
| STOP | NONE | - | - | - | STOP | CLOSED | CLOSED | OFF (0%) | OFF |
| STOP | LOW | - | - | 1°C OR MORE | LOW | HORIZONTAL | CLOSED | OFF (0%) | ON |
| STOP | LOW | - | - | LESS THAN 1°C | LOW | HORIZONTAL | CLOSED | ON (50%) | ON (TEMPERATURE ADJUSTMENT CAPABILITY INCREASE) |
| STOP | MEDIUM | - | - | 2°C OR MORE | LOW | HORIZONTAL | CLOSED | OFF (0%) | ON |
| STOP | MEDIUM | - | - | LESS THAN 2°C | LOW | HORIZONTAL | CLOSED | ON (50%) | ON (TEMPERATURE ADJUSTMENT CAPABILITY INCREASE) |
| STOP | HIGH | - | - | 3°C OR MORE | LOW | HORIZONTAL | CLOSED | OFF (0%) | ON |
| STOP | HIGH | - | - | LESS THAN 3°C | LOW | HORIZONTAL | CLOSED | ON (100%) | ON (TEMPERATURE ADJUSTMENT CAPABILITY INCREASE) |
| COOLING | - | LESS THAN 0°C | - | - | CONTROL VALUE | CONTROL VALUE | CONTROL VALUE | OFF (0%) | OFF |
| COOLING | - | 0°C OR MORE AND LESS THAN 2°C | - | - | CONTROL VALUE | CONTROL VALUE | CONTROL VALUE | ON (50%) | OFF |
| COOLING | - | 2°C OR MORE | - | - | CONTROL VALUE | CONTROL VALUE | CONTROL VALUE | ON (100%) | OFF |
| HEATING | NONE | 0°C OR MORE | - | - | STOP | CONTROL VALUE | CONTROL VALUE | OFF (0%) | OFF |
| HEATING | NONE | -3°C OR MORE AND LESS THAN 0°C | - | - | CONTROL VALUE | CONTROL VALUE | CONTROL VALUE | ON (50%) | OFF |
| HEATING | NONE | LESS THAN -3°C | - | - | CONTROL VALUE | CONTROL VALUE | CONTROL VALUE | ON (100%) | OFF |
| HEATING | LOW | 0°C OR MORE | - | 1°C OR MORE | LOW | HORIZONTAL | CLOSED | OFF (0%) | ON |
| HEATING | LOW | 0°C OR MORE | - | LESS THAN 1°C | LOW | HORIZONTAL | CLOSED | ON (50%) | ON (TEMPERATURE ADJUSTMENT CAPABILITY INCREASE) |
| HEATING | LOW | -3°C OR MORE AND LESS THAN 0°C | - | - | CONTROL VALUE | CONTROL VALUE | CONTROL VALUE | ON (50%) | OFF |
| HEATING | LOW | LESS THAN -3°C | - | - | CONTROL VALUE | CONTROL VALUE | CONTROL VALUE | ON (100%) | OFF |
| HEATING | MEDIUM | 0°C OR MORE | - | 2°C OR MORE | LOW | HORIZONTAL | CLOSED | OFF (0%) | ON |
| HEATING | MEDIUM | 0°C OR MORE | - | LESS THAN 2°C | LOW | HORIZONTAL | CLOSED | ON (50%) | ON (TEMPERATURE ADJUSTMENT CAPABILITY INCREASE) |
| HEATING | MEDIUM | -3°C OR MORE AND LESS THAN 0°C | LESS THAN 30 MIN. | - | CONTROL VALUE | HORIZONTAL | CONTROL VALUE | ON (50%) | ON |
| HEATING | MEDIUM | -3°C OR MORE AND LESS THAN 0°C | 30 MIN. OR MORE | - | CONTROL VALUE | CONTROL VALUE | CONTROL VALUE | ON (50%) | OFF |
| HEATING | MEDIUM | LESS THAN -3°C | - | - | CONTROL VALUE | CONTROL VALUE | CONTROL VALUE | ON (100%) | OFF |
| HEATING | HIGH | 0°C OR MORE | - | 3°C OR MORE | LOW | HORIZONTAL | CLOSED | OFF (0%) | ON |
| HEATING | HIGH | 0°C OR MORE | - | LESS THAN 3°C | LOW | HORIZONTAL | CLOSED | ON (100%) | ON (TEMPERATURE ADJUSTMENT CAPABILITY INCREASE) |
| HEATING | HIGH | -3°C OR MORE AND LESS THAN 0°C | LESS THAN 30 MIN. | - | CONTROL VALUE | HORIZONTAL | CONTROL VALUE | ON (100%) | ON (TEMPERATURE ADJUSTMENT CAPABILITY INCREASE) |
| HEATING | HIGH | -3°C OR MORE AND LESS THAN 0°C | 30 MIN. OR MORE | - | CONTROL VALUE | CONTROL VALUE | CONTROL VALUE | ON (50%) | OFF |
| HEATING | HIGH | LESS THAN -3°C | LESS THAN 15 MIN. | - | CONTROL VALUE | HORIZONTAL | CONTROL VALUE | ON (100%) | ON |
| HEATING | HIGH | LESS THAN -3°C | 15 MIN. OR MORE | - | CONTROL VALUE | CONTROL VALUE | CONTROL VALUE | ON (100%) | OFF |

# FIG.12

| OPERATION MODE | BLOWING TEMPERATURE ASSIST REQUEST LEVEL | INDOOR TEMPERATURE DETECTED BY AIR-CONDITIONING APPARATUS - SET TEMPERATURE | DURATION OF NON-ATTAINMENT OF SET TEMPERATURE | INDOOR TEMPERATURE DETECTED BY AIR-CONDITIONING APPARATUS - INDOOR TEMPERATURE DETECTED BY HEAT-EXCHANGE VENTILATION APPARATUS | OUTDOOR UNIT OPERATING STATUS | BLOWING FAN OUTPUT | DEFLECTOR UNIT OUTPUT — NEAREST TO INDOOR INLET OF HEAT-EXCHANGE VENTILATION APPARATUS | DEFLECTOR UNIT OUTPUT — OTHERS | TEMPERATURE ADJUSTMENT (CAPABILITY) | BLOWING TEMPERATURE ASSIST OPERATION |
|---|---|---|---|---|---|---|---|---|---|---|
| **OUTPUT DETERMINATION CONDITIONS** | | | | | | **DETERMINATION** | | | | |
| STOP | NONE | - | - | - | - | STOP | CLOSED | CLOSED | OFF (0%) | OFF |
| STOP | LOW | - | - | 1°C OR MORE | COMPRESSOR OFF | LOW | HORIZONTAL | CLOSED | OFF (0%) | ON |
| STOP | LOW | - | - | 1°C OR MORE | COMPRESSOR ON | LOW | HORIZONTAL | CLOSED | ON (50%) | ON (TEMPERATURE ADJUSTMENT CAPABILITY INCREASE) |
| STOP | LOW | - | - | LESS THAN 1°C | - | LOW | HORIZONTAL | CLOSED | ON (50%) | ON (TEMPERATURE ADJUSTMENT CAPABILITY INCREASE) |
| STOP | MEDIUM | - | - | 2°C OR MORE | COMPRESSOR OFF | LOW | HORIZONTAL | CLOSED | OFF (0%) | ON |
| STOP | MEDIUM | - | - | 2°C OR MORE | COMPRESSOR ON | LOW | HORIZONTAL | CLOSED | ON (50%) | ON (TEMPERATURE ADJUSTMENT CAPABILITY INCREASE) |
| STOP | MEDIUM | - | - | LESS THAN 2°C | - | LOW | HORIZONTAL | CLOSED | ON (50%) | ON (TEMPERATURE ADJUSTMENT CAPABILITY INCREASE) |
| STOP | HIGH | - | - | 3°C OR MORE | COMPRESSOR OFF | LOW | HORIZONTAL | CLOSED | OFF (0%) | ON |
| STOP | HIGH | - | - | 3°C OR MORE | COMPRESSOR ON | LOW | HORIZONTAL | CLOSED | ON (50%) | ON (TEMPERATURE ADJUSTMENT CAPABILITY INCREASE) |
| STOP | HIGH | - | - | LESS THAN 3°C | - | LOW | HORIZONTAL | CLOSED | ON (100%) | ON (TEMPERATURE ADJUSTMENT CAPABILITY INCREASE) |
| COOLING | - | LESS THAN 0°C | - | - | - | CONTROL VALUE | CONTROL VALUE | CONTROL VALUE | OFF (0%) | OFF |
| COOLING | - | 0°C OR MORE AND LESS THAN 2°C | - | - | - | CONTROL VALUE | CONTROL VALUE | CONTROL VALUE | ON (50%) | OFF |
| COOLING | - | 2°C OR MORE | - | - | - | CONTROL VALUE | CONTROL VALUE | CONTROL VALUE | ON (100%) | OFF |
| HEATING | NONE | 0°C OR MORE | - | - | - | STOP | CONTROL VALUE | CONTROL VALUE | OFF (0%) | OFF |
| HEATING | NONE | -3°C OR MORE AND LESS THAN 0°C | - | - | - | CONTROL VALUE | CONTROL VALUE | CONTROL VALUE | ON (50%) | OFF |
| HEATING | NONE | LESS THAN -3°C | - | - | - | CONTROL VALUE | CONTROL VALUE | CONTROL VALUE | ON (100%) | OFF |
| HEATING | LOW | 0°C OR MORE | - | 1°C OR MORE | COMPRESSOR OFF | LOW | HORIZONTAL | CLOSED | OFF (0%) | ON |
| HEATING | LOW | 0°C OR MORE | - | 1°C OR MORE | COMPRESSOR ON | LOW | HORIZONTAL | CLOSED | ON (50%) | ON (TEMPERATURE ADJUSTMENT CAPABILITY INCREASE) |
| HEATING | LOW | 0°C OR MORE | - | LESS THAN 1°C | - | LOW | HORIZONTAL | CLOSED | ON (50%) | ON (TEMPERATURE ADJUSTMENT CAPABILITY INCREASE) |
| HEATING | LOW | -3°C OR MORE AND LESS THAN 0°C | - | - | - | CONTROL VALUE | CONTROL VALUE | CONTROL VALUE | ON (50%) | OFF |
| HEATING | LOW | LESS THAN -3°C | - | - | - | CONTROL VALUE | CONTROL VALUE | CONTROL VALUE | ON (100%) | OFF |
| HEATING | MEDIUM | 0°C OR MORE | - | 2°C OR MORE | COMPRESSOR OFF | LOW | HORIZONTAL | CLOSED | OFF (0%) | ON |
| HEATING | MEDIUM | 0°C OR MORE | - | 2°C OR MORE | COMPRESSOR ON | LOW | HORIZONTAL | CLOSED | ON (50%) | ON (TEMPERATURE ADJUSTMENT CAPABILITY INCREASE) |
| HEATING | MEDIUM | 0°C OR MORE | - | LESS THAN 2°C | - | LOW | HORIZONTAL | CLOSED | ON (50%) | ON (TEMPERATURE ADJUSTMENT CAPABILITY INCREASE) |
| HEATING | MEDIUM | -3°C OR MORE AND LESS THAN 0°C | LESS THAN 30 MIN. | - | - | CONTROL VALUE | HORIZONTAL | CONTROL VALUE | ON (50%) | ON |
| HEATING | MEDIUM | -3°C OR MORE AND LESS THAN 0°C | 30 MIN. OR MORE | - | - | CONTROL VALUE | CONTROL VALUE | CONTROL VALUE | ON (50%) | OFF |
| HEATING | MEDIUM | LESS THAN -3°C | - | - | - | CONTROL VALUE | CONTROL VALUE | CONTROL VALUE | ON (100%) | OFF |
| HEATING | HIGH | 0°C OR MORE | - | 3°C OR MORE | COMPRESSOR OFF | LOW | HORIZONTAL | CLOSED | OFF (0%) | ON |
| HEATING | HIGH | 0°C OR MORE | - | 3°C OR MORE | COMPRESSOR ON | LOW | HORIZONTAL | CLOSED | ON (50%) | ON (TEMPERATURE ADJUSTMENT CAPABILITY INCREASE) |
| HEATING | HIGH | 0°C OR MORE | - | LESS THAN 3°C | - | LOW | HORIZONTAL | CLOSED | ON (100%) | ON (TEMPERATURE ADJUSTMENT CAPABILITY INCREASE) |
| HEATING | HIGH | -3°C OR MORE AND LESS THAN 0°C | LESS THAN 30 MIN. | - | - | CONTROL VALUE | HORIZONTAL | CONTROL VALUE | ON (100%) | ON (TEMPERATURE ADJUSTMENT CAPABILITY INCREASE) |
| HEATING | HIGH | -3°C OR MORE AND LESS THAN 0°C | 30 MIN. OR MORE | - | - | CONTROL VALUE | CONTROL VALUE | CONTROL VALUE | ON (50%) | OFF |
| HEATING | HIGH | LESS THAN -3°C | LESS THAN 15 MIN. | - | - | CONTROL VALUE | HORIZONTAL | CONTROL VALUE | ON (100%) | ON |
| HEATING | HIGH | LESS THAN -3°C | 15 MIN. OR MORE | - | - | CONTROL VALUE | CONTROL VALUE | CONTROL VALUE | ON (100%) | OFF |

# FIG.13

| OPERATION MODE | BLOWING TEMPERATURE ASSIST REQUEST LEVEL | INDOOR TEMPERATURE DETECTED BY AIR-CONDITIONING APPARATUS - SET TEMPERATURE | DURATION OF NON-ATTAINMENT OF SET TEMPERATURE | HUMAN SENSOR | INDOOR TEMPERATURE DETECTED BY AIR-CONDITIONING APPARATUS - INDOOR TEMPERATURE DETECTED BY HEAT-EXCHANGE VENTILATION APPARATUS | OUTDOOR UNIT OPERATING STATUS | BLOWING FAN OUTPUT | DEFLECTOR UNIT OUTPUT: NEAREST TO INDOOR INLET OF HEAT-EXCHANGE VENTILATION APPARATUS | DEFLECTOR UNIT OUTPUT: OTHERS | TEMPERATURE ADJUSTMENT (CAPABILITY) | BLOWING TEMPERATURE ASSIST OPERATION |
|---|---|---|---|---|---|---|---|---|---|---|---|
| STOP | NONE | - | - | - | - | - | STOP | CLOSED | CLOSED | OFF (0%) | OFF |
| STOP | LOW | - | - | - | 1°C OR MORE | COMPRESSOR OFF | LOW | HORIZONTAL | CLOSED | OFF (0%) | ON |
| STOP | LOW | - | - | - | 1°C OR MORE | COMPRESSOR ON | LOW | HORIZONTAL | CLOSED | ON (50%) | ON (TEMPERATURE ADJUSTMENT CAPABILITY INCREASE) |
| STOP | LOW | - | - | - | LESS THAN 1°C | - | LOW | HORIZONTAL | CLOSED | ON (50%) | ON (TEMPERATURE ADJUSTMENT CAPABILITY INCREASE) |
| STOP | MEDIUM | - | - | - | 2°C OR MORE | COMPRESSOR OFF | LOW | HORIZONTAL | CLOSED | OFF (0%) | ON |
| STOP | MEDIUM | - | - | - | 2°C OR MORE | COMPRESSOR ON | LOW | HORIZONTAL | CLOSED | ON (50%) | ON (TEMPERATURE ADJUSTMENT CAPABILITY INCREASE) |
| STOP | MEDIUM | - | - | - | LESS THAN 2°C | - | LOW | HORIZONTAL | CLOSED | ON (50%) | ON (TEMPERATURE ADJUSTMENT CAPABILITY INCREASE) |
| STOP | HIGH | - | - | - | 3°C OR MORE | COMPRESSOR OFF | LOW | HORIZONTAL | CLOSED | OFF (0%) | ON |
| STOP | HIGH | - | - | - | 3°C OR MORE | COMPRESSOR ON | LOW | HORIZONTAL | CLOSED | ON (50%) | ON (TEMPERATURE ADJUSTMENT CAPABILITY INCREASE) |
| STOP | HIGH | - | - | - | LESS THAN 3°C | - | LOW | HORIZONTAL | CLOSED | ON (100%) | ON (TEMPERATURE ADJUSTMENT CAPABILITY INCREASE) |
| COOLING | - | LESS THAN 0°C | - | - | - | - | CONTROL VALUE | CONTROL VALUE | CONTROL VALUE | OFF (0%) | OFF |
| COOLING | - | 0°C OR MORE AND LESS THAN 2°C | - | - | - | - | CONTROL VALUE | CONTROL VALUE | CONTROL VALUE | ON (50%) | OFF |
| COOLING | - | 2°C OR MORE | - | - | - | - | CONTROL VALUE | CONTROL VALUE | CONTROL VALUE | ON (100%) | OFF |
| HEATING | NONE | 0°C OR MORE | - | - | - | - | STOP | CONTROL VALUE | CONTROL VALUE | OFF (0%) | OFF |
| HEATING | NONE | -3°C OR MORE AND LESS THAN 0°C | - | - | - | - | CONTROL VALUE | CONTROL VALUE | CONTROL VALUE | ON (50%) | OFF |
| HEATING | NONE | LESS THAN -3°C | - | - | - | - | CONTROL VALUE | CONTROL VALUE | CONTROL VALUE | ON (100%) | OFF |
| HEATING | LOW | 0°C OR MORE | - | - | 1°C OR MORE | COMPRESSOR OFF | LOW | HORIZONTAL | CLOSED | OFF (0%) | ON |
| HEATING | LOW | 0°C OR MORE | - | - | 1°C OR MORE | COMPRESSOR ON | LOW | HORIZONTAL | CLOSED | ON (50%) | ON (TEMPERATURE ADJUSTMENT CAPABILITY INCREASE) |
| HEATING | LOW | 0°C OR MORE | - | - | LESS THAN 1°C | - | LOW | HORIZONTAL | CLOSED | ON (50%) | ON (TEMPERATURE ADJUSTMENT CAPABILITY INCREASE) |
| HEATING | LOW | -3°C OR MORE AND LESS THAN 0°C | - | PRESENT | - | - | CONTROL VALUE | CONTROL VALUE | CONTROL VALUE | ON (50%) | OFF |
| HEATING | LOW | -3°C OR MORE AND LESS THAN 0°C | - | ABSENT | - | - | CONTROL VALUE | HORIZONTAL | CONTROL VALUE | ON (50%) | ON |
| HEATING | LOW | LESS THAN -3°C | - | PRESENT | - | - | CONTROL VALUE | CONTROL VALUE | CONTROL VALUE | ON (100%) | OFF |
| HEATING | LOW | LESS THAN -3°C | - | ABSENT | - | - | CONTROL VALUE | HORIZONTAL | CONTROL VALUE | ON (100%) | ON |
| HEATING | MEDIUM | 0°C OR MORE | - | - | 2°C OR MORE | COMPRESSOR OFF | LOW | HORIZONTAL | CLOSED | OFF (0%) | ON |
| HEATING | MEDIUM | 0°C OR MORE | - | - | 2°C OR MORE | COMPRESSOR ON | LOW | HORIZONTAL | CLOSED | ON (50%) | ON (TEMPERATURE ADJUSTMENT CAPABILITY INCREASE) |
| HEATING | MEDIUM | 0°C OR MORE | - | - | LESS THAN 2°C | - | LOW | HORIZONTAL | CLOSED | ON (50%) | ON (TEMPERATURE ADJUSTMENT CAPABILITY INCREASE) |
| HEATING | MEDIUM | -3°C OR MORE AND LESS THAN 0°C | LESS THAN 30 MIN. | - | - | - | CONTROL VALUE | HORIZONTAL | CONTROL VALUE | ON (50%) | ON |
| HEATING | MEDIUM | -3°C OR MORE AND LESS THAN 0°C | 30 MIN. OR MORE | PRESENT | - | - | CONTROL VALUE | CONTROL VALUE | CONTROL VALUE | ON (50%) | OFF |
| HEATING | MEDIUM | -3°C OR MORE AND LESS THAN 0°C | 30 MIN. OR MORE | ABSENT | - | - | CONTROL VALUE | HORIZONTAL | CONTROL VALUE | ON (50%) | ON |
| HEATING | MEDIUM | LESS THAN -3°C | - | - | - | - | CONTROL VALUE | CONTROL VALUE | CONTROL VALUE | ON (100%) | OFF |
| HEATING | HIGH | 0°C OR MORE | - | - | 3°C OR MORE | COMPRESSOR OFF | LOW | HORIZONTAL | CLOSED | OFF (0%) | ON |
| HEATING | HIGH | 0°C OR MORE | - | - | 3°C OR MORE | COMPRESSOR ON | LOW | HORIZONTAL | CLOSED | ON (50%) | ON (TEMPERATURE ADJUSTMENT CAPABILITY INCREASE) |
| HEATING | HIGH | 0°C OR MORE | - | - | LESS THAN 3°C | - | LOW | HORIZONTAL | CLOSED | ON (100%) | ON (TEMPERATURE ADJUSTMENT CAPABILITY INCREASE) |
| HEATING | HIGH | -3°C OR MORE AND LESS THAN 0°C | LESS THAN 30 MIN. | - | - | - | CONTROL VALUE | HORIZONTAL | CONTROL VALUE | ON (100%) | ON (TEMPERATURE ADJUSTMENT CAPABILITY INCREASE) |
| HEATING | HIGH | -3°C OR MORE AND LESS THAN 0°C | 30 MIN. OR MORE | PRESENT | - | - | CONTROL VALUE | CONTROL VALUE | CONTROL VALUE | ON (50%) | OFF |
| HEATING | HIGH | -3°C OR MORE AND LESS THAN 0°C | 30 MIN. OR MORE | ABSENT | - | - | CONTROL VALUE | HORIZONTAL | CONTROL VALUE | ON (50%) | ON |
| HEATING | HIGH | LESS THAN -3°C | LESS THAN 15 MIN. | - | - | - | CONTROL VALUE | HORIZONTAL | CONTROL VALUE | ON (100%) | ON |
| HEATING | HIGH | LESS THAN -3°C | 15 MIN. OR MORE | PRESENT | - | - | CONTROL VALUE | CONTROL VALUE | CONTROL VALUE | ON (100%) | OFF |
| HEATING | HIGH | LESS THAN -3°C | 15 MIN. OR MORE | ABSENT | - | - | CONTROL VALUE | HORIZONTAL | CONTROL VALUE | ON (100%) | ON |

# FIG.14

# FIG.15

**INTERNATIONAL SEARCH REPORT**

| International application No. |
| --- |
| PCT/JP2020/014201 |

A. CLASSIFICATION OF SUBJECT MATTER
Int.Cl. F24F7/007(2006.01)i, F24F7/08(2006.01)i, F24F11/70(2018.01)i,
F24F11/79(2018.01)i
FI: F24F7/007B, F24F7/08101J, F24F11/70, F24F11/79
According to International Patent Classification (IPC) or to both national classification and IPC

B. FIELDS SEARCHED

Minimum documentation searched (classification system followed by classification symbols)
Int.Cl. F24F7/007, F24F7/08, F24F11/70, F24F11/79

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-117084 A (DAIKIN INDUSTRIES, LTD.) 27 May 2010 (2010-05-27), entire text, all drawings | 1-14 |
| A | WO 2018/220830 A1 (MITSUBISHI ELECTRIC CORPORATION) 06 December 2018 (2018-12-06), entire text, all drawings | 1-14 |
| A | JP 2002-071184 A (MITSUBISHI ELECTRIC CORPORATION) 08 March 2002 (2002-03-08), entire text, all drawings | 1-14 |
| A | WO 2019/146121 A1 (MITSUBISHI ELECTRIC CORPORATION) 01 August 2019 (2019-08-01), entire text, all drawings | 1-14 |
| A | JP 06-249485 A (TOSHIBA CORPORATION) 06 September 1994 (1994-09-06), entire text, all drawings | 1-14 |

☐ Further documents are listed in the continuation of Box C.    ☒ See patent family annex.

| * Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed | "T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family |

| Date of the actual completion of the international search
08 June 2020 | Date of mailing of the international search report
16 June 2020 |

| Name and mailing address of the ISA/
Japan Patent Office
3-4-3, Kasumigaseki, Chiyoda-ku,
Tokyo 100-8915, Japan | Authorized officer

Telephone No. |

Form PCT/ISA/210 (second sheet) (January 2015)

51

**INTERNATIONAL SEARCH REPORT**

Information on patent family members

International application No.

PCT/JP2020/014201

```
JP 2010-117084 A    27 May 2010        (Family: none)

WO 2018/220830 A1   06 December 2018   (Family: none)

JP 2002-071184 A    08 March 2002      (Family: none)

WO 2019/146121 A1   01 August 2019     (Family: none)

JP 06-249485 A      06 September 1994  (Family: none)
```

Form PCT/ISA/210 (patent family annex) (January 2015)

**EP 4 130 590 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6322814 B